# EUROPÄISCHE PATENTSCHRIFT

(11) **EP 3 332 438 B1**
(45) Veröffentlichungstag und Bekanntmachung des Hinweises auf die Patenterteilung: **01.05.2019**
(21) Anmeldenummer: 16747731.4
(22) Anmeldetag: 03.08.2016
(51) Int. Cl.: H01M 8/18

(54) **REDOX-FLOW-ZELLE ZUR SPEICHERUNG ELEKTRISCHER ENERGIE UND DEREN VERWENDUNG**
REDOX FLOW CELL FOR THE STORAGE OF ELECTRICAL ENERGY AND USE THEREOF
CELLULE D'ÉCOULEMENT DE REDOX POUR LE STOCKAGE D'ÉNERGIE ÉLECTRIQUE ET L'UTILISATION DE CELA

(30) Priorität: 07.08.2015 DE 102015010083
(43) Veröffentlichungstag der Anmeldung: 13.06.2018
(73) Patentinhaber: Jenabatteries GmbH, 07745 Jena (DE); Friedrich-Schiller-Universität Jena, 07743 Jena (DE)
(72) Erfinder: SCHUBERT, Ulrich Sigmar, 07743 Jena (DE); JANOSCHKA, Tobias, 07743 Jena (DE); MARTIN, Norbert, 08297 Zwönitz (DE)
(74) Vertreter: Ackermann, Joachim
(86) Internationale Anmeldenummer: PCT/EP2016/001338
(87) Internationale Veröffentlichungsnummer: WO 2017/025177

(56) Entgegenhaltungen:
- US-A1- 2011 189 549
- MAURYA SANDIP ET AL: "Anion exchange membrane prepared from simultaneous polymerization and quaternization of 4-vinyl pyridine for non-aqueous vanadium redox flow battery applications", JOURNAL OF POWER SOURCES, ELSEVIER SA, CH, Bd. 255, 18. Januar 2014 (2014-01-18), Seiten 325-334, XP028613866, ISSN: 0378-7753, DOI: 10.1016/J.JPOWSOUR.2014.01.047
- SEVOV CHRISTO S ET AL: "Evolutionary Design of Low Molecular Weight Organic Anolyte Materials for Applications in Nonaqueous Redox Flow Batteries.", 18. November 2015 (2015-11-18), JOURNAL OF THE AMERICAN CHEMICAL SOCIETY 18 NOV 2015, VOL. 137, NR. 45, PAGE(S) 14465 - 14472, XP002762016, ISSN: 1520-5126 das ganze Dokument

## Beschreibung

Die Erfindung betrifft eine Redox-Flow-Zelle, im allgemeinen Sprachgebrauch auch als Redox-Flow-Batterie oder als Redox-Fluss-Batterie bezeichnet, zur Speicherung elektrischer Energie. Die Redox-Flow-Zelle enthält zwei polaritätsspezifische Kammern, in denen jeweils eine redoxaktive chemische Verbindung bzw. eine redoxaktive Verbindung in beiden Kammern in gelöster Form oder dispergiert in einem Elektrolytlösungsmittel vorliegen und mit einem Flüssigkeitsspeicher in Verbindung steht. Auf diese Weise werden zwei unabhängige Kreisläufe für die beispielsweise in Wasser oder organischem Lösungsmittel gelösten oder dispergiert in einem Elektrolytlösungsmittel vorliegenden redoxaktiven Verbindungen gebildet, welche durch eine Membran zwischen den polaritätsspezifischen Kammern getrennt sind. Über diese Membran erfolgt ein lonenaustausch zwischen den beiden Kammern.

Die Zellen eigenen sich besonders für stationäre Speicheranwendungen, zum Beispiel als Pufferbatterie für Windkraft- oder Solaranlagen beziehungsweise als Leistungs- und Regelreserven zum Lastausgleich in Stromnetzen, aber auch als mobiler Energiespeicher, zum Beispiel für den Betrieb von Elektroautos und elektronischen Geräten.

Redox-Flow-Batterien (RFB) sind elektrochemische Energiespeicher. Die zur Potentialeinstellung an den Elektroden nötigen Verbindungen sind gelöste, redoxaktive Spezies, die beim Lade- bzw. Entladevorgang in einem elektrochemischen Reaktor in ihre jeweils andere Redoxstufe überführt werden. Dazu werden die Elektrolytlösungen (Katholyt, Anolyt) aus einem Tank entnommen und aktiv an die Elektroden gepumpt. Anoden- und Kathodenraum sind im Reaktor durch eine ionenselektive Membran getrennt, welche meist eine hohe Selektivität für Kationen, insbesondere Protonen zeigt (z. B. Nafion™). Daneben existieren auch Membranen, welche selektiv negativ geladene Ionen passieren lassen und positiv geladene Ionen blockieren. Weiterhin werden größenselektive Membranen (z. B. Dialyse- oder Ultrafiltrationsmembranen) genutzt, die sowohl Anionen als auch Kationen passieren lassen.

Anoden- und Kathodenraum im Sinne dieser Erfindung werden wie folgt definiert: Der Kathodenraum enthält den Katholyten als Elektrolyt und ist begrenzt durch die Kathode und diejenige Membranfäche, welche der Kathode zugewandt ist. Der Anodenraum enthält den Anolyten als Elektrolyt und ist begrenzt durch die Anode und diejenige Membranfäche, welche der Anode zugewandt ist.

An der Kathode findet beim Entladen die Reduktion und beim Laden die Oxidation der redoxaktiven Komponente statt. An der Anode findet beim Entladen die Oxidation und beim Laden die Reduktion der redoxaktiven Komponente statt.

Beispielhafte Beschreibungen der Reaktionen in einer Redox-Flow-Zelle während des Ladevorganges:
Anode

A + e⁻ → A⁻ oder A⁻ + e⁻ → A²⁻ oder Aⁿ⁺ + x e⁻ → A(^{n-x})⁺ oder Aⁿ⁻ + x e⁻ → A^{(n+x)-}

Hierbei ist A die redoxaktive Komponente und n und x kann eine natürliche Zahl >= eins annehmen. Elektronen werden durch e⁻ symbolisiert.
Kathode

K → K⁺ + e⁻ oder K⁻ → K + e⁻ oder Kⁿ⁺ → K^{(n+y)+} + y e⁻ oder Kⁿ⁻ → K^{(n-y)-} + y e⁻

Hierbei ist K die redoxaktive Komponente und n und y kann eine natürliche Zahl >=eins annehmen. Elektronen werden durch e⁻ symbolisiert.

Beim Entladen der Zelle kehren sich die vorstehenden Reaktionen um.

Solange Elektrolytlösung gepumpt wird, kann Strom entnommen werden (Entladung) oder in das System gespeist werden (Ladung). Damit ist die Energiemenge, die in einer RFB gespeichert werden kann, direkt proportional zur Größe der Vorratstanks. Die entnehmbare Leistung dagegen ist eine Funktion der Größe des elektrochemischen Reaktors.

RFB haben eine komplexe Systemtechnik (BoP - Balance of Plant), die in etwa der einer Brennstoffzelle entspricht. Übliche Baugrößen der Einzel-Reaktoren bewegen sich im Bereich von circa 2 bis 50 kW. Die Reaktoren können sehr einfach modular kombiniert werden, ebenso kann die Tankgröße nahezu beliebig angepasst werden. Eine besondere Bedeutung kommt RFBs zu, welche mit Vanadiumverbindungen als Redoxpaar auf beiden Seiten arbeiten (VRFB). Dieses System wurde 1986 erstmals beschrieben (AU 575247 B) und stellt momentan den technischen Standard dar.

Weitere anorganische, niedermolekulare Redoxpaare (redoxaktiven Verbindungen) wurden untersucht, unter anderem auf Basis von
- Cer (B. Fang, S. Iwasa, Y. Wei, T. Arai, M. Kumagai: "A study of the Ce(III)/Ce(IV) redox couple for redox flow battery application", Electrochimica Acta 47, 2002, 3971-3976),
- Ruthenium (M. H. Chakrabarti, E. Pelham, L. Roberts, C. Bae, M. Saleem: "Ruthenium based redox flow battery for solar energy storage", Energy Conv. Manag. 52, 2011,2501-2508]
- Chrom (C-H. Bae, E. P. L. Roberts, R. A. W. Dryfe: "Chromium redox couples for application to redox flow batteries", Electrochimica Acta 48, 2002, 279-87)
- Uran (T. Yamamura, Y. Shiokawa, H. Yamana, H. Moriyama: "Electrochemical investigation of uranium ß-diketonates for all-uranium redox flow battery", Electrochimica Acta 48, 2002, 43-50)
- Mangan (F. Xue, Y. Wang, W. Hong Wang, X. Wang: "Investigation on the electrode process of the Mn(II)/Mn(III) couple in redox flow battery", Electrochimica Acta 53, 2008, 6636-6642)
- Eisen (L. W. Hruska, R. F. Savinell: "Investigation of Factors Affecting Performance of the Iron-Redox Battery", J. Electrochem. Soc.,128:1, 1981, 18-25).

Organische und teilorganische Systeme in wässrigen Lösungen geraten ebenfalls in den Fokus der Aufmerksamkeit. So wurde im Januar 2014 das System Anthrachinon-Disulphonsäure/Brom veröffentlicht, das sehr hohe Stromdichten erlaubt, allerdings durch die Verwendung von elementarem Brom hohe Ansprüche an die Materialien aller Batteriekomponenten und die Sicherheit des Systems stellt. (B. Huskinson, M. P. Marshak, C. Suh, S. Er, M. R. Gerhardt, C. J. Galvin, X. Chen, A. Aspuru-Guzik, R. G. Gordon, M. J. Aziz: "A metal free organic-inorganic aqueous flow battery", Nature 505, 2014, 195-198). Als voll organisches Systeme in wässriger Lösung werden ebenfalls Chinone getestet (B. Yang, L. Hoober-Burkhard, F. Wang, G. K. Surya Prakash, S. R. Narayanan: "An inexpensive aqueous flow battery for large-scale electrical energy storage based on eater-doluble organic redox couples": J. Electrochem. Soc., 161 (9), 2014, A1361 - A1380). Die in Redox-System sinnvoll anwendbaren Stromdichten sind allerdings auf weniger als 5 mA/cm² beschränkt und die maximal erreichbare Kapazität liegt bei unter 10 Ah/I. Das stabile Radikal-Molekül 2,2,6,6-Tetramethyl-1-piperidonyloxyl (TEMPO) wurde ebenfalls schon in Redox-Flow-Batterien zusammen mit *N*-Methylphtalimide eingesetzt. (Z. Li, S. Li, S. Liu, K. Huang, D. Fang, F. Wang, S. Peng: "Electrochemical properties of an allorganic redox flow battery using 2,2,6,6-Tetramethyl-1-Piperidonyloxyl and N-Methylphtalimid": Electrochemical and Solid-State Letters, 14 (12), 2011, A171-A173) Aufgrund der sich ergebenden Potenziale und Löslichkeiten der Ausgangsstoffe kann dieses Materialsystem nicht ohne Weiteres im wässrigen Medium eingesetzt werden, sondern setzt Gefahrstoffe als Lösemittel, wie z.B. Acetonitril, voraus. Weiterhin sind bei diesem System die erreichbaren Stromdichten mit 0,35 mA/cm² um mindestens Faktor 100 kleiner als bei den in der Erfinung vorgeschlagenen Materialsystemen. Andere Elektrolytsysteme, wie LiPF₆ und TEMPO (X. Wie, W. Xu, M. Vijayakumar, L. Cosimbescu, T. Liu, V. Sprenkle, W. Wang: " TEMPO-based catholyte for high-energy densitiy redox flow batteries" Adv. Mater. 2014 Vol. 26, 45, p7649-7653) setzen ebenfalls organische Lösemittel und Leitsalze voraus, die im Versagensfall giftige Gase, wie z.B. Fluorwasserstoff, freisetzen können und stellen damit hohe Anforderungen an die Systemsicherheit.

Aus der WO 2014/026728 A1 sind Redox-Flow-Zellen mit semipermeablen Membranen bekannt, bei denen als Redoxpaar hochmolekulare Verbindungen eingesetzt werden. Im Beispiel wird als Katholyt ein Poly(2,2,6,6-tetramethylpiperidinyloxymethacrylat-co-poly(ethylenglykolmethylether-methacrylat eingesetzt und als Anolyt ein Poly(4,4'-bipyridin-co-poly(ethylenglykol).

Dieser Erfindung liegt die Aufgabe zugrunde, eine Redox-Flow-Zelle mit ausgewählten redoxaktiven Materialsystemen bereitzustellen, die sicher, kostengünstig und effizient betrieben werden kann, die eine Elektrolytlösung mit verbesserter Pumpbarkeit enthält, die auch bei Querkontamination über Membranfehlstellen weiterhin arbeiten kann und bei der ein gegenüber bekannten Lösungen vergrößertes Potentialniveau erreicht werden kann. Die erfindungsgemäß eingesetzten redoxaktiven Komponenten zeichnen sich im Vergleich zu den aus WO 2014/026728 A1 bekannten polymeren redoxaktiven Verbindungen durch eine deutlich verringerte Viskosität aus. Im Vergleich zu den bekannten polymeren Redoxsystemen ist die Viskosität konzentrierter Lösungen bei vergleichbarer Kapazität (1 mol/L redoxaktive Einheiten) deutlich geringer, so dass beim Pumpen der Lösungen geringere Druckverluste auftreten, was sich in einer besseren Energieeffizienz äußert. So weisen konzentrierte Lösungen von *N*-Dimethylviologenchlorid bei Raumtemperatur eine Viskosität von 5 mPas auf, während konzentrierte Lösungen des *N*-Methylviologenpolymers bei gleicher Kapazität bei Raumtemperatur eine Viskosität von 20 mPas aufweisen. Die erfindungsgemäß eingesetzten Materialsysteme zeichnen sich darüber hinaus auch durch eine gegenüber säurebasierten Elektrolyten geringere Korrosivität aus.

Die Aufgabe wird durch die Bereitstellung von Redox-Flow-Zellen mit ausgewählten redoxaktiven Materialsystemen gelöst, welche ohne Katalysatoren betrieben werden können, sehr gut in Wasser löslich sind, preiswert und miteinander kompatibel sind. Die redoxaktiven Materialsysteme können auch als Dispersionen eingesetzt werden.

Die vorliegende Erfindung betrifft eine Redox-Flow-Zelle zur Speicherung elektrischer Energie enthaltend eine Reaktionszelle mit zwei Elektrodenkammern für Katholyt und Anolyt, die jeweils mit mindestens einem Flüssigkeitsspeicher in Verbindung stehen, die durch eine ionenleitende Membran getrennt sind, und die mit Elektroden ausgerüstet sind, wobei die Elektrodenkammern jeweils mit Elektrolytlösungen gefüllt sind, die redoxaktive Komponenten gelöst oder dispergiert in einem Elektrolytlösungsmittel enthalten, sowie gegebenenfalls darin gelöste Leitsalze und eventuell weitere Additive. Die erfindungsgemäße Redox-Flow-Zelle ist dadurch gekennzeichnet, dass der Anolyt eine redoxaktive Komponente enthält, die ein bis sechs, vorzugsweise ein bis vier, insbesondere ein bis drei und ganz besonders bevorzugt ein bis zwei Reste der Formel I im Molekül enthält oder die ein bis sechs, vorzugsweise ein bis vier, insbesondere ein bis drei und ganz besonders bevorzugt ein bis zwei Reste der Formel II im Molekül enthält und dass der Katholyt eine redoxaktive Komponente enthält, die ein bis sechs, vorzugsweise ein bis vier, insbesondere ein bis drei und ganz besonders bevorzugt ein bis zwei Reste der Formel III im Molekül enthält oder die Eisensalze enthält oder dass Anolyt und Katholyt eine redoxaktive Komponente enthält, die ein bis sechs, vorzugsweise ein bis vier, insbesondere ein bis drei und ganz besonders bevorzugt ein bis zwei Reste der Formel I oder der Formel II in Kombination mit ein bis sechs, vorzugsweise ein bis vier, insbesondere ein bis drei und ganz besonders bevorzugt ein bis zwei Resten der Formel III im Molekül enthält 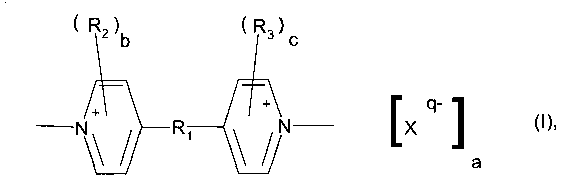 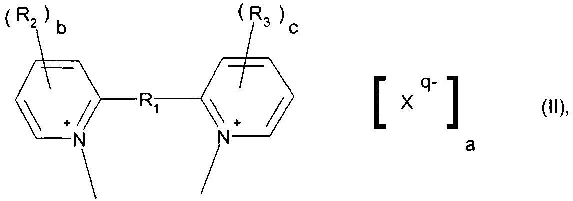 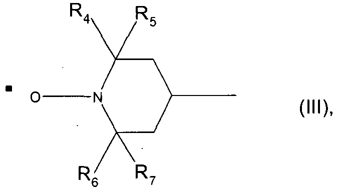 worin
die von den Stickstoffatomen in den Strukturen der Formeln I und II abgehenden Linien und die von der 4-Position in der Struktur der Formel III abgehende Linie kovalente Bindungen darstellen, welche die Strukturen der Formeln I, II und III mit dem Rest des Moleküls verbinden,
R₁ eine kovalente C-C-Bindung ist oder eine zweiwertige Brückengruppe, insbesondere eine kovalente C-C-Bindung, eine Arylengruppe oder eine Heteroarylengruppe, und ganz besonders bevorzugt eine kovalente C-C-Bindung, eine Phenylengruppe, eine Biphenylengruppe oder eine Thiophendiylgruppe,
R₂ und R₃ unabhängig voneinander Alkyl, Alkoxy, Haloalkyl, Cycloalkyl, Aryl, Aralkyl, Heterocyclyl, Halogen, Hydroxy, Amino, Nitro oder Cyano bedeuten,
X ein q-wertiges anorganisches oder organisches Anion oder eine Mischung derartiger Anionen bedeutet,
b und c unabhängig voneinander ganze Zahlen von 0 bis 4, vorzugsweise 0, 1 oder 2 sind,
q eine ganze Zahl von 1 bis 3 ist,
a eine Zahl mit dem Wert 2/q ist, und
R₄, R₅, R₆ und R₇ unabhängig voneinander Alkyl, Cycloalkyl, Aryl oder Aralkyl bedeuten, insbesondere C₁-C₆-Alkyl und ganz besonders bevorzugt Ethyl oder Methyl.

Bevorzugt im Anolyten eingesetzte redoxaktive Komponenten enthalten ein bis vier Reste der Formel la und/oder der Formel IIa im Molekül 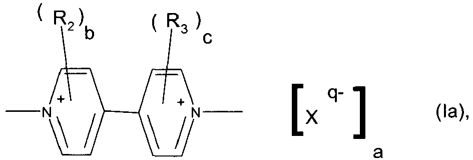 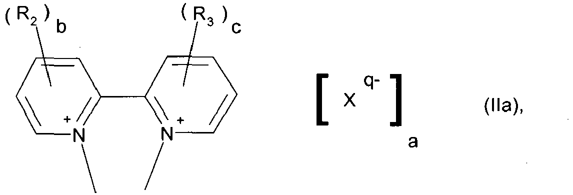 worin
die von den Stickstoffatomen in den Strukturen der Formeln la und IIa abgehenden Linien kovalente Bindungen darstellen, welche die Strukturen der Formeln Ia und IIa mit dem Rest des Moleküls verbinden, und
R₂, R₃, X, a, b, c und q die oben definierte Bedeutung besitzen.

Bevorzugt im Anolyten eingesetzte redoxaktive Komponenten sind Verbindungen der Formeln Ib, IIb, IV, V, VII, VIIa, VIIb VIII, VIIIa, VIIIb, IX, IXa, IXb, X, Xa, Xb, XI, XIa, XIb, XII, XIIa und XIIb 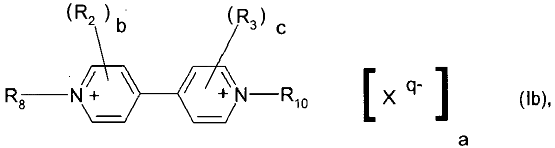 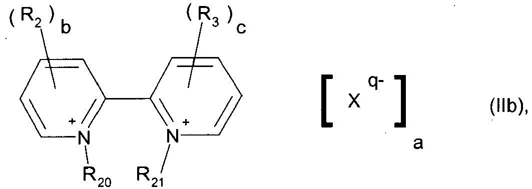 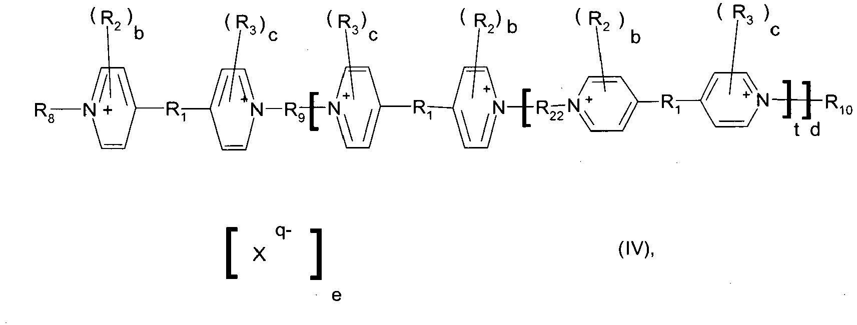 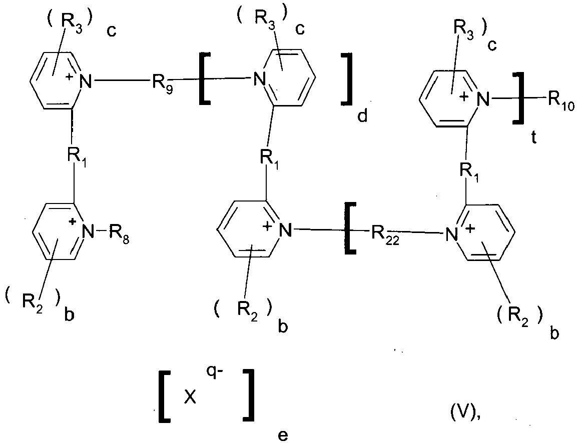 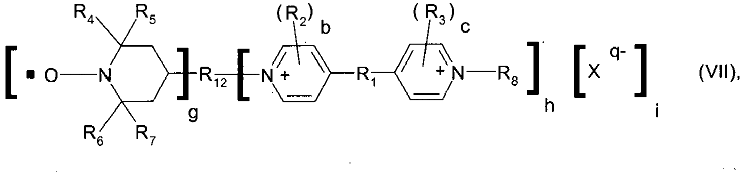 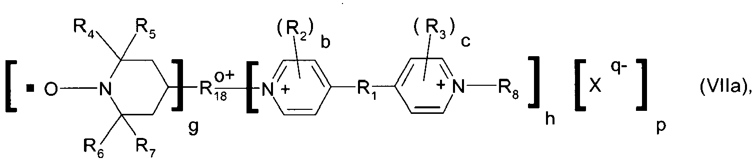 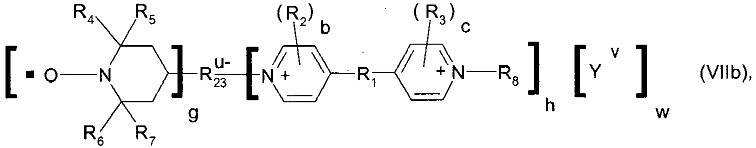 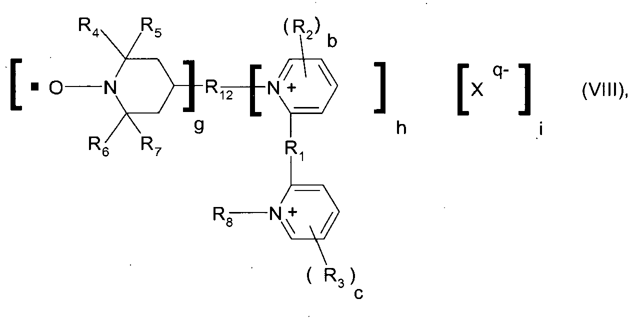 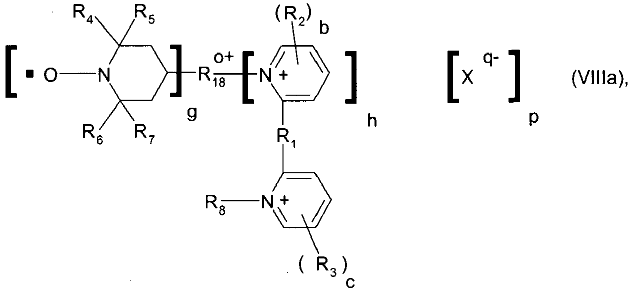 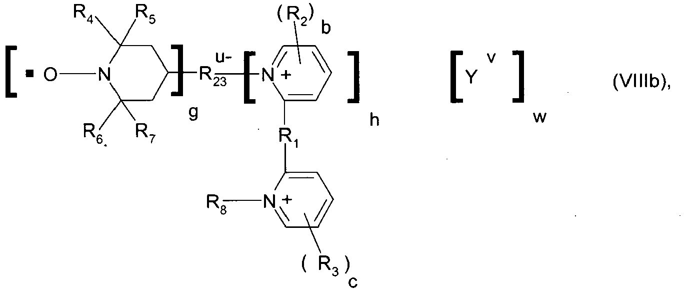 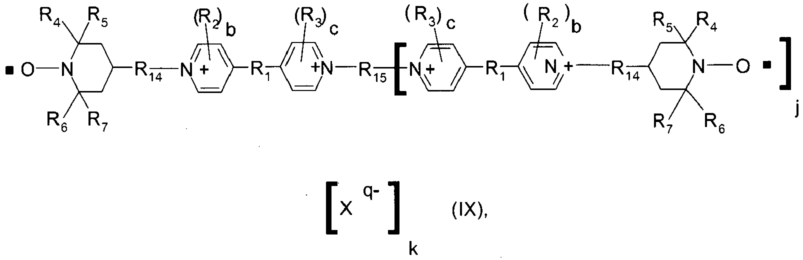 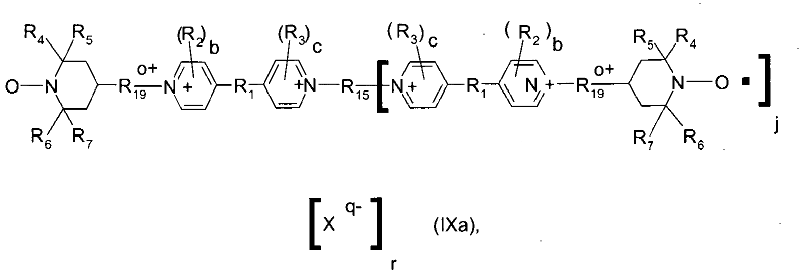 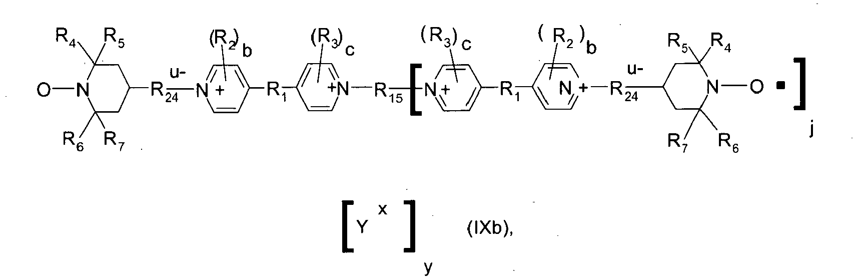 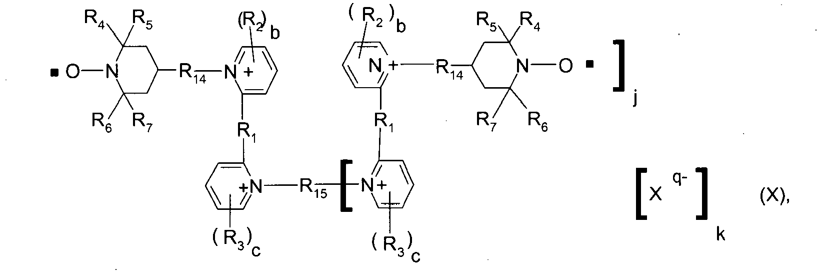 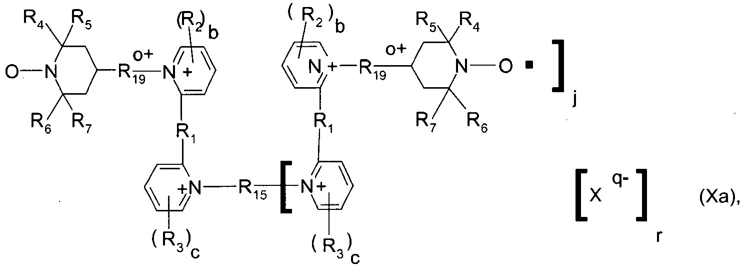 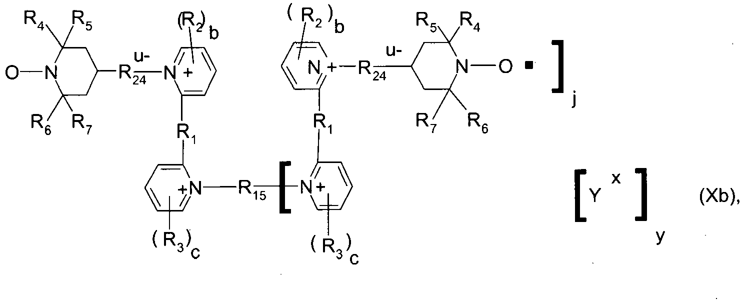 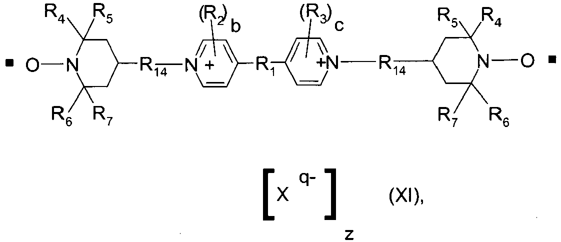 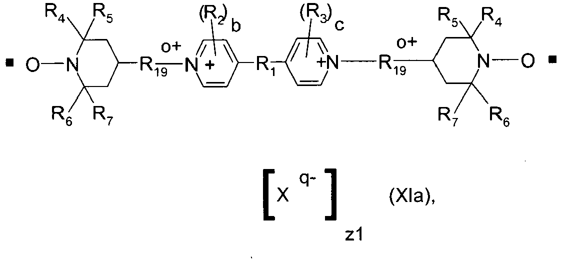 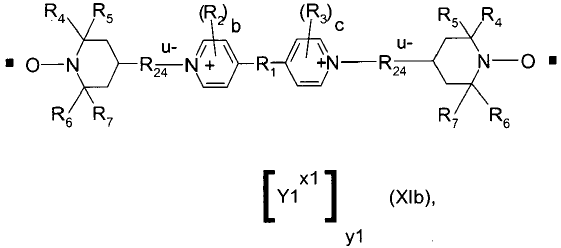 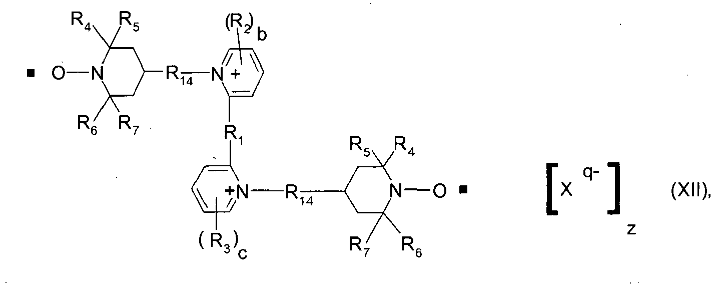 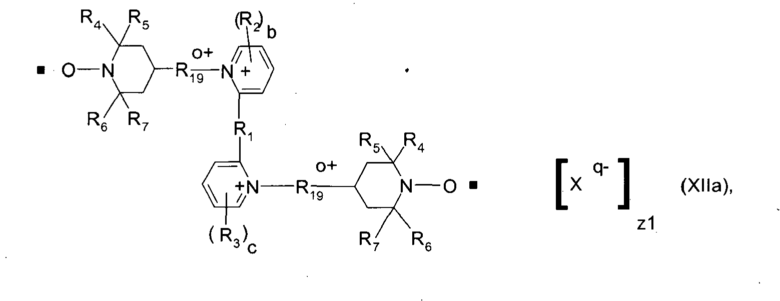 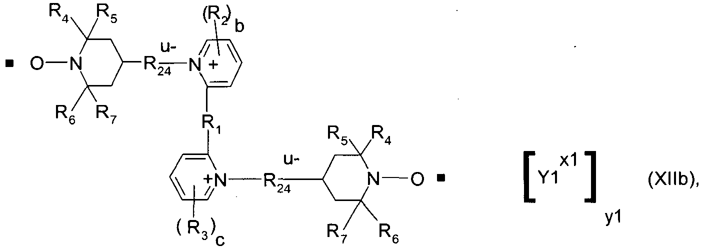 worin
R₁, R₂, R₃, R₄, R₅, R₆, R₇ und X die oben definierte Bedeutung besitzen,
R₈ und R₁₀ unabhängig voneinander Wasserstoff, gegebenenfalls mit einer Carbonsäureester-, Carbonsäureamid-, Carbonsäure-, Sulfonsäure- oder Aminogruppe substituiertes Alkyl, gegebenenfalls mit einer Carbonsäureester-, Carbonsäureamid-, Carbonsäure-, Sulfonsäure- oder Aminogruppe substituiertes Cycloalkyl, gegebenenfalls mit einer Carbonsäureester-, Carbonsäureamid-, Carbonsäure-, Sulfonsäure- oder Aminogruppe substituiertes Aryl oder gegebenenfalls mit einer Carbonsäureester-, Carbonsäureamid-, Carbonsäure-, Sulfonsäure- oder Aminogruppe substituiertes Aralkyl bedeuten, insbesondere C₁-C₆-Alkyl, mit einer Carbonsäureestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl, oder mit einer Aminogruppe substituiertes C₁-C₆-Alkyl, und ganz besonders bevorzugt Propionat, Isobutionat, Ethyl oder Methyl,
R₉ eine zwei- bis sechswertige, insbesondere zwei- bis vierwertige organische Brückengruppe ist,
R₁₂ eine kovalente Bindung ist oder eine zwei- bis sechswertige, insbesondere zweibis vierwertige organische Brückengruppe ist,
R₁₄ eine kovalente Bindung ist oder eine zweiwertige organische Brückengruppe ist, R₁₅ eine zwei- bis sechswertige, insbesondere zwei- bis vierwertige organische Brückengruppe ist,
R₁₈ ein o-fach positiv geladener zwei- bis sechswertiger, insbesondere zwei- bis vierwertiger organischer Rest ist, der mit dem Stickstoffatom des Bipyridylrests über ein Kohlenstoffatom kovalent verbunden ist, insbesondere ein zwei- bis vierwertiger quaternärer Ammoniumrest, ein zwei- bis vierwertiger quaternärer Phosphoniumrest, ein zwei- bis dreiwertiger ternärer Sulfoniumrest oder ein o-fach positiv geladener zwei- bis sechswertiger, insbesondere zwei- bis vierwertiger heterocyclischer Rest, R₁₉ ein o-fach, vorzugsweise einfach positiv geladener zweiwertiger organischer Rest ist, der mit dem Stickstoffatom des Bipyridylrests über ein Kohlenstoffatom kovalent verbunden ist, insbesondere ein quaternärer Ammoniumrest, ein quaternärer Phosphoniumrest, ein ternärer Sulfoniumrest oder ein o-fach, vorzugsweise einfach positiv geladener zweiwertiger heterocyclischer Rest ist,
R₂₀ und R₂₁ unabhängig voneinander Wasserstoff, gegebenenfalls mit einer Carbonsäureester-, Carbonsäureamid-, Carbonsäure-, Sulfonsäure- oder Aminogruppe substituiertes Alkyl, gegebenenfalls mit einer Carbonsäureester-, Carbonsäureamid-, Carbonsäure-, Sulfonsäure- oder Aminogruppe substituiertes Cycloalkyl, gegebenenfalls mit einer Carbonsäureester-, Carbonsäureamid-, Carbonsäure-, Sulfonsäure- oder Aminogruppe substituiertes Aryl oder gegebenenfalls mit einer Carbonsäureester-, Carbonsäureamid-, Carbonsäure-, Sulfonsäure- oder Aminogruppe substituiertes Aralkyl bedeuten oder zwei Reste R₂₀ und R₂₁ zusammen eine C₁-C₃-Alkylengruppe bilden, insbesondere C₁-C₆-Alkyl, mit einer Carbonsäureestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl, oder mit einer Aminogruppe substituiertes C₁-C₆-Alkyl sind oder zusammen Ethylen bedeuten, und ganz besonders bevorzugt Propionat, Isobutionat, Ethyl oder Methyl oder zusammen Ethylen bedeuten,
R₂₂ eine zweiwertige organische Brückengruppe ist,
R₂₃ ein u-fach negativ geladener zwei- bis sechswertiger, insbesondere zwei- bis vierwertiger organischer Rest ist, der mit dem Stickstoffatom des Bipyridylrests über ein Kohlenstoffatom kovalent verbunden ist, insbesondere ein mit ein oder zwei Carboxyl- oder Sulfonsäuregruppen substituierter Alkylenrest, ein mit ein oder zwei Carboxyl- oder Sulfonsäuregruppen substituierter Phenylenrest oder ein mit ein oder zwei Carboxyl- oder Sulfonsäuregruppen substituierter zweiwertiger heterocyclischer Rest ist,
R₂₄ ein u-fach, vorzugsweise einfach negativ geladener zweiwertiger organischer Rest ist, der mit dem Stickstoffatom des Bipyridylrests über ein Kohlenstoffatom kovalent verbunden ist, insbesondere ein mit einer Carboxyl- oder Sulfonsäuregruppe substituierter Alkylenrest, ein mit einer Carboxyl- oder Sulfonsäuregruppe substituierter Phenylenrest oder ein mit einer Carboxyl- oder Sulfonsäuregruppe substituierter zweiwertiger heterocyclischer Rest ist,
a, b, c und q die oben definierte Bedeutung besitzen,
d eine ganze Zahl von 1 bis 5, vorzugsweise von 1 bis 3 ist,
e eine Zahl mit dem Wert (2 + 2d + 2t) / q ist,
g eine ganze Zahl von 1 bis 5, vorzugsweise von 1 bis 3 ist
h eine ganze Zahl von 1 bis 5, vorzugsweise von 1 bis 3 ist,
wobei die Summe von g und h eine ganze Zahl von 2 bis 6, vorzugsweise von 2 bis 4 ist,
i eine Zahl mit dem Wert 2h / q ist,
j eine ganze Zahl von 1 bis 5, vorzugsweise von 1 bis 3 ist,
k eine Zahl mit dem Wert von (2 + 2j) / q ist,
o eine ganze Zahl von 1 bis 4 ist,
p eine Zahl mit dem Wert (o + 2h) / q ist,
r eine Zahl mit dem Wert (3 + 3j) / q ist,
t 0 ist oder, falls R₉ eine zweiwertige organische Brückengruppe ist, 0 oder 1 bedeutet,
u eine ganze Zahl von 1 bis 4 ist,
z eine Zahl mit dem Wert 2 / q ist,
z1 eine Zahl mit dem Wert (o+2) / q ist,
Y für den Fall, dass 2h - u oder 2 (2 - u) - u größer als 0 ist, ein v- oder x-wertiges anorganisches oder organisches Anion oder eine Mischung derartiger Anionen bedeutet, oder für den Fall, dass 2h - u oder 2 (2 - u) - u kleiner als 0 ist, ein v- oder x-wertiges anorganisches oder organisches Kation oder eine Mischung derartiger Kationen bedeutet,
v eine ganze Zahl von -1 bis -3 oder von +1 bis +3 ist,
x eine ganze Zahl von -1 bis -3 oder von +1 bis +3 ist,
w 0 oder eine positive Zahl mit dem Wert (-u + 2h) / v ist,
y 0 oder eine positive Zahl mit dem Wert (2 - u) (j + 1) / x ist,
Y1 für den Fall, dass 2 - 2u kleiner als 0 ist, ein x1-wertiges anorganisches oder organisches Kation oder eine Mischung derartiger Kationen bedeutet,
x1 eine ganze Zahl von -1 bis -3 oder von +1 bis +3 ist, und
y1 0 oder eine positive Zahl mit dem Wert (2 - 2u) / x1 ist.

Besonders bevorzugt im Anolyten eingesetzte redoxaktive Komponenten sind Verbindungen der Formeln IVa, Va, VIIc, VIIIc, IXc und Xc 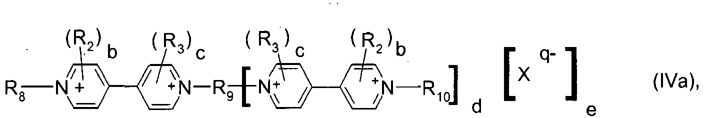 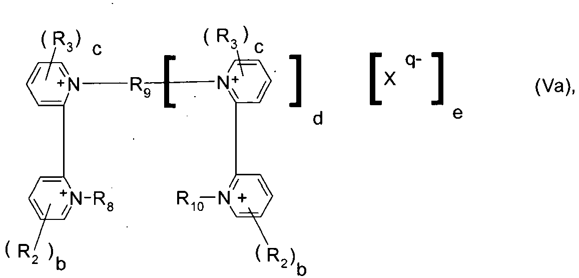 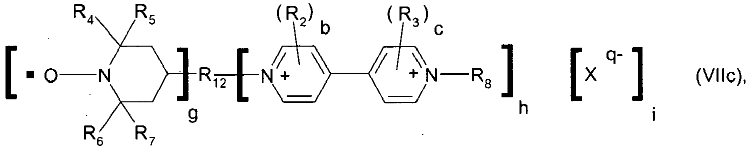 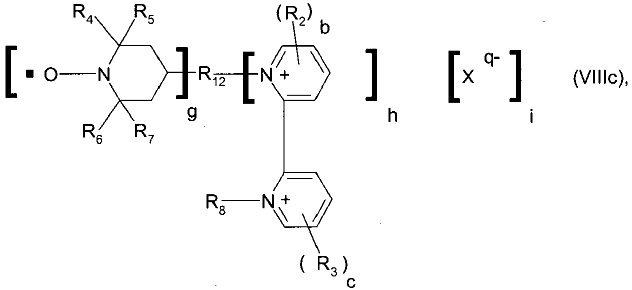 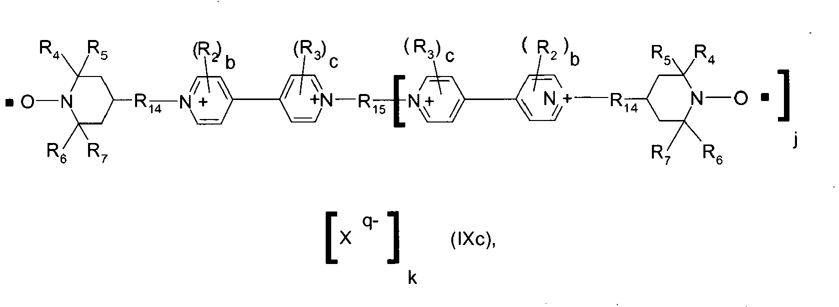 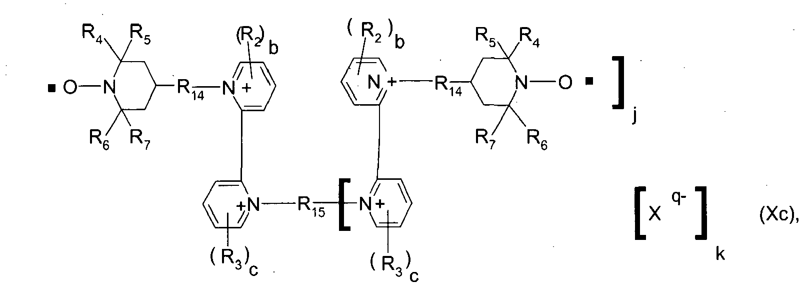 worin
R₂, R₃, R₄, R₅, R₆, R₇, R₈, R₉, R₁₀, R₁₂, R₁₄, R₁₅ und X die oben definierte Bedeutung besitzen, und
b, c, d, e, g, h, i, j, k und q die oben definierte Bedeutung besitzen.

Bevorzugt im Katholyten eingesetzte redoxaktive Komponenten sind Verbindungen der Formeln lila, IIIb, IIIc, VI, VIa und/oder VIb sowie der oben definierten Formeln VII, VIIa, VIIb, VIII, VIIIb, VIIIa, IX, IXa, IXb, X, Xa und/oder Xb 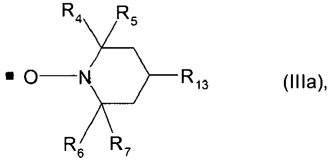 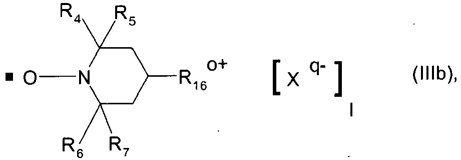 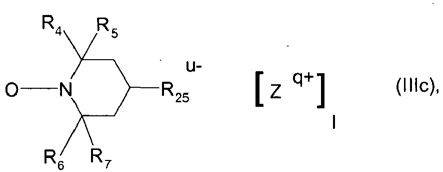 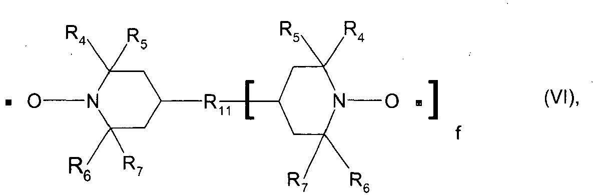 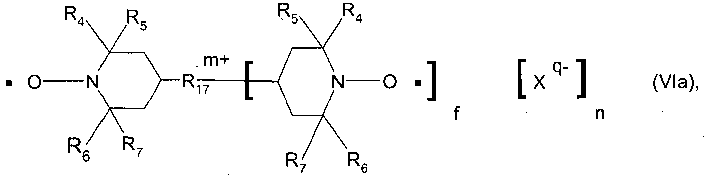 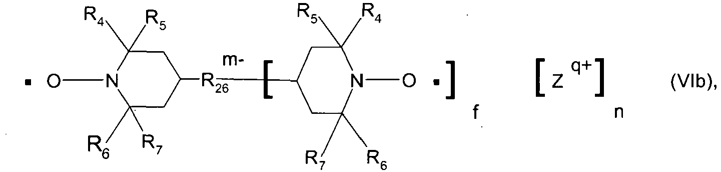 worin
R₄, R₅, R₆, R₇, X, o, u und q die oben definierte Bedeutung besitzen,
R₁₁ eine zwei- bis vierwertige organische Brückengruppe ist,
R₁₃ Wasserstoff, Alkyl, Alkoxy, Haloalkyl, Cycloalkyl, Aryl, Aralkyl, Heterocyclyl, Halogen, Hydroxy, Amino, Nitro oder Cyano ist, und
R₁₆ ein o-fach, vorzugsweise ein einfach positiv geladener einwertiger organischer Rest, insbesondere ein quaternärer Ammoniumrest, ein quaternärer Phosphoniumrest, ein ternärer Sulfoniumrest oder ein o-fach, vorzugsweise ein einfach positiv geladener einwertiger heterocyclischer Rest ist, und
R₁₇ ein m-fach positiv geladener zwei- bis vierwertiger organischer Rest, insbesondere zwei- bis vierwertiger quaternärer Ammoniumrest, ein zwei- bis vierwertiger quaternärer Phosphoniumrest, ein zwei- bis vierwertiger ternärer Sulfoniumrest oder ein m-fach positiv geladener zwei- bis vierwertiger heterocyclischer Rest ist,
R₂₅ ein u-fach, vorzugsweise ein einfach negativ geladener einwertiger Rest, insbesondere ein Carboxyl- oder Sulfonsäurerest oder ein u-fach, vorzugsweise ein einfach negativ geladener einwertiger heterocyclischer Rest ist,
R₂₆ ein m-fach negativ geladener zwei- bis vierwertiger organischer Rest, insbesondere ein mit ein oder zwei Carboxyl- oder Sulfonsäuregruppen substituierter Alkylenrest, oder ein mit ein oder zwei Carboxyl- oder Sulfonsäuregruppen substituierter Phenylenrest oder ein mit ein oder zwei Carboxyl- oder Sulfonsäuregruppen substituierter zweiwertiger heterocyclischer Rest ist,
Z ein q-wertiges anorganisches oder organisches Kation oder eine Mischung derartiger Kationen bedeutet,
f eine ganze Zahl von 1 bis 3 ist,
l eine Zahl mit dem Wert o / q oder u / q ist,
m eine ganze Zahl von 1 bis 4 ist, und
n eine Zahl mit dem Wert m / q bedeutet.

Besonders bevorzugt im Katholyten eingesetzte redoxaktive Komponenten sind Verbindungen der oben definierten Formeln VI, VIa, VIIc, VIIIc, IXc und/oder Xc.

Ganz besonders bevorzugt erfindungsgemäß eingesetzte redoxaktive Verbindungen sind solche der Formeln Ib, IIb, VIId, VIIe, VIIId und/oder VIIIe 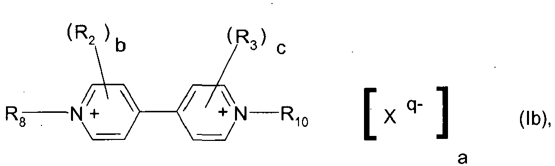 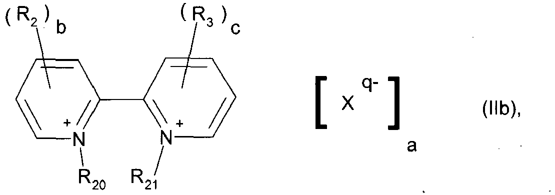 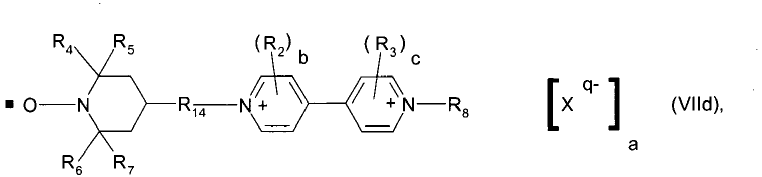 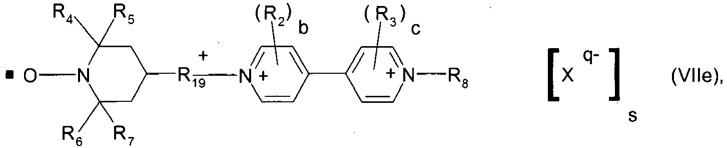 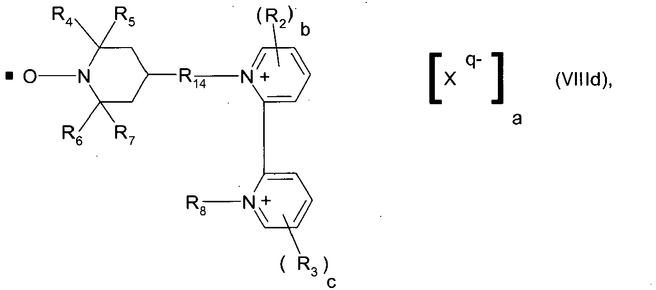 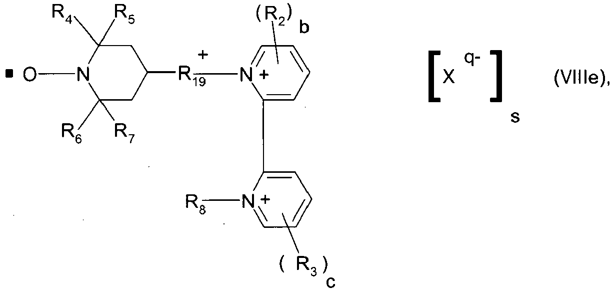 worin
R₂, R₃, R₄, R₅, R₆, R₇, R₈, R₁₀, R₁₄, R₁₉ und X die oben definierte Bedeutung besitzen,
R₂₀ und R₂₁ unabhängig voneinander Wasserstoff, gegebenenfalls mit einer Carbonsäureester-, Carbonsäureamid-, Carbonsäure-, Sulfonsäure- oder Aminogruppe substituiertes Alkyl, gegebenenfalls mit einer Carbonsäureester-, Carbonsäureamid-, Carbonsäure-, Sulfonsäure- oder Aminogruppe substituiertes Cycloalkyl, gegebenenfalls mit einer Carbonsäureester-, Carbonsäureamid-, Carbonsäure-, Sulfonsäure- oder Aminogruppe substituiertes Aryl oder gegebenenfalls mit einer Carbonsäureester-, Carbonsäureamid-, Carbonsäure-, Sulfonsäure- oder Aminogruppe substituiertes Aralkyl bedeuten oder zwei Reste R₂₀ und R₂₁ zusammen eine C₁-C₃-Alkylengruppe bilden, insbesondere C₁-C₆-Alkyl, mit einer Carbonsäureestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl, oder mit einer Aminogruppe substituiertes C₁-C₆-Alkyl sind oder zusammen Ethylen bedeuten, und ganz besonders bevorzugt Propionat, Isobutionat, Ethyl oder Methyl oder zusammen Ethylen bedeuten,
a, b, c und q die oben definierte Bedeutung besitzen, und
s eine Zahl mit dem Wert 3 / q ist.

Von diesen besonders bevorzugt eingesetzten Verbindungen werden solche der Formeln Ib, IIb, VIId, VIIe, VIIId und/oder VIIIe im Anolyten eingesetzt und solche der Formeln VIId, VIIe, VIIId und/oder VIIIe im Katholyten.

Ganz besonders bevorzugt enthält der Katholyt Verbindungen der oben definierten Formeln IIIa, IIIb oder IIIc und der Anolyt enthält die Verbindungen der oben definierten Formeln Ib oder IIb.

Insbesondere enthält der Katholyt Verbindungen der oben definierten Formel IIIb und der Anolyt enthält die Verbindungen der oben definierten Formel Ib.

Beispiele für bevorzugte Verbindungen der Formel IIIb sind Salze des 2,2,6,6-Tetramethylpiperidin-4-(N,N,N-trialkylammoniums), insbesondere Salze des 2,2,6,6,-Tetramethylpiperidin-4-(N,N,N-trimethylammoniums) und ganz besonders 2,2,6,6-Tetramethylpiperidin-4-(N, N, N-trimethylammonium)-chlorid.

Beispiele für bevorzugte Verbindungen der Formel Ib sind Salze des N, N'-Dialkylviologens, insbesondere Salze des N, N'-Dimethylviologens und ganz besonders N, N'-Dialkylviologenchlorid

Besonders bevorzugte redoxaktive Verbindungen sind solche der oben definierten Formeln VII, VIIa, VIIb, VIIc, VIId, VIIe, VIII, VIIIa, VIIIb, VIIIc, VIIId, VIIIe, IX, IXa, IXb, IXc, X, Xa, Xa und Xc. Diese enthalten sowohl elektroaktive Bipyridylreste als auch elektroaktive Nitroxidreste und können sowohl im Katholyten als auch im Anolyten eingesetzt werden, vorzugsweise in beiden Kammern die gleichen Verbindungen.

Die redoxaktive Verbindungen der oben definierten Formeln VII, VIIa, VIIb, VIIc, VIId, VIIe, VIII, VIIIa, VIIIb, VIIIc, VIIId, VIIIe, IX, IXa, IXb, IXc, X, Xa, Xb und Xc sind Kombinationsmoleküle aus positiver und negativer redoxaktiver Einheit (TEMPO und Viologen). Bislang wurden diese redoxaktiven Einheiten immer nur in der Form zweier verschiedener Substanzen verwendet. Die erfindungsgemäß besonders bevorzugten Kombinationsmoleküle können sowohl oxidiert als auch reduziert werden. Einer der dadurch ergebenden Vorteile ist, dass die Lösungen bei Vermischung verursacht beispielsweise durch Membrandefekte nicht mehr irreversibel geschädigt werden. Auch können die Potenziale durch Wahl der beiden redoxaktiven Einheiten eingestellt werden und so auf verschiedene Anwendungsszenarien optimiert werden.

Bedeutet einer der Reste R₂, R₃, R₄, R₅, R₆, R₇, R₈, R₁₀, R₁₃, R₂₀ und/oder R₂₁ Alkyl, so kann die Alkylgruppe sowohl verzweigt als auch unverzweigt sein. Eine Alkylgruppe enthält typischerweise ein bis zu zwanzig Kohlenstoffatome, bevorzugt ein bis zu zehn Kohlenstoffatome. Beispiele für Alkylgruppen sind: Methyl, Ethyl, n-Propyl, Isopropyl, *n*-Butyl, *sec*-Butyl, *tert*.-Butyl, Pentyl, n-Hexyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl oder Eicosyl. Besonders bevorzugt sind Alkylgruppen mit ein bis sechs Kohlenstoffatomen. Alkylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet einer der Reste R₂, R₃ und/oder R₁₃ Alkoxy, so kann die Alkoxygruppe aus einer Alkyleinheit bestehen, die sowohl verzweigt als auch unverzweigt sein kann. Eine Alkoxygruppe enthält typischerweise ein bis zu zwanzig Kohlenstoffatome, bevorzugt ein bis zu zehn Kohlenstoffatome. Beispiele für Alkoxygruppen sind: Methoxy, Ethoxy, Isopropoxy, n-Butoxy, sec.-Butoxy, tert.-Butoxy, Pentyloxy, n-Hexyloxy, n-Heptyloxy, 2-Ethylhexyloxy, n-Octyloxy, n-Nonyloxy, n-Decyloxy, n-Tridecyloxy, n-Tetradecyloxy, n-Pentadecyloxy, n-Hexadecyloxy, n-Octadecyloxy oder Eicosyloxy. Besonders bevorzugt sind Alkoxygruppen mit ein bis sechs Kohlenstoffatomen.

Bedeutet einer der Reste R₂, R₃ und/oder R₁₃ Haloalkyl, so kann die Haloalkylgruppe sowohl verzweigt als auch unverzweigt sein. Eine Haloalkylgruppe enthält typischerweise ein bis zu zwanzig Kohlenstoffatome, die wiederum unabhängig voneinander mit einem oder mehreren Halogenatomen substituiert sind, bevorzugt ein bis zehn Kohlenstoffatome. Beispiele für Halogenatome sind Fluor, Chlor, Brom oder Iod. Bevorzugt sind Fluor und Chlor. Beispiele für Haloalkylgruppen sind: Trifluoromethyl, Difluoromethyl, Fluoromethyl, Bromodifluoromethyl, 2-Chloroethyl, 2-Bromoethyl, 1,1-Difluoroethyl, 2,2,2-Trifluoroethyl, 1,1,2,2-Tetrafluoroethyl, 2-Chloro-1,1,2-trifluoroethyl, Pentafluoroethyl, 3-Bromopropyl, 2,2,3,3-Tetrafluoropropyl, 1,1,2,3,3,3-Hexafluoropropyl, 1,1,1,3,3,3-Hexafluoropropyl, 3-Bromo-2-methylpropyl, 4-Bromobutyl, Perfluoropentyl.

Bedeutet einer der Reste R₂, R₃, R₄, R₅, R₆, R₇, R₈, R₁₀, R₁₃, R₂₀ und/oder R₂₁ Cycloalkyl, so ist die Cycloalkylgruppe typischerweise eine cyclische Gruppe, enthaltend drei bis acht, vorzugsweise fünf, sechs oder sieben Ringkohlenstoffatome, die jeweils unabhängig voneinander substituiert sein können. Beispiele für Substituenten sind Alkylgruppen oder zwei Alkylgruppen, die zusammen mit den Ringkohlenstoffen, an denen sie gebunden sind, einen weiteren Ring bilden können. Beispiele für Cycloalkylgruppen sind Cyclopropyl, Cyclopentyl oder Cyclohexyl. Cycloalkylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet einer der Reste R₂, R₃, R₄, R₅, R₆, R₇, R₈, R₁₀, R₁₃, R₂₀ und/oder R₂₁ Aryl, so ist die Arylgruppe typischerweise eine cyclische aromatische Gruppe, enthaltend fünf bis vierzehn Kohlenstoffatome, die jeweils unabhängig voneinander substituiert sein können. Beispiele für Substituenten sind Alkylgruppen oder zwei Alkylgruppen, die gemeinsam mit den Ringkohlenstoffatomen, an denen sie gebunden sind, einen weiteren Ring bilden können. Beispiele für Arylgruppen sind Phenyl, Biphenyl, Anthryl oder Phenantolyl. Arylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet einer der Reste R₂, R₃ und/oder R₁₃ Heterocyclyl, so kann die Heterocyclylgruppe typischerweise eine cyclische Gruppe mit vier bis zehn Ringkohlenstoffatomen und mindestens einem Ringheteroatom aufweisen, die jeweils unabhängig voneinander substituiert sein können. Beispiele für Substituenten sind Alkylgruppen, oder zwei Alkylgruppen die zusammen mit den Ringkohlenstoffen an denen sie gebunden sind einen weiteren Ring bilden können. Beispiele für Heteroatome sind Sauerstoff, Stickstoff, Phosphor, Bor, Selen oder Schwefel. Beispiele für Heterocyclylgruppen sind Furyl, Thienyl, Pyrrolyl oder Imidazolyl. Heterocyclylgruppen sind vorzugsweise aromatisch. Heterocyclylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet einer der Reste R₂, R₃, R₄, R₅, R₆, R₇, R₈, R₁₀, R₁₃, R₂₀ und/oder R₂₁ Aralkyl, so ist die Aralkylgruppe typischerweise eine Arylgruppe, wobei Aryl zuvor bereits definiert wurde, an die kovalent eine Alkylgruppe gebunden ist. Die Aralkylgruppe kann am aromatischen Ring beispielsweise mit Alkylgruppen oder mit Halogenatomen substituiert sein. Ein Beispiel für eine Aralkylgruppe ist Benzyl. Aralkylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet einer der Reste R₂, R₃ und/oder R₁₃ Amino, so kann die Aminogruppe unsubstituiert sein oder ein oder zwei oder drei Substituten tragen, vorzugsweise Alkyl- und/oder Arylgruppen. Alkylsubstituenten können sowohl verzweigt als auch unverzweigt sein. Eine Mono- oder Dialkylaminogruppe enthält typischerweise ein oder zwei Alkylgruppen mit ein bis zu zwanzig Kohlenstoffatomen, vozugsweise mit ein bis sechs Kohlenstoffatomen. Beispiele für Monoalkylaminogruppen sind Methylamino, Ethylamino, Propylamino oder Butylamino. Beispiele für Dialkylaminogruppen sind: Di-ethylamino, Di-propylamino oder Di-butylamino.. Beispiele für Trialkylaminogruppen sind: Tri-ethylamino, Tri-propylamino oder Tributylamino.

Bedeutet einer der Reste R₂, R₃ und/oder R₁₃ Halogen, so ist darunter ein kovalent gebundenes Fluor-, Chlor-, Brom- oder lodatom zu verstehen. Bevorzugt sind Fluor oder Chlor.

Bedeutet R₁ eine zweiwertige Brückengruppe, so ist darunter ein zweiwertiger anorganischer oder organischer Rest zu verstehen. Beispiele für zweiwertige anorganische Reste sind -O-, -S-, -SO-, -SO₂-, -OP(O)O- oder -NH-. Beispiele für zweiwertige organische Reste sind Alkylen, Cycloalkylen, Arylen, Aralkylen oder Heterocyclylen.

Bedeuten R₁₄ und R₂₂ eine zweiwertige organische Brückengruppe, so ist darunter ein organischer Rest zu verstehen, der über zwei kovalente Bindungen mit dem Rest des Moleküls verbunden ist. Beispiele für zweiwertige organische Reste R₁₄ oder R₂₂ sind Alkylen, Alkylenoxy, Poly(alkylenoxy), Alkylenamino, Poly(alkylenamino), Cycloalkylen, Arylen, Aralkylen oder Heterocyclylen.

Alkylengruppen können sowohl verzweigt als auch unverzweigt sein. Eine Alkylengruppe enthält typischerweise ein bis zu zwanzig Kohlenstoffatome, bevorzugt zwei bis zu vier Kohlenstoffatome. Beispiele für Alkylengruppen sind: Methylen, Ethylen, Propylen und Butylen. Alkylengruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Alkylenoxy- und Poly(alkylenoxy)gruppen können sowohl verzweigte als auch unverzweigte Alkylengruppen enthalten. Eine in einer Alkylenoxy- oder in einer Poly(alkylenoxy)gruppe auftretende Alkylengruppe enthält typischerweise zwei bis vier Kohlenstoffatome, bevorzugt zwei oder drei Kohlenstoffatome. Die Anzahl der Wiederholeinheiten in den Poly(alkylenoxy)gruppen kann in weiten Bereichen schwanken. Typische Anzahlen von Wiederholeinheiten bewegen sich im Bereich von 2 bis 50. Beispiele für Alkylenoxygruppen sind: Ethylenoxy, Propylenoxy und Butylenoxy. Beispiele für Poly(alkylenoxy)gruppen sind: Poly(ethylenoxy), Poly(propylenoxy) und Poly(butylenoxy).

Alkylenamino- und Poly(alkylenamino)gruppen können sowohl verzweigte als auch unverzweigte Alkylengruppen enthalten. Eine in einer Alkylenamino- oder in einer Poly(alkylenamino)gruppe auftretende Alkylengruppe enthält typischerweise zwei bis vier Kohlenstoffatome, bevorzugt zwei oder drei Kohlenstoffatome. Die Anzahl der Wiederholeinheiten in den Poly(alkylenamino)gruppen kann in weiten Bereichen schwanken. Typische Anzahlen von Wiederholeinheiten bewegen sich im Bereich von 2 bis 50. Beispiele für Alkylenaminogruppen sind: Ethylenamino, Propyleriamino und Butylenamino. Beispiele für Poly(alkylenamino)gruppen sind: Poly(ethylenamino), Poly(propylenamino) und Poly(butylenamino).

Cycloalkylengruppen enthalten typischerweise fünf, sechs oder sieben Ringkohlenstoffatome, die jeweils unabhängig voneinander substituiert sein können. Beispiele für Substituenten sind Alkylgruppen oder zwei Alkylgruppen, die zusammen mit den Ringkohlenstoffen, an denen sie gebunden sind, einen weiteren Ring bilden können. Ein Beispiel für eine Cycloalkylengruppe ist Cyclohexylen. Cycloalkylengruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Arylengruppen sind typischerweise cyclische aromatische Gruppen, die fünf bis vierzehn Kohlenstoffatome enthalten, die jeweils unabhängig voneinander substituiert sein können. Beispiele für Arylengruppen sind o-Phenylen, m-Phenylen, p-Phenyl, o-Biphenylyl, m-Biphenylyl, p-Biphenylyl, 1-Anthryl, 2-Anthryl, 9-Anthryl, 1-Phenantolyl, 2-Phenantolyl, 3-Phenantolyl, 4-Phenantolyl oder 9-Phenantolyl. Arylengruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen. Weitere Beispiele für Substituenten sind Alkylgruppen oder zwei Alkylgruppen, die gemeinsam mit den Ringkohlenstoffatomen, an denen sie gebunden sind, einen weiteren Ring bilden können.

Heterocyclylgruppen sind typischerweise cyclische Gruppen mit vier bis zehn Ringkohlenstoffatomen und mindestens einem Ringheteroatom, die jeweils unabhängig voneinander substituiert sein können. Beispiele für Heteroatome sind Sauerstoff, Stickstoff, Phosphor, Bor, Selen oder Schwefel. Beispiele für Heterocyclylengruppen sind Furandiyl, Thiophendiyl, Pyrroldiyl oder Imidazoldiyl. Heterocyclylengruppen sind vorzugsweise aromatisch. Heterocyclylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen. Weitere Beispiele für Substituenten sind Alkylgruppen, oder zwei Alkylgruppen die zusammen mit den Ringkohlenstoffen an denen sie gebunden sind einen weiteren Ring bilden können.

Aralkylengruppe sind typischerweise Arylgruppen, an die ein oder zwei Alkylgruppen kovalent gebunden sind. Aralkylgruppen können über ihren Arylrest und ihren Alkylrest oder über zwei Alkylreste mit dem Rest des Moleküls kovalent verbunden sein. Die Aralkylengruppe kann am aromatischen Ring beispielsweise mit Alkylgruppen oder mit Halogenatomen substituiert sein. Beispiel für Aralkylengruppen sind Benzylen oder Dimethylphenylen (Xylylen).

Bedeutet einer der Reste R₉, R₁₁, R₁₂ oder R₁₅ eine zwei- bis sechswertige organische Brückengruppe, so ist darunter ein organischer Rest zu verstehen, der über zwei, drei, vier, fünf oder sechs kovalente Bindungen mit dem Rest des Moleküls verbunden ist.

Beispiele für zweiwertige organische Reste sind Alkylen, Alkylenoxy, Poly(alkylenoxy), Alkylenamino, Poly(alkylenamino), Cycloalkylen, Arylen, Aralkylen oder Heterocyclylen. Diese Reste sind bereits weiter oben eingehend beschrieben worden.

Beispiele für dreiwertige organische Reste sind Alkyltriyl, Alkoxytriyl, Tris-poly(alkylenoxy), Tris-poly(alkylenamino), Cycloalkyltriyl, Aryltriyl, Aralkyltriyl oder Heterocyclyltriyl. Diese Reste entsprechen den bereits weiter oben eingehend beschriebenen zweiwertigen Resten mit dem Unterschied, dass diese mit drei kovalenten Bindungen anstelle von zwei kovalenten Bindungen mit dem Rest des Moleküls verbunden sind.

Beispiele für vierwertige organische Reste sind Alkylquaternyl, Alkoxyquaternyl, Quater-poly(alkylenoxy), Quater-poly(alkylenamino), Cycloalkylquaternyl, Arylquaternyl, Aralkylquaternyl oder Heterocyclylquaternyl. Diese Reste entsprechen den bereits weiter oben eingehend beschriebenen zweiwertigen Resten mit dem Unterschied, dass diese mit vier kovalenten Bindungen anstelle von zwei kovalenten Bindungen mit dem Rest des Moleküls verbunden sind.

Beispiele für fünfwertige organische Reste sind Alkylquinquinyl, Alkoxyquinquinyl, Quinqui-poly(alkylenoxy), Quinqui-poly(alkylenamino), Cycloalkylquinquinyl, Arylquinquinyl, Aralkylquinquinyl oder Heterocyclylquinquinyl. Diese Reste entsprechen den bereits weiter oben eingehend beschriebenen zweiwertigen Resten mit dem Unterschied, dass diese mit fünf kovalenten Bindungen anstelle von zwei kovalenten Bindungen mit dem Rest des Moleküls verbunden sind.

Beispiele für sechswertige organische Reste sind Alkylhexyl, Alkoxyhexyl, Hexyl-poly(alkylenoxy), Hexyl-poly(alkylenamino), Cycloalkylhexyl, Arylhexyl, Aralkylhexyl oder Heterocyclylhexyl. Diese Reste entsprechen den bereits weiter oben eingehend beschriebenen zweiwertigen Resten mit dem Unterschied, dass diese mit sechs kovalenten Bindungen anstelle von zwei kovalenten Bindungen mit dem Rest des Moleküls verbunden sind.

R₁₆ ist ein o-fach positiv geladener, vorzugsweise ein einfach positiv geladener einwertiger organischer Rest. Dabei handelt es sich in der Regel um Alkyl, Alkoxy, Haloalkyl, Cycloalkyl, Aryl, Aralkyl oder Heterocyclyl, das einen bis vier positiv geladene Reste enthält, insbesondere quaternäre Ammoniumreste, quaternäre Phosphoniumreste, ternäre Sulfoniumreste oder einen ein- bis vierfach geladenen einwertigen heterocyclischen Rest. Der Ladungsausgleich erfolgt über das oder die Anionen X^{q-}. Die Anbindung des o-fach positiv geladenen Restes an den Piperidin-1-oxylrest erfolgt vorzugsweise über das Heteroatom des o-fach positiv geladenen Restes. Besonders bevorzugte Beispiele für Reste R₁₆ sind die Reste -N⁺R₂₆R₂₇R₂₈, -P⁺R₂₆R₂₇R₂₈, -S⁺R₂₆R₂₇ oder -Het⁺, worin R₂₆, R₂₇ und R₂₈ unabhängig voneinander Wasserstoff, Alkyl, Cycloalkyl, Aryl, Aralkyl oder Heterocyclyl, insbesondere C₁-C₆-Alkyl, Cyclohexyl, Phenyl oder Benzyl sind, und Het einen einwertigen und einfach positiv geladenen heterocyclischen Rest darstellt, der ein bis drei Ringstickstoffatome oder ein Ringstickstoffatom und ein bis zwei Ringsauerstoffatome oder Ringschwefelatome aufweist, besonders bevorzugt einen einwertigen Imidazolium-, Pyridinium-, Guanidinium-, Uronium-, Thiouronium-, Piperidinium- oder Morpholiniumrest.

R₁₉ ist ein o-fach positiv geladener, vorzugsweise ein einfach positiv geladener zweiwertiger organischer Rest. Dabei handelt es sich in der Regel um Alkylen, Haloalkylen, Cycloalkylen, Arylen, Aralkylen oder Heterocyclylen, das einen bis vier positiv geladene Reste enhält, insbesondere ein bis vier quaternäre Ammoniumreste, ein bis vier quaternäre Phosphoniumreste, ein bis vier ternäre Sulfoniumreste oder einen ein- bis vierfach positiv geladenen zweiwertigen heterocyclischen Rest. Der Ladungsausgleich erfolgt über das oder die Anionen X^{q-}. Die Anbindung des o-fach positiv geladenen Restes an den Piperidin-1-oxylrest erfolgt vorzugsweise über das Heteroatom des einfach positiv geladenen Restes. Die Anbindung von R₁₉ and das Stickstoffatom des Bipyridylrestes erfolgt über ein Kohlenstoffatom des R₁₉-Restes. Besonders bevorzugte Beispiele für Reste R₁₉ sind die Reste -N⁺R₂₆R₂₇R₂₉-, -P⁺R₂₆R₂₇R₂₉-, -S⁺R₂₆R₂₉- oder -Het⁺-, worin R₂₆ und R₂₇ unabhängig voneinander Wasserstoff, Alkyl, Cycloalkyl, Aryl, Aralkyl oder Heterocyclyl, insbesondere C₁-C₆-Alkyl, Cyclohexyl, Phenyl oder Benzyl sind, R₂₉ einen zweiwertigen organischen Rest darstellt, und Het einen zweiwertigen und einfach positiv geladenen heterocyclischen Rest darstellt, der ein bis drei Ringstickstoffatome oder ein Ringstickstoffatom und ein bis zwei Ringsauerstoffatome oder Ringschwefelatome aufweist, besonders bevorzugt einen einwertigen Imidazolium-, Pyridinium-, Guanidinium-, Uronium-, Thiouronium-, Piperidinium- oder Morpholiniumrest.

R₁₇ ist ein m-fach positiv geladener zwei- bis vierwertiger organischer Rest. Dabei handelt es sich um einen organischen Rest, der m positiv geladene Gruppen aufweist und der über zwei, drei oder vier kovalente Bindungen mit dem Rest des Moleküls verbunden ist. Beispiele für positiv geladenene Reste sind quaternäres Ammonium, quaternäres Phosphonium, ternäres Sulfonium oder ein m-fach geladener zwei- bis vierwertiger heterocyclischer Rest. Die Anbindung des m-fach positiv geladenen Restes an die Piperidin-1-oxylreste erfolgt vorzugsweise über die Heteroatome des m-fach positiv geladenen Restes. Besonders bevorzugte Beispiele für Reste R₁₇ sind die Reste -N⁺R₃₀R₃₁-[R₃₂-N⁺R₃₀R₃₁]_{f}-, -P⁺R₃₀R₃₁-[R₃₂-PR₃₀R₃₁]_{f}-, -S⁺R₃₀-[R₂₄-S⁺R₃₀]_{f}- oder [Het^{m+},]f- worin R₃₀ und R₃₁ unabhängig voneinander Alkyl, Cycloalkyl, Aryl, Aralkyl oder Heterocyclyl, insbesondere C₁-C₆-Alkyl, Cyclohexyl, Phenyl oder Benzyl sind, f die oben definierte Bedeutung besitzt, R₃₂ einen f+1-wertigen organischen Rest darstellt und Het einen zwei- bis vierwertigen und m-fach positiv geladenen heterocyclischen Rest darstellt, der ein bis drei Ringstickstoffatome oder ein Ringstickstoffatom und ein bis zwei Ringsauerstoffatome oder Ringschwefelatome aufweist, besonders bevorzugt einen zwei- bis vierwertigen Imidazolium-, Pyridinium-, Guanidinium-, Uronium-, Thiouronium-, Piperidinium- oder Morpholiniumrest.

R₁₈ ist ein o-fach positiv geladener zwei- bis vierwertiger organischer Rest. Dabei handelt es sich um einen organischen Rest, der o positiv geladene Gruppen aufweist und der über zwei, drei oder vier kovalente Bindungen mit dem Rest des Moleküls verbunden ist. R₁₈ ist mit dem Stickstoffatom des oder der Bipyridylreste über ein Kohlenstoffatom kovalent verbunden. Beispiele für positiv geladenene Reste sind quaternäres Ammonium, quaternäres Phosphonium, ternäres Sulfonium oder ein o-fach geladener zwei- bis vierwertiger heterocyclischer Rest. Die Anbindung des o-fach positiv geladenen Restes an die Piperidin-1-oxylreste erfolgt vorzugsweise über die Heteroatome des o-fach positiv geladenen Restes. Besonders bevorzugte Beispiele für Reste R₁₈ sind die Reste -[N⁺R₃₀R₃₁]_{g}-[R₃₃-N⁺R₃₀R₃₁]ₕ-, -[P⁺R₃₀R₃₁]_{g}-[R₃₃-PR₃₀R₃₁]ₕ-, -[S⁺R₃₀]_{g}-[R₃₃-S⁺R₃₀]ₕ- oder [Het^{m+},]_{g+h}-, worin R₃₀ und R₃₁ unabhängig voneinander Alkyl, Cycloalkyl, Aryl, Aralkyl oder Heterocyclyl, insbesondere C₁-C₆-Alkyl, Cyclohexyl, Phenyl oder Benzyl sind, g und h die oben definierten Bedeutungen besitzen, R₃₃ einen g+h-wertigen organischen Rest darstellt und Het einen zwei- bis vierwertigen und o-fach positiv geladenen heterocyclischen Rest darstellt, der ein bis drei Ringstickstoffatome oder ein Ringstickstoffatom und ein bis zwei Ringsauerstoffatome oder Ringschwefelatome aufweist, besonders bevorzugt einen zwei- bis vierwertigen Imidazolium-, Pyridinium-, Guanidinium-, Uronium-, Thiouronium-, Piperidinium- oder Morpholiniumrest.

Beispiele für zweiwertige organische Reste R₂₉, R₃₂ und R₃₃ sind Alkylen, Cycloalkylen, Arylen, Aralkylen oder Heterocyclylen. Diese Reste sind bereits weiter oben eingehend beschrieben worden.

Beispiele für dreiwertige organische Reste R₃₂ und R₃₃ sind Alkyltriyl, Cycloalkyltriyl, Aryltriyl, Aralkyltriyl oder Heterocyclyltriyl. Diese Reste entsprechen den bereits weiter oben eingehend beschriebenen zweiwertigen Resten mit dem Unterschied, dass diese mit drei kovalenten Bindungen anstelle von zwei kovalenten Bindungen mit dem Rest des Moleküls verbunden sind.

Beispiele für vierwertige organische Reste R₃₂ und R₃₃ sind Alkylquaternyl, Cycloalkylquaternyl, Arylquaternyl, Aralkylquaternyl oder Heterocyclylquaternyl. Diese Reste entsprechen den bereits weiter oben eingehend beschriebenen zweiwertigen Resten mit dem Unterschied, dass diese mit vier kovalenten Bindungen anstelle von zwei kovalenten Bindungen mit dem Rest des Moleküls verbunden sind.

R₂₃ ist ein u-fach negativ geladener zwei- bis vierwertiger organischer Rest. Dabei handelt es sich um einen organischen Rest, der u negativ geladene Gruppen aufweist und der über zwei, drei oder vier kovalente Bindungen mit dem Rest des Moleküls verbunden ist. R₂₃ ist mit dem Stickstoffatom des oder der Bipyridylreste über ein Kohlenstoffatom kovalent verbunden. Beispiele für negativ geladenene Reste sind mit Carbonsäure- oder Sulfonsäureresten substituierte Alkylenreste oder Arylenreste, wobei Kohlenwasserstoffeinheiten der Alkylenreste oder mehrere Arylenreste durch ein oder mehrere -O-, -CO-O-, -CO-NH- oder -NH- Gruppen unterbrochen sein können, oder ein mit bis zwei Carbonsäure- oder Sulfonsäureresten substituierter zwei- bis vierwertiger heterocyclischer Rest. Die Anbindung des u-fach negativ geladenen Restes an die Piperidin-1-oxylreste erfolgt vorzugsweise über Kohlenstoffatome des u-fach negativ geladenen Restes. Besonders bevorzugte Beispiele für Reste R₂₃ sind Alkylenreste oder Arylenreste, die mit ein oder zwei Carbonsäure- oder Sulfonsäureresten substituiert sind.

R₂₄ ist ein u-fach negativ geladener, vorzugsweise ein einfach negativ geladener zweiwertiger organischer Rest. Dabei handelt es sich in der Regel um Alkylen, Haloalkylen, Cycloalkylen, Arylen, Aralkylen oder Heterocyclylen, das ein bis vier einfach negativ geladene Reste enhält, insbesondere einen Alkylen- oder Arylenrest mit ein bis vier Carbonsäure- oder Sulfonsäuresubstituenten, wobei Kohlenwasserstoffeinheiten der Alkylenreste oder mehrere Arylenreste durch ein oder mehrere -O-, -CO-O-, -CO-NH- oder -NH- Gruppen unterbrochen sein können, oder einen ein bis vierfach negativ geladenen zweiwertigen heterocyclischen Rest. Der Ladungsausgleich erfolgt über das oder die Anionen X^{q-} oder über das oder die Kationen Y^{x+}. Die Anbindung des u-fach negativ geladenen Restes an den Piperidin-1-oxylrest erfolgt vorzugsweise über ein Kohlenstoffatom des u-fach negativ geladenen Restes. Die Anbindung von R₂₄ and das Stickstoffatom des Bipyridylrestes erfolgt über ein Kohlenstoffatom des R₂₄-Restes.

R₂₅ ist ein u-fach negativ geladener, vorzugsweise ein einfach negativ geladener einwertiger organischer Rest. Dabei handelt es sich in der Regel um Alkyl, Alkoxy, Haloalkyl, Cycloalkyl, Aryl, Aralkyl oder Heterocyclyl, das ein bis vier einfach negativ geladene Reste enhält, insbesondere ein bis vier Carbonsäurereste oder ein bis vier Sulfonsäurereste oder einen mit ein bis vier Carbonsäureresten oder mit ein bis vier Sulfonsäureresten substituierten einwertigen heterocyclischen Rest. Der Ladungsausgleich erfolgt über das oder die Kationen Z^{q+}. Die Anbindung des u-fach negativ geladenen Restes an den Piperidin-1-oxylrest erfolgt vorzugsweise über ein Kohlenstoffatom des einfach negativ geladenen Restes.

Die erfindungsgemäß eingesetzten redoxaktiven Komponenten mit ein bis sechs Resten der Formel I oder mit ein bis sechs Resten der Formel II im Molekül weisen Gegenionen X^{q-} auf. Durch diese werden die beim Laden oder Entladen entstehenden ionischen Ladungen ausgeglichen. Bei den Gegenionen X^{q-} kann es sich um anorganische oder um organische q-wertige Anionen handeln.

Beispiele für anorganische Anionen x^{q-} sind Halogenidionen, wie Fluorid, Chlorid, Bromid oder lodid, oder Hydroxidionen oder Anionen anorganischer Säuren, wie Phosphat, Sulfat, Nitrat, Hexafluorophosphat, Tetrafluoroborat, Perchlorat, Chlorat, Hexafluoroantimonat, Hexafluoroarsenat, Cyanid.

Beispiele für organische Anionen X^{q-} sind Anionen ein- oder mehrwertiger Carbonsäuren oder ein- oder mehrwertiger Sulfonsäuren, wobei diese Säuren gesättigt oder ungesättigt sein können. Beispiele für Anionen organischer Säuren sind Acetat, Formiat, Trifluoroacetat, Trifluormethansulfonat, Pentafluorethansulfonat, Nonofluorbutansulfonat, Butyrat, Citrat, Fumarat, Glutarat, Lactat, Malat, Malonat, Oxalat, Pyruvat oder Tartrat.

Weiterhin können die erfindungsgemäß eingesetzten redoxaktiven Komponenten anorganische Kationen, wie ein- oder mehrwertige Metallionen, oder organische Kationen, wie Ammonium, Imidazolium, Pyridinium, Guanidinium, Uronium, Thiouronium, Piperidinium, Morpholinium oder Phosphonium, enthalten. Der Ladungsausgleich erfolgt durch die Anionen X^{q-}.

In manchen Fällen tragen die erfindungsgemäß eingesetzten redoxaktiven Komponenten eine oder mehrere negative Ladungen. Hier erfolgt der Ladungsausgleich durch Gegenionen Y^{x} oder Z^{q+}. Es kann aber auch Fälle geben, in denen die redoxaktiven Komponenten eine zwitterionische Struktur haben und keine weiteren Anionen oder Kationen für den Ladungsausgleich benötigen.

Bei den Anionen Y^{x-} kann es sich um anorganische oder organische x-wertige Anionen handeln. Beispiele für Anionen Y^{x-} entsprechen denen der oben für Anionen X^{q-} genannten Beispiele.

Bei den Kationen Y^{x+} kann es sich um anorganische oder organische x-wertige Kationen handeln. Beispiele dafür sind x-wertige Metallionen, oder x-wertige organische Kationen, wie Ammonium, Imidazolium, Pyridinium, Guanidinium, Uronium, Thiouronium, Piperidinium, Morpholinium oder Phosphonium. Bevorzugt werden ein- oder zweiwertige Metallionen, insbesonder Alkali- oder Erdalkalikationen eingesetzt.

Bei den Kationen Z^{q+} kann es sich um anorganische oder organische q-wertige Kationen handeln. Beispiele dafür sind q-wertige Metallionen, oder q-wertige organische Kationen, wie Ammonium, Imidazolium, Pyridinium, Guanidinium, Uronium, Thiouronium, Piperidinium, Morpholinium oder Phosphonium. Bevorzugt werden ein- oder zweiwertige Metallionen, insbesonder Alkali- oder Erdalkalikationen eingesetzt.

Bevorzugt werden in den erfindungsgemäßen Redox-Flow-Zellen Verbindungen eingesetzt, die Halogenidionen, Hydroxidionen, Phosphationen, Sulfationen, Perchlorationen, Hexafluorophosphationen oder Tetrafluoroborationen enthalten sowie vorzugsweise Kationen ausgewählt aus der Gruppe der Wasserstoffionen (H⁺), Alkali- oder Erdalkalimetallkatiönen (z.B. Lithium, Natrium, Kalium, Magnesium, Calcium), sowie der substituierten oder unsubstituierten Ammoniumkationen (z.B. Tetrabutylammonium, Tetramethylammonium, Tetraethylammonium), wobei die Substituenten im Allgemeinen Alkylgruppen sein können.

Bevorzugt werden redoxaktive Verbindungen enthaltend ein bis vier, insbesondere ein bis zwei Struktureinheiten der Formel I oder II eingesetzt, in denen R₁ eine kovalente C-C-Bindung ist oder -O-, -NH-, Arylen oder Heteroarylen, und ganz besonders bevorzugt eine kovalente C-C-Bindung, Phenylen, Biphenylen oder Thiophendiyl ist.

Weitere bevorzugt eingesetzte redoxaktive Verbindungen sind solche enthaltend ein bis vier Struktureinheiten, insbesondere ein bis zwei Struktureinheiten der Formel I und/oder II, insbesondere solche der Formeln Ia oder IIa und ganz besonders bevorzugt solche der Formeln Ib, IIb, IV, V, VII. VIII, IX, IXa, X oder Xa, und äußerst bevorzugt solche der Formeln IVa, Va, VIIa, VIIb, VIIc, VIId, VIIIa, VIIIb, VIIIc, VIIId, IXa, IXb, Xa oder Xb, in denen b und c gleich null sind oder in denen b und c 1 oder 2 bedeuten und R₂ und R₃ jeweils Methyl, Ethyl, Methoxy, Ethoxy, Trifluormethyl, Difluormethyl, Fluor, Chlor, Hydroxy, Amino oder Nitro bedeuten.

Weitere bevorzugt eingesetzte redoxaktive Verbindungen sind solche der Formel III, VII, VIIa, VIIb VIII, VIIIa, VIIIb, IX, IXa, IXb, X, Xa oder Xb, insbesondere solche der Formeln IIIa, IIIb, V, VIa, VIIc, VIId, VIIe, VIIIc, VIIId, VIIIe, IXc oder Xc, in denen R₄, R₅, R₆ und R₇ jeweils C₁-C₆-Alkyl und ganz besonders bevorzugt Ethyl oder Methyl bedeuten.

Weitere bevorzugt eingesetzte redoxaktive Verbindungen sind solche der Formel IV, V, VII, VIIa, VIIb, VIII, VIIIa oder VIIIb, insbesondere solche der Formeln IVa, Va, Vllc oder VIIIc und ganz besonders bevorzugt solche der Formeln Ib, VIId, VIIe, VIIId oder VIIIe, in denen R₈ oder R₈ und R₁₀ Wasserstoff, C₁-C₆-Alkyl, mit einer Carbonsäurealkylestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl oder mit einer Aminogruppe substituiertes C₁-C₆-Alkyl bedeuten, und ganz besonders bevorzugt Wasserstoff, Ethyl oder Methyl bedeuten.

Weitere bevorzugt eingesetzte redoxaktive Verbindungen sind solche der Formel IIb, in denen R₂₀ und R₂₁ Wasserstoff, C₁-C₆-Alkyl mit einer Carbonsäurealkylestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl oder mit einer Aminogruppe substituiertes C₁-C₆-Alkyl und ganz besonders bevorzugt Wasserstoff, Ethyl oder Methyl bedeuten oder in denen die Reste R₂₀ und R₂₁ zusammen eine C₁-C₃-Alkylengruppe bilden, insbesondere Ethylen.

Weitere bevorzugt eingesetzte redoxaktive Verbindungen sind solche der Formel IIIa, in denen R₁₃ Wasserstoff, C₁-C₆-Alkyl, C₁-C₆-Alkoxy, C₁-C₆-Teil- oder Perfluoralkyl, C₁-C₆-Teil- oder Perchloralkyl, C₁-C₆-Fluorchloralkyl, Phenyl, Benzyl, Fluor, Chlor, Hydroxy, Amino oder Nitro ist.

Weitere bevorzugt eingesetzte redoxaktive Verbindungen sind solche der Formel IV oder V, insbesondere solche der Formeln IVa oder Va, in denen R₉ Alkylen, Poly(alkylenamino), Arylen, Aryltriyl, Arylquaternyl, Heterocyclylen, Heterocyclyltriyl oder Heterocyclylquaternyl ist, ganz besonders bevorzugt C₂-C₆-Alkylen, Di-(C₂-C₆-alkylenamino), Tri-(C₂-C₆-alkylenamino), Quater-(C₂-C₆-alkylenamino), Phenylen, Phenyltriyl oder Phenylquaternyl ist.

Weitere bevorzugt eingesetzte redoxaktive Verbindungen sind solche der Formel VII oder VIII, insbesondere solche der Formeln VIIc oder VIIIc, in denen R₁₂ Alkylen, Alkyltriyl, Alkylquaternyl, Alkyloxydiyl, Alkyloxytriyl, Alkyloxyquaternyl, Arylen, Aryltriyl, Arylquaternyl, Heterocyclylen, Heterocyclyltriyl oder Heterocyclylquaternyl ist, ganz besonders bevorzugt C₂-C₆-Alkylen, wie Ethylen oder Propylen, oder C₂-C₆-Alkoxydiyl, wie 1,2-Dioxyethylen oder 1,3-Dioxypropylen, oder C₃-C₆-Alkoxytriyl, wie ein 1,2,3-Propantriolrest oder ein Trimethylolpropanrest, oder C₄-C₆-Alkoxyquaternyl, wie ein Pentaerithritolrest, oder Phenylen, Phenyltriyl oder Phenylquaternyl ist.

Weitere bevorzugt eingesetzte redoxaktive Verbindungen sind solche der Formel IX oder X, insbesondere solche der Formeln VIId oder VIIId, in denen R₁₄ Alkylen, Alkylenamino, Poly(alkylenamino), Arylen oder Heterocyclylen ist, ganz besonders bevorzugt C₂-C₆-Alkylen, C₂-C₆-Alkylenamino oder Phenylen ist.

Weitere bevorzugt eingesetzte redoxaktive Verbindungen sind solche der Formel IX oder X, insbesondere solche der Formeln IXc oder Xc, in denen R₁₅ Alkylen, Alkyltriyl, Alkylquaternyl, Arylen, Aryltriyl, Arylquaternyl, Heterocyclylen, Heterocyclyltriyl oder Heterocyclylquaternyl ist, ganz besonders bevorzugt C₂-C₆-Alkylen, wie Ethylen oder Propylen, oder Phenylen, Phenyltriyl oder Phenylquaternyl ist.

Weitere bevorzugt eingesetzte redoxaktive Verbindungen sind solche der Formel VI, in denen R₁₁ Alkylen, Alkyltriyl, Alkylquaternyl, Alkyloxydiyl, Alkyloxytriyl, Alkyloxyquaternyl, Arylen, Aryltriyl, Arylquaternyl, Heterocyclylen, Heterocyclyltriyl oder Heterocyclylquaternyl ist, ganz besonders bevorzugt C₂-C₆-Alkylen, wie Ethylen oder Propylen, oder C₂-C₆-Alkoxydiyl, wie 1,2-Dioxyethylen oder 1,3-Dioxypropylen, oder C₃-C₆-Alkoxytriyl, wie ein 1,2,3-Propantriolrest oder ein Trimethylolpropanrest, oder C₄-C₆-Alkoxyquaternyl, wie ein Pentaerithritolrest, oder Phenylen, Phenyltriyl oder Phenylquaternyl ist.

Die Indizes b und c sind vorzugsweise jeweils 0 oder unabhängig voneinander 1 oder 2.

Index a ist vorzugsweise 1 oder 2 und insbesondere 2.

Index q ist vorzugsweise 1 oder 2 und insbesondere 1.

Index d ist vorzugsweise 1 oder 2 und insbesondere 1.

Index g ist vorzugsweise 1 oder 2 und insbesondere 1.

Index h ist vorzugsweise 1 oder 2 und insbesondere 1.

Besonders bevorzugt werden Verbindungen der Formeln VII oder VIII, insbesondere solche der Formeln VIIa oder VIIIa und ganz besonders bevorzugt solche der Formeln VIIc oder VIIIc eingesetzt in denen Index g 1 ist und Index h 1 oder 2 bedeutet oder in denen Index g 1 oder 2 ist und Index h 1 bedeutet.

Index i ist vorzugsweise 1 oder 2 und insbesondere 1.

Index j ist vorzugsweise 1 oder 2 und insbesondere 1.

Index k ist vorzugsweise 1, 2 oder 4 und insbesondere 2 oder 4.

Index f ist vorzugsweise 1 oder 2 und insbesondere 1.

Index m ist vorzugsweise 1 oder 2 und insbesondere 1.

Index n ist vorzugsweise 1/2, 1 oder 2 und insbesondere 1/2 oder 1.

Index l ist vorzugsweise 1/2 oder 1 und insbesondere 1.

Index o ist vorzugsweise 1 oder 2 und insbesondere 1.

Index p ist vorzugsweise 6, 5, 4, 3, 5/2, 2 oder 3/2 und insbesondere 3 oder 5.

Index r ist vorzugsweise 9, 6, 9/2 oder 3 und insbesondere 9 oder 6.

Index s ist vorzugsweise 3 oder 3/2 und insbesondere 3.

Index t ist vorzugsweise 0.

Index u ist vorzugsweise 1 oder 2, insbesondere 1.

Index v ist vorzugsweise -1 oder -2 und insbesondere -1.

Index x ist vorzugsweise -1 oder -2 und insbesondere -1.

Index x1 ist vorzugsweise -1 oder -2 und insbesondere -1.

Index y ist vorzugsweise 1 oder 2 und insbesondere 2.

Index z ist vorzugsweise 1 oder 2 und insbesondere 2.

Index z1 ist vorzugsweise 3 oder 1,5 und insbesondere 1,5.

Bei den erfindungsgemäß als Katholyt eingesetzten Eisensalzen handelt es sich um wasserlösliche Eisensalze in den Oxidationsstufen II und/oder III. Eisensalze können beliebige Anionen aufweisen, solange dadurch die Wasserlöslichkeit dieser Salze nicht in Frage gestellt ist.

Unter Wasserlöslichkeit einer Verbindung wird im Rahmen dieser Beschreibung eine Löslichkeit von mindestens 1 g der Verbindung in 1 I Wasser bei 25°C verstanden.

Beispiele für Eisensalze sind Kombinationen von Fe-II-chlorid mit Fe-III-chlorid oder von Fe-II-sulfat mit Fe-III-sulfat. Neben Eisensalzen mit anorganischen Anionen lassen sich auch Eisensalze mit organischen Anionen einsetzen, beispielsweise Fe-II-acetat mit Fe-III-acetat.

Das erfindungsgemäß eingesetzte Redoxsystem weist viele Vorteile im Vergleich zu anderen Materialsystemen für Redox-Flow-Batterien auf. Beispielsweise werden keine Edelmetallkatalysatoren wie beim Zelltyp Eisen/Chrom benötigt, da die Reaktionskinetik von Viologen im Vergleich zu Chrom deutlich schneller ist. Des Weiteren sind die redoxaktiven Materialien (TEMPO-Derivaten, Eisen(II/III)-Chlorid und Dimethylviologenchlorid) auch bei neutralem pH-Wert sehr gut wasserlöslich (bei Raumtemperatur mehr als 2 mol/L). Hieraus resultieren hohe Speicherkapazitäten (über 53 Ah/l bei 2 mol/l an aktiven Materialien). In den Lösungen kann weiterhin auf aggressive Säure als Elektrolyt verzichtet werden, wie sie bei den Systemen nach dem Stand der Technik (z.B. bei Vanadium-Systemen) häufig eingesetzt werden.

Die erfindungsgemäß eingesetzten redoxaktiven Materialien sind auch untereinander kompatibel, d.h. es kann eine Mischlösung aus TEMPO-Derviaten und Viologenderivaten oder aus Eisen (II/III)-Chorid und Viologenderivaten hergestellt werden und diese Lösung kann sowohl als Anolyt als auch als Katholyt Verwendung finden. Dadurch wird die Problematik der Querkontamination über Membranfehlstellen deutlich reduziert, die bei den anderen organischen / teilorganischen Redox-Flow-Systemen ein wesentliches Problem für die Langzeitstabilität darstellt.

Insbesondere die Kombinationsmoleküle, die sowohl eine TEMPO-Funktionalität als auch eine Viologen-Funktionalität in einem Molekül verknüpft tragen, reduzieren das Problem der Querkontamination über Membranfehlstellen erheblich. Sollte eine Querkontamination auftreten, so liegt noch immer in Anolyt als auch als Katholyt die gleiche Substanz vor. Die Kombinationsmoleküle simulieren folglich Stoffe - meist Metalle/Metallsalze, die mindestens drei verschiedene Redoxzustände einnehmen können, wie dies zum Beispiel für das Metall Vanadium der Fall ist.

Ein weiterer Vorteil ist, dass die für den Systembetrieb und die Systemsicherheit nachteilige Entstehung von Wasserstoff unterdrückt werden kann, da das Viologen in der Lage ist, Wasserstoff zu oxidieren (C.L. Bird, A.T. Kuhn, Chem. Soc. Rev.: "Electrochemistry of the viologens" 40, 1981, p49-82). Beim Laden entstehender Wasserstoff steht dem Batteriesystem nicht mehr zur Verfügung und bedeutet daher einen Effizienzverlust der Batterie. Viologenderivate können daher auch als redoxaktive Zusatzstoffe für weitere Redox-Flow-Batteriesysteme Einsatz finden. Daneben ist ein Vorteil dieses Systems die Möglichkeit, eine Rebalanzierung der Kapazität durch Licht zu erzielen, in dem das Viologenmolekül photoinduziert in die reduzierte Form überführt werden kann (T.W. Ebbesen, G. Levey, L. K. Patterson "Photoreduction of methyl viologen in aqueous neutral solution without additives" Nature, 1982 vol 298, p545 - 548). Dadurch können aufwändige externe Rebalanzierungszyklen gespart werden. Die Rebalanzierung ist ein in Vanadium-Systemen notwendiger Schritt, um sowohl auf der Anoden- als auch auf der Kathodenseite die gleiche Menge an Ladungsträgern einzustellen.

Die redoxaktiven Komponenten werden in gelöster Form eingesetzt; darunter ist auch deren Einsatz als Dispersion zu verstehen.

Die Molmassen der erfindungsgemäß eingesetzten redoxaktiven Komponenten enthaltend Reste der Formel I oder II oder III oder der Formeln I und III oder II und III können in weiten Bereichen schwanken. Besonders bevorzugt werden redoxaktive Komponenten enthaltend Reste der Formel I oder II oder III oder der Formeln I und III oder II und III eingesetzt, deren Molmassen kleiner als 500 g/molsind.

Die Viskosität des erfindungsgemäß eingesetzten Elektrolyten liegt typischerweise im Bereich von 1 mPas bis zu 10³ mPas, insbesondere bevorzugt 10⁻² bis 10² mPas und ganz besonders bevorzugt 1 bis 20 mPas (gemessen bei 25 °C mit einem Rotationsviskosimeter, Platte/Platte).

Die Herstellung der erfindungsgemäß eingesetzten redoxaktiven Komponenten kann nach Standardverfahren der organischen Synthese erfolgen. Dem Fachmann sind diese Vorgehensweisen bekannt.

Die erfindungsgemäße Redox-Flow-Zelle kann neben den oben beschriebenen redoxaktiven Komponenten noch weitere für solche Zellen übliche Elemente oder Komponenten enthalten.

In der erfindungsgemäßen Redox-Flow-Zelle kommen in beiden Kammern ausgewählte redoxaktive Komponenten zum Einsatz, die durch eine ionenleitende Membran voneinander getrennt sind und die in den Kammern in gelöster oder in dispergierter Form vorliegen.

Der Elektrolyt enthält die redoxaktiven Komponenten. Weiterhin wird ein organisches Lösungsmittel und/oder Wasser verwendet. Darüber hinaus kann der Elektrolyt mindestens ein Leitsalz enthalten. Zusätzlich können noch Additive verwendet werden. Beispiele dafür sind Tenside, Viskositätsmodifizierer, Pestizide, Puffer, Stabilisatoren, Katalysatoren, Leitadditive, Frostschutzmittel, Temperaturstabilisatoren und/oder Schaumbrecher.

Beispiele für Elektrolytlösungsmittel sind Wasser, Alkohole (z.B. Ethanol), Kohlensäureester (z.B. Propylencarbonat), Nitrile (z.B. Acetonitril), Amide (z.B. Dimethylformamid, Dimethylacetamid), Sulfoxide (z.B. Dimethylsulfoxid), Ketone (z.B. Aceton), Lactone (z.B. gamma-Butyrolacton), Lactame (z.B. *N*-Methyl-2-pyrrolidon), Nitroverbindungen (z.B. Nitromethan), Ether (z.B. Tetrahydrofuran), chlorierte Kohlenwasserstoffe (z.B. Dichlormethan), Carbonsäuren (z.B. Ameisensäure, Essigsäure), Mineralsäuren (z.B. Schwefelsäure, Halogenwasserstoffe bzw. Halogenwasserstoffsäuren) und deren Gemische zum Einsatz. Bevorzugt sind Wasser, Kohlensäureester (z.B. Propylencarbonat), Nitrile (z.B. Acetonitril) und deren Gemische. Besonders bevorzugt ist Wasser.

Beispiele für Leitsalze sind Salze enthaltend Anionen ausgewählt aus der Gruppe Halogenidionen (Fluoridion, Chloridion, Bromidion, Iodidion), Hydroxidionen, Anionen anorganischer Säuren (z. B. Phosphationen, Sulfationen, Nitrationen, Hexafluorophosphationen, Tetrafluoroborationen, Perchlorationen, Chlorationen, Hexafluoroantimonationen, Hexafluoroarsenationen, Cyanidionen) oder Anionen organischer Säuren (z.B. Acetationen, Formiationen, Trifluoroessigsäureionen, Trifluormethansulfonation, Pentafluorethansulfonationen, Nonofluorbutansulfonationen, Butyrationen, Citrationen, Fumarationen, Glutarationen, Lactationen, Malationen, Malonationen, Oxalationen, Pyruvationen, Tartrationen) sein. Besonders bevorzugt sind Chlorid- und Fluoridionen, Hydroxidionen, Phosphationen, Sulfationen, Perchlorationen, Hexafluorophosphationen und Tetrafluoroborationen; sowie Kationen ausgewählt aus der Gruppe der Wasserstoffionen (H⁺), Alkali- oder Erdalkalimetallkationen (z.B. Lithium, Natrium, Kalium, Magnesium, Calcium), Zink, Eisen, sowie substituierten oder unsubstituierten Ammoniumkationen (z.B. Tetrabutylammonium, Tetramethylammonium, Tetraethylammonium), wobei die Substituenten im Allgemeinen Alkylgruppen sein können. Wasserstoffionen, Lithiumionen, Natriumionen, Kaliumionen, Tetrabutylammoniumionen und deren Gemische sind besonders bevorzugt. Insbesondere die Leitsalze: NaCl, KCl, LiPF₆, LiBF₄, NaBF₄, NaPF₆, NaClO₄, NaOH, KOH, Na₃PO₄, K₃PO₄, Na₂SO₄, NaSO₃CF₃, LiSO₃CF₃, (CH₃)₄NOH, n-Bu₄NOH, (CH₃)₄NCl, n-Bu₄NCl, (CH₃)₄NBr, n-Bu₄NBr, n-Bu₄NPF₆, n-Bu₄NBF₄, n-Bu₄NClO₄ und deren Gemische wobei n-Bu für die n-Butylgruppe steht

Beispiele für Elektrolyt-Additive sind Tenside, welche nichtionisch, anionisch, kationisch oder amphoter sein können. Besonders bevorzugt sind nichtionische Tenside (z.B. Polyalkylenglycolether, Fettalkoholpropoxylate, Alkylglucoside, Alkylpolyglucoside, Oktylphenolethoxylate, Nonylphenolethoxylate, Saponine, Phospholipide)

Weitere Beispiele für Elektrolyt-Additive sind Puffer (z.B. Kohlensäure-Bicarbonat-Puffer, Kohlensäure-Silicat-Puffer, Essigsäure-Acetat-Puffer, Phosphatpuffer, Ammoniakpuffer, Citronensäure- oder Citratpuffer, Tris(hydroxymethyl)-aminomethan, 4-(2-Hydroxyethyl)-1-piperazinethanesulfonsäure, 4-(2-Hydroxyethyl)-piperazin-1-propansulfonsäure, 2-(N-Morpholino)ethansulfonsäure, Barbital-Acetat-Puffer).

Die Auswahl der redoxaktiven Komponenten erfolgt so, dass die redoxaktive Komponente im Katholyten ein anderes, bevorzugt höheres, positiveres Redoxpotential aufweist als das der redoxaktiven Komponente im Anolyten. Unter redoxaktiver Komponente sind hier alle zu dieser Komponente zugehörigen Redoxzustände bzw. alle ihre Reduktions-/Oxidationsstufen zu verstehen. Die redoxaktive Komponente kann >= 2 Oxidations- und/oder Reduktionszustände annehmen. Sollte die redoxaktive Komponente > 2 Oxidations- und/oder Reduktionszustände annehmen, so ist das Redoxpotential von mindestens zwei Oxidations- und/oder Reduktionszustände insoweit verschieden, dass zwischen Katholyten und Anolyten eine Potentialdifferenz aufgebaut werden kann.

Die Potentialdifferenz zwischen den jeweils im Anolyten und Katholyten ablaufenden Redoxreaktionen der redoxaktiven Komponenten liegt erfindungsgemäß zwischen größer als 0 V und 4,0 V; bevorzugt zwischen 0,5 und 2,5 V; besonders bevorzugt zwischen 0,9 und 1,6 V.

Das Redoxpotential der redoxaktiven Komponente kann zum Beispiel mittels Cyclovoltammetrie bestimmt werden. Dieses Verfahren ist dem Fachmann bekannt (vergleiche Allen J. Bard und Larry R. Faulkner, "Electrochemical Methods: Fundamentals and Applications", 2001, 2. Auflage, John Wiley & Sons; Richard G. Compton, Craig E. Banks, "Understanding Voltammetry", 2010, 2. Auflage, Imperial College Press).

Die erfindungsgemäße Redox-Flow-Zelle enthält eine ionenleitende Membran. Diese erfüllt folgende Funktionen
- Trennung von Anoden- und Kathodenraum
- Zurückhalten beider redoxaktiver Komponenten
- Durchlässigkeit für die Leitsalze des Elektrolyten, die zum Ladungsausgleich dienen, also für Anionen und/oder Kationen des Leitsalzes bzw. für die im Elektrolyten enthaltenen Ladungsträger allgemein.

Die vorgeschlagene Membran, beispielsweise eine für Ionen des Leitsalzes permeable Membran oder eine Dialysemembran, trennt die redoxaktiven Komponenten mit vergleichsweise niedrigen Molmassen in den beiden Kammern.

Die Werkstoffe der Membran können je nach Anwendungsfall aus Kunststoffen, Keramiken, Gläsern, Metallen oder textilen Flächengebilden bestehen. Beispiele für Werkstoffe sind organische Polymere, wie Cellulose oder modifizierte Cellulose, beispielsweise Celluloseether oder Celluloseester, Polyethersulfon, Polysulfon, Polyvinylidenfluorid, Polyester, Polyurethane, Polyamide, Polypropylen, Polyvinylchlorid, Polyacrylnitril, Polystyrol, Polyvinylalkohol, Polyphenylenoxid, Polyimide, Polytetrafluorethylen und deren Derivate, oder weiterhin Keramiken, Gläser oder Filze. Auch aus mehreren Materialien bestehende Membranen (Komposite) sind möglich.

Die Membranen und die daraus resultierenden Redox-Flow-Zellen können in verschiedenen Erscheinungsformen eingesetzt werden. Beispiele dafür sind Flachmembranen, Taschenfilterbauweise und gewickelte Module. Diese Ausführungsformen sind dem Fachmann bekannt. Bevorzugt werden Flachmembranen eingesetzt.

Die erfindungsgemäß eingesetzte Membran kann zur besseren Stabilität, z. B. durch ein siebförmiges oder perforiertes Kunststoffmaterial oder - gewebe, geträgert sein.

Die Dicke der erfindungsgemäßen eingesetzten Membran kann in weiten Bereichen schwanken. Typische Dicken liegen im Bereich zwischen 0,1 µm und 5 mm, insbesondere bevorzugt zwischen 10 µm und 200 µm.

Neben den oben beschriebenen elektroaktiven Komponenten, Elektrolyten und Membranen enthält die erfindungsgemäße Redox-Flow-Zelle weitere Komponenten. Dabei handelt es sich um
- Fördermittel, wie Pumpen, sowie Tanks und Rohre für den Transport und die Lagerung von redoxaktiven Komponenten
- Elektroden, bevorzugt bestehend aus oder enthaltend Graphit, Graphitvlies, Graphitpapier, Carbon-Nano-Tube-Teppichen, Aktivkohle, Russ oder Graphen
- gegebenenfalls Stromableiter, wie z.B. aus Graphit oder aus Metallen

Die positive Elektrode kann folgende weitere Materialien enthalten oder aus diesen bestehen:
Edelmetallbeschichtetes oder diamantbeschichtes Titan, Niob, Wolfram, Graphit, Siliziumkarbid oder Tantal, insbesondere Platin- und/oder Iridium- und/oder Rhuteniumoxid-beschichtetes Titan, Diamant bzw. mit elektrisch leitfähigen Bestandteilen, z. B. Bor, dotierter Diamant, Glaskohlenstoff (Lothar Dunsch: Elektrochemische Reaktionen an Glaskohlenstoff, Zeitschrift für Chemie, 14, 12, p463-468, Dezember 1974, Indium-Zinn-Oxid, Blei, Blei-Silber-Legierung, z. B. Blei-Silber-Legierung mit 1% Silber, Zinn, Zinnoxid, Ruß, Spinnelle (wie z. B. in EP 0042984 beschrieben), Perowskite (CaTiO3), Delafossite (ent-haltend Kupfer- und/oder Eisenoxid), Antimon, Wismut, Kobalt, Platin und/oder Platinmohr, Palladium und/oder Palladiummohr, Mangan, Polypyrrol (wie z. B. in EP 0191726 A2, EP 0206133 A1 beschrieben), Edelstahl, Hastelloy oder Eisen-Chrom-Nickel-haltige Legierungen
Nickel enthaltende positive Elektroden werden bevorzugt dann eingesetzt, wenn der Elektrolyt einen alkalischen pH-Wert von >= 7-8 aufweist.

Bei beschichteten Elektrodenmaterialien können folgende bekannte Beschichtungsverfahren zur Anwendung kommen: chemische Dampfabscheidung (CVD), physikalische Dampfabscheidung (PVD), galvanische Abscheidung, stromlose Abscheidung aus einer flüssigen Lösung, welche das Metall in gelöster Form und ein Reduktionsmittel enthält und wobei das Reduktionsmittel die Abscheidung des gewünschten Metalls auf einer Oberfläche bewirkt.

Die negative Elektrode kann folgende Materialien enthalten oder aus diesen bestehen:
Zink, Edelstahl, Hastelloy oder Eisen-Chrom-Nickel-haltige Legierungen, Graphit, Graphitvlies, Graphitpapier, Carbon-Nano-Tube-Teppichen, Aktivkohle, Russ oder Graphen.

Nickel enthaltende negative Elektroden werden bevorzugt dann eingesetzt, wenn der Elektrolyt einen alkalischen pH-Wert von >= 7-8 aufweist.

Die erfindungsgemäßen Redox-Flow-Zellen enthalten als weitere optionale aber bevorzugte Komponente Stromableiter. Diese haben die Aufgabe, einen möglichst guten elektrischen Kontakt zwischen Elektrodenmaterial und der externen Stromquelle bzw. Stromsenke herzustellen.

Als Stromableiter können in den erfindungsgemäßen Redox-Flow-Zellen Aluminium, Alumiumlegierungen, Edelstahl, Hastelloy, Eisen-Chrom-Nickel-Legierungen, edelmetallbeschichtetes Titan oder Tantal, insbesondere Platin- und/oder Iridium- und/oder Rutheniumoxid-beschichtetes Titan, Niob, Tantal, Hafnium, Zirkonium verwendet werden.

Zur Herstellung beschichteter Stromableiter können u. a. folgende bekannte Beschichtungsverfahren zur Anwendung kommen: chemische Dampfabscheidung (CVD), physikalische Dampfabscheidung (PVD), galvanische Abscheidung, stromlose Abscheidung aus einer flüssigen Lösung, welche das Metall in gelöster Form und ein Reduktionsmittel enthält und wobei das Reduktionsmittel die Abscheidung des gewünschten Metalls auf einer Oberfläche bewirkt.

Die erfindungsgemäße Redox-Flow-Zelle kann auf unterschiedlichsten Gebieten eingesetzt werden. Dabei kann es sich im weitesten Sinne um die Speicherung von elektrischer Energie für mobile und stationäre Anwendungen handeln. Die Erfindung betrifft auch die Verwendung der Redox-Flow-Zelle für diese Zwecke.

Beispiele für Anwendungen sind Einsätze als stationäre Speicher für die Notstromversorgung, den Spitzenlastausgleich, sowie für die Zwischenspeicherung elektrischer Energie aus erneuerbaren Energiequellen, insbesondere auf dem Sektor der Photovoltaik und der Windkraft, aus Gas-, Kohle-, Biomasse-, Gezeiten,- und Meereskraftwerken und Einsätze auf dem Gebiet der Elektromobilität, wie als Speicher in Land-, Luft- und Wasserfahrzeugen.

Die erfindungsgemäße Redox-Flow-Zelle wird bevorzugt als stationärer Speicher für elektrische Energie eingesetzt.

Die erfindungsgemäßen Redox-Flow-Zellen können in an sich bekannte Weise in serieller oder paralleler Weise miteinander verschaltet werden.

Die nachfolgenden Beispiele erläutern die Erfindung ohne diese darauf zu begrenzen.

### Beispiel 1: Eisen / Viologen-Redox-Flow-Batterie

Theoretisches Potenzial der Zelle (E⁰ ist definiert als das Redoxpotential in Wasser bei 20 °C gegen eine Silber/Silberchlorid-Referenzelektrode):

| | |
|---|---|
| E⁰ Fe²⁺/Fe³⁺ | = 0,77 V |
| E⁰ MV²⁺/MV⁺ | = -0,43 V |
| → Zellspannung | = 1,2 V |

Es wurde eine Elektrolytlösung hergestellt, die aus je 1 mol/L FeCl₂ und 1 mol/L Dimethylviologenchlorid, gelöst in einer Elektrolytlösung von 2 mol/L NaCl, besteht. Die Substanzen sind im Chemikalienhandel erhältlich. Die Elektrolytlösung wurde in einer Redox-Flow-Zelle mit einer aktiven Fläche von 5 cm² getestet. Es wurden Lade- und Entladevorgänge sowohl statisch (Flüssigkeit wurde nicht gepumpt) als auch mit gepumpter Flüssigkeit durchgeführt. Dabei konnten Energiedichten von bis zu 120 mW/cm² erzielt werden. Die Speicherkapazität lag bei 25 Ah/L. Es wurde unter Berücksichtigung von Überspannungen eine Zellspannung von ca. 1,0 V beobachtet.

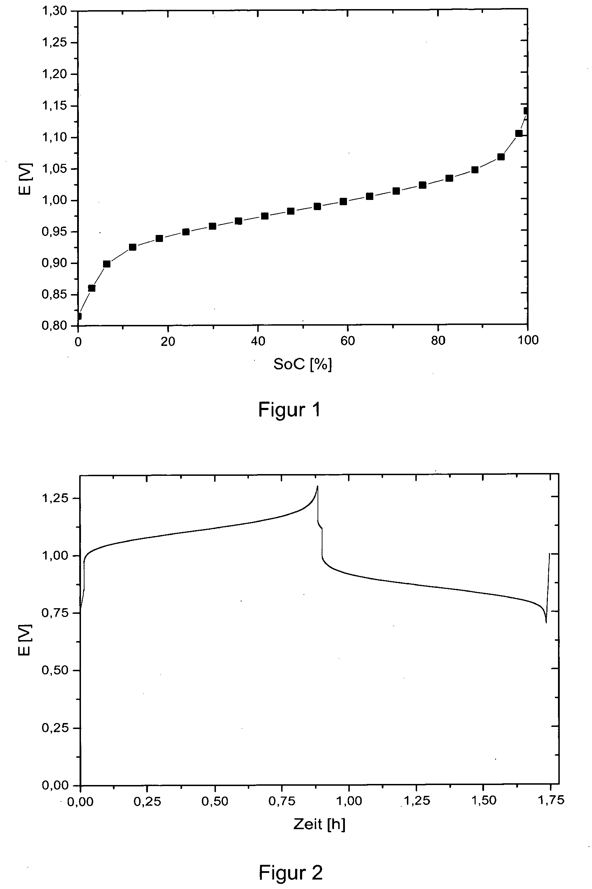

In Figur 1 ist die OCV-Kurve dieser Zelle in Abhängigkeit von deren Ladezustand aufgetragen. Die OCV-Kurve zeigt die Abhängigkeit der Zellspannung vom Ladezustand an. Die Zellspannung wird dabei im "offenen Stromkreis" gemessen, d.h. es handelt sich um die Zellspannung (open-circuit voltage, kurz: OCV), die sich bei gegebenem Ladezustand ohne externe Last ergibt. Je höher diese Spannungswerte sind, umso höher ist der Energiegehalt und umso effizienter kann das System betrieben werden.

Figur 2 zeigt die Ladekurve dieser Zelle.

### Beispiel 2: TEMPO-Ammoniumchlorid / Viologen-Redox-Flow-Batterie

Theoretisches Potenzial der Zelle:

| | |
|---|---|
| E⁰ TEMPO-N⁺/TEMPO-N²⁺ | = 0,78 V |
| E⁰ MV²⁺/MV⁺ | = -0,43 V |
| → Zellspannung | = 1,21 V |

Es wurden zwei Elektrolytlösungen hergestellt: Die Lösung für die Arbeitselektrode (Plus-Pol der Batterie) wurde aus 1,0 g TEMPO-Ammoniumchlorid mit der nachfolgenden Struktur und 0,55 g NaCl in 10 ml Wasser bereitet. Die Lösung für die Gegenelektrode (Minus-Pol der Batterie) wurde aus 1,5 g Dimethylviologenchlorid und 0,55 g NaCl in 10 ml Wasser hergestellt. Die Lösungen wurden in einer Redox-Flow-Zelle mit einer aktiven Fläche von 5 cm² getestet (analog Beispiel 1). Die Zelle wurde zyklisch geladen und entladen.

Struktur des TEMPO-Ammoniumchlorids:

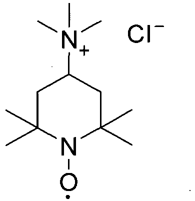

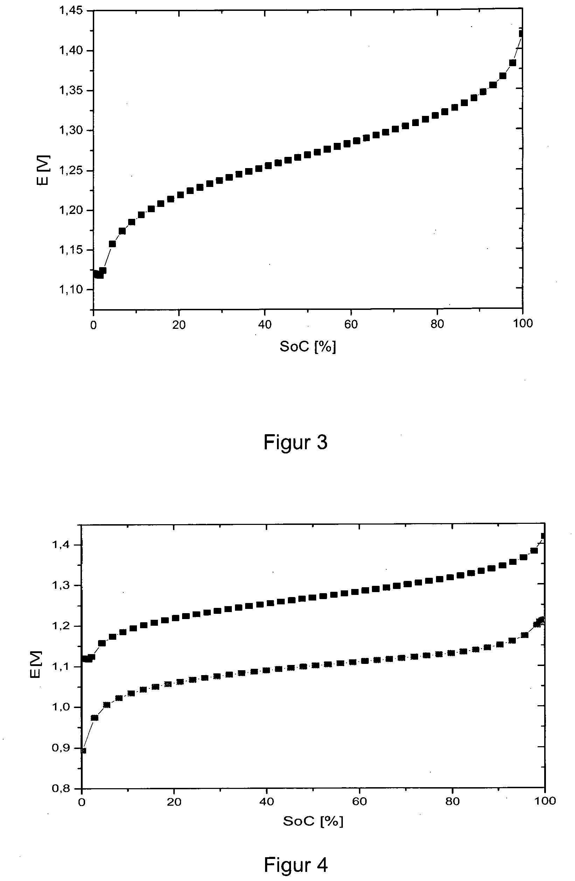

In Figur 3 ist die OCV-Kurve dieser Zelle in Abhängigkeit von deren Ladezustand aufgetragen.

In Figur 4 wird gezeigt, dass das erreichbare Potenzialniveau der Einzelzelle höher ist, wenn anstelle eines polymeren Redoxsystems ein aus kleinen Molekülen bestehendes Redoxsystem eingesetzt wird. In Figur 4 wird die OCV-Kurve einer Zelle dargestellt, die das oben beschriebene TEMPO-Ammoniumchlorid sowie Dimethylviologen mit Chlorid als Gegenion als redoxaktive Komponenten enthält (obere Kurve). Weiterhin dargestellt wird die OCV-Kurve einer Zelle, welche ein TEMPO- und ein Viologen-basiertes Polymer als redoxaktive Komponente enthält. Man erkennt, dass die Zellspannung des Systems mit den kleinen Molekülen um ca. 0,2 V erhöht ist; d.h. die Energiedichte des Systems kleiner Moleküle ist auch bei gleicher Konzentration um mehr als 15 % erhöht.

### Beispiel 3: Methylviologen-TEMPO-Redox-Flow-Batterie

Theoretisches Potenzial der Zelle:

| | |
|---|---|
| E⁰ MV-TEMPO²⁺/MV-TEMPO³⁺ | = 0,68 V |
| E⁰ MV-TEMPO²⁺/MV-TEMPO⁺ | = -0,46 V |
| → Zellspannung | = 1,14 V |

Es wurde eine Elektrolytlösung hergestellt aus 213 mg Methylviologen-TEMPO mit der nachfolgenden Struktur und 235 mg NaCl in 4 ml Wasser. Die Lösung wurde sowohl für die Arbeitselektrode (Plus-Pol der Batterie) als auch für die Gegenelektrode (Minus-Pol der Batterie) genutzt und in einer Redox-Flow-Zelle mit einer aktiven Fläche von 5 cm² getestet (analog Beispiel 1, Flüssigkeit wurde nicht gepumpt). Die Zelle wurde zyklisch geladen und entladen. Weiterhin wurde eine OCV-Kurve aufgenommen.

Struktur des Methylviologen-TEMPO:

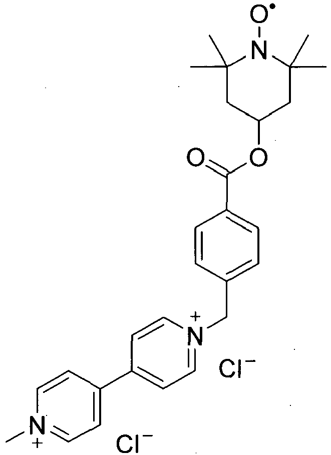

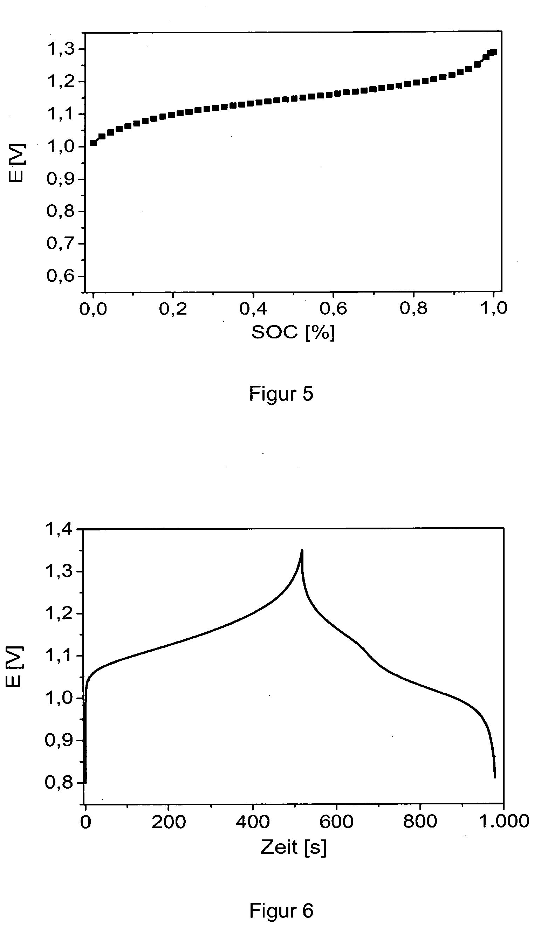

In Figur 5 ist die OCV-Kurve dieser Zelle in Abhängigkeit von deren Ladezustand (SOC) aufgetragen.

Figur 6 zeigt die Ladekurve dieser Zelle.

### Beispiel 4: Propanoatviologen-TEMPO-Redox-Flow-Batterie

Theoretisches Potenzial der Zelle:

| | |
|---|---|
| E⁰ MV-TEMPO²⁺/MV-TEMPO³⁺ | = 0,67 V |
| E⁰ MV-TEMPO²⁺/MV-TEMPO⁺ | = -0,49 V |
| → Zellspannung | = 1,16V |

Es wurde eine Elektrolytlösung hergestellt aus 110 mg Propanoatviologen-TEMPO mit der nachfolgenden Struktur und 117 mg NaCl in 2 ml Wasser. Die Lösung wurde sowohl für die Arbeitselektrode (Plus-Pol der Batterie) als auch für die Gegenelektrode (Minus-Pol der Batterie) genutzt und in einer Redox-Flow-Zelle mit einer aktiven Fläche von 5 cm² getestet (analog Beispiel 1, Flüssigkeit wurde nicht gepumpt). Die Zelle wurde zyklisch geladen und entladen. Weiterhin wurde eine OCV-Kurve aufgenommen.

Struktur des Propanoatviologen-TEMPO:

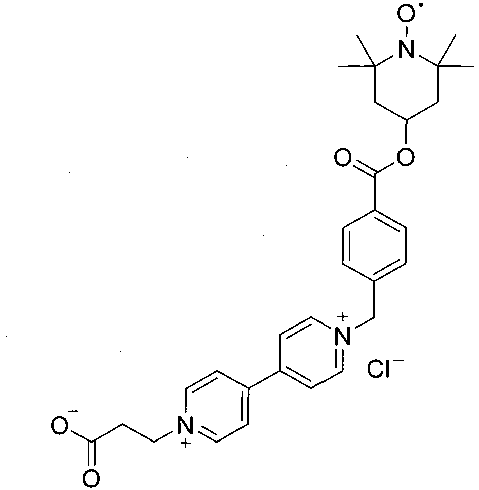

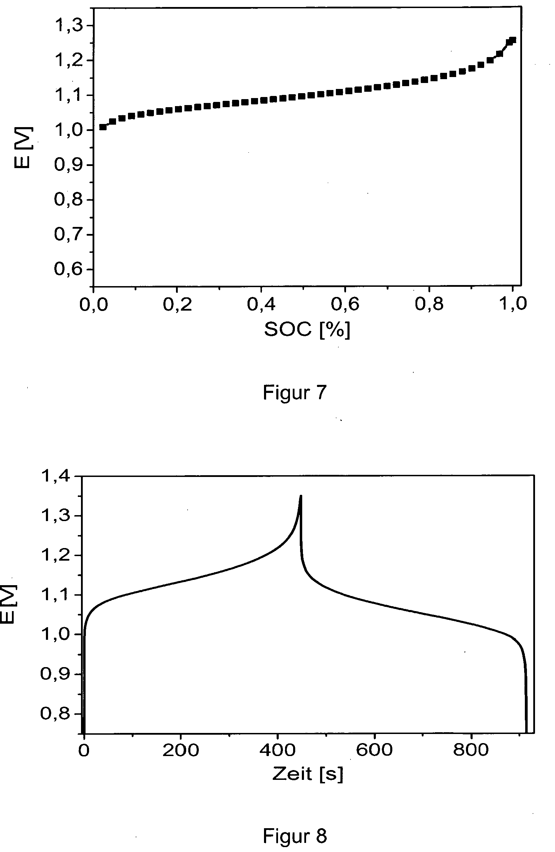

In Figur 7 ist die OCV-Kurve dieser Zelle in Abhängigkeit von deren Ladezustand (SOC) aufgetragen.

Figur 8 zeigt die Ladekurve dieser Zelle.

### Synthesebeispiele

### Beispiel 5: Synthese des TEMPO-Ammoniumchlorids

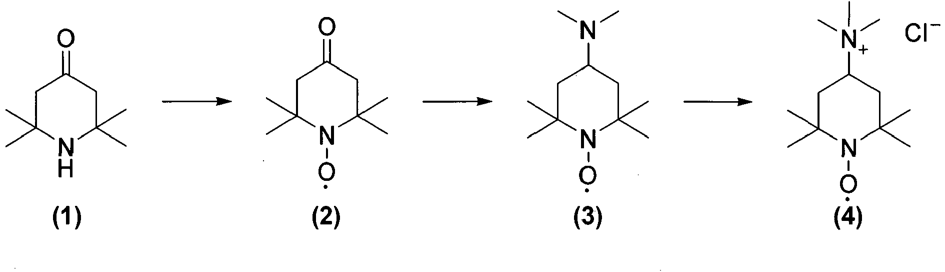

### 4-Oxo-2,2,6,6-tetramethylpiperidin-1-oxyl (2)

20 g 4-Oxo-2,2,6,6-tetramethylpiperidin **(1)**, 2 g Na₂WO₄×2 H₂O and 2 g Na₂H₂EDTA wurden in 133 ml Wasser bei Raumtemperatur gelöst. Es wurden 26,6 ml Wasserstoffperoxid (30%) unter Rühren hinzugegeben. Der Reaktionsfortschritt wurde mittels Gaschromatographie (GC) verfolgt und bis zum vollständigen Umsatz von **(1)** weitere 5 ml-Portionen Wasserstoffperoxid zugegeben. Die rote Reaktionslösung wurde vom grünen Niederschlag abgetrennt und mit 150 ml Wasser gewaschen. Die wässrige Phase wurde sieben Mal mit 50 ml Dichlormethan extrahiert und über Magnesiumsulfat getrocknet. Das Lösungsmittel wurde entfernt und das Produkt (Ausbeute 60%) im Vakuum getrocknet.

### 4-(Dimethylamino)-2,2,6,6-tetramethylpiperidin-1-oxyl (3)

2 g 4-Oxo-2,2,6,6-tetramethylpiperidin-*N*-oxyl **(2)** wurden in 20 ml trockenem Methanol gelöst und 7,3 g Dimethylaminhydrochlorid unter Argon-Schutzgasatmosphäre hinzugegeben. Unter Kühlung und Rühren wurde das Reaktionsgemisch mit 444 mg NaBH₃CN versetzt. Nach 48 Stunden wurde mit Natronlauge alkalisiert und mit 50 mL Dichlormethan drei Mal extrahiert. Die organische Phase wurde über Magnesiumsulfat getrocknet, das Lösungsmittel entfernt und das Rohprodukt im Vakuum getrocknet. Das erhaltene Rohprodukt wurde ohne weitere Aufreinigung im nächsten Schritt weiterverwendet.

### 1-Oxyl-N,N,N-2,2,6,6-heptamethylpiperidin-4-ammoniumchlorid (4, kurz: TEMPO-Ammoniumchlorid)

Das Rohprodukt 4-(Dimethylamino)-2,2,6,6-tetramethylpiperidin-1-oxyl **(3)** wurde vollständig in 20 ml Diethylether gelöst, Feststoffe durch Filtration entfernt und eine Lösung aus 1,42 g Methyliodid in 5 ml Diethylether hinzugegeben. Nachdem die Lösung 20 Stunden bei Raumtemperatur gerührt wurde, wurde der entstandene Niederschlag abgetrennt und mit 20 ml Diethylether gewaschen. Der Niederschlag wurde in 50 ml Wasser gelöst und ein lonenaustausch des Gegenions von lodid auf Chlorid an einem lonentauscherharz (Dowex Marathon A2, Chlorid-Form) vorgenommen. Die erhaltene Lösung wurde gefriergetrocknet und das Produkt als oranges Pulver (Ausbeute 89%) erhalten.

### Beispiel 6: Synthese des Methylviologen-TEMPO

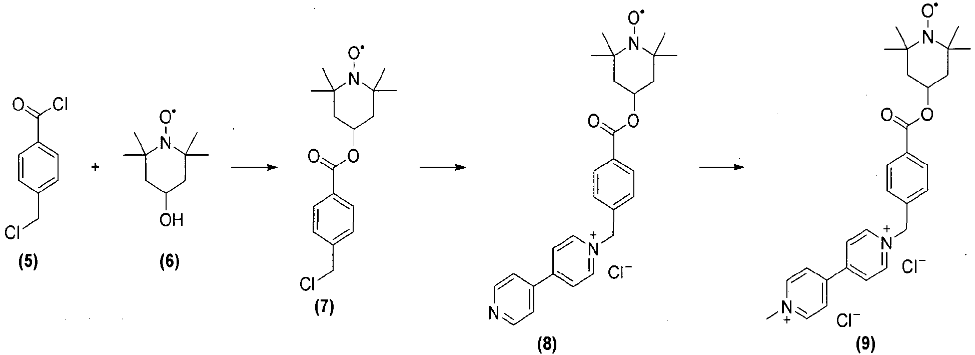

### 1-Oxyl-2,2,6,6-tetramethylpiperidin-4-yl-4-(chloromethyl)benzoat (7)

Zu einer Lösung von 5 g 4-Hydroxy-2,2,6,6-tetramethylpiperidin-*N*-oxyl **(6)** in 80 ml trockenem Chloroform und 8 ml trockenem Triethylamin wurden 4,3 mL 4-(Chlormethyl)benzoylchlorid (5) unter Rühren bei Raumtemperatur tropfenweise gegeben. Nach sechs Stunden wurde das Reaktionsgemisch auf eine Mischung aus 300 ml Eiswasser und 50 ml 5%-iger Bicarbonatlösung gegeben, verrührt und mit 200 ml Chloroform drei Mal extrahiert. Die organische Phase wurde mit 200 ml Wasser gewaschen, über Magnesiumsulfat getrocknet und das Lösungsmittel im Vakuum entfernt. Nach Trocknung im Vakuum wurde das Rohprodukt als oranges Pulver (Ausbeute 95%) erhalten. Das erhaltene Rohprodukt wurde ohne weitere Aufreinigung im nächsten Schritt weiterverwendet.

### 1-(4-(((1-Oxyl-2,2,6,6-tetramethylpiperidin-4-yl)oxy)carbonyl)benzyl)-[4,4'-bipyridin]-1-ium-chlorid (8)

Zu 4,5 g des Rohproduktes von 1-Oxyl-2,2,6,6-tetramethylpiperidin-4-yl-4-(chloromethyl)benzoat **(7)** und 2,2 g 4,4'-Bipyridin wurden 80 ml Acetonitril gegeben und die Lösung bei 80 °C für 72 Stunden gerührt. Das Reaktionsgemisch wurde in 450 ml kalten Essigester gefällt, der entstandene Niederschlag abgetrennt und im Vakuum getrocknet. Das Produkt wurde als orangefarbener Feststoff (Ausbeute 78%) erhalten.

### 1-(4-(((1-Oxyl-2,2,6,6-tetramethylpiperidin-4-yl)oxy)carbonyl)benzyl)-1'-methyl-[4,4'-bipyridin]-1,1'-diium-chlorid (9, kurz: Methylviologen-TEMPO)

Variante A: Zu einer Lösung von 2 g 1-(4-(((1-Oxyl-2,2,6,6-tetramethylpiperidin-4-yl)oxy)carbonyl)benzyl)-[4,4'-bipyridin]-1-ium-chlorid **(8)** in 8 ml Wasser wurde in einem Druckreaktor Chlormethan (Druck 2 bar) gegeben. Die Reaktionslösung wurde 35 Stunden bei 95 °C gerührt und das Produkt als Feststoff (Ausbeute 95%) durch Gefriertrocknung erhalten.

Variante B: Zu einer Lösung von 0,5 g 1-(4-(((1-Oxyl-2,2,6,6-tetramethylpiperidin-4-yl)oxy)carbonyl)benzyl)-[4,4'-bipyridin]-1-ium-chlorid **(8)** in 12 ml DMSO wurde 0,14 ml Methyliodid gegeben. Das Reaktionsgemisch wurde 6 Stunden bei 60 °C gerührt und anschließend in 150 ml Essigester gefällt. Der Niederschlag wurde in Wasser gelöst und der lonenaustausch des Gegenions von lodid auf Chlorid an einem lonentauscherharz (Dowex Marathon A2, Chlorid-Form) vorgenommen. Die erhaltene Lösung wurde gefriergetrocknet und das Produkt als oranges Pulver (Ausbeute 82%) erhalten.

### Beispiel 7: Synthese des Propanoatviologen-TEMPO

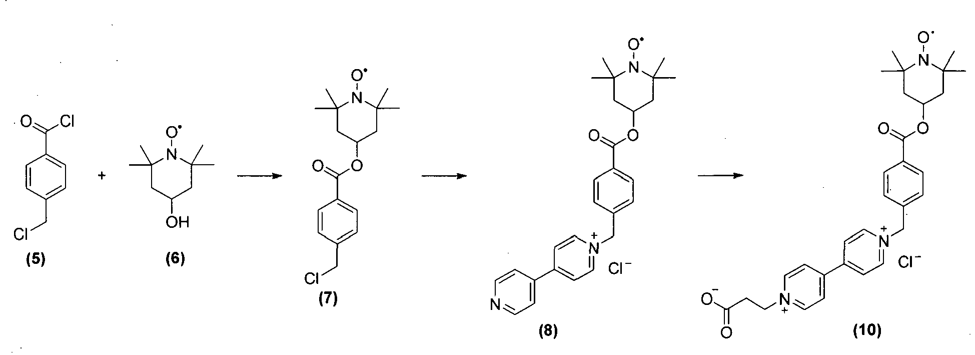

### 3-(1'-(4-(((1-Oxyl-2,2,6,6-tetramethylpiperidin-4-yl)oxy)carbonyl)benzyl)-[4,4'-bipyridin]-1,1'-diium-1-yl)propanoat-chlorid (10, kurz: Propanoatviologen-TEMPO)

Zu 2 g 1-(4-(((1-Oxyl-2,2,6,6-tetramethylpiperidin-4-yl)oxy)carbonyl)benzyl)-[4,4'-bipyridin]-1-ium-chlorid **(8)** in 10 ml Acetonitril wurden unter Rühren 3 ml Acrylsäure gegeben. Die Lösung wurde bei 60 °C für 30 Minuten gerührt, abgekühlt und in kaltem Essigester gefällt. Der Niederschlag wurde abgetrennt, im Vakuum getrocknet und das Zielprodukt als Pulver (Ausbeute 56%) erhalten.

### Beispiel 8: Synthese mehrfachfunktionalisierter Viologene

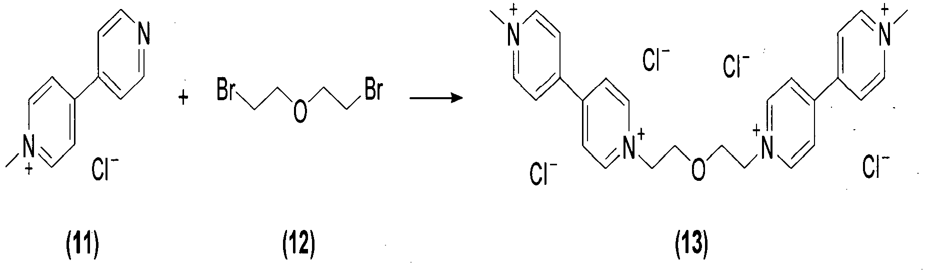

### 1-Methyl-[4,4'-bipyridin]-1-ium-chlorid (11)

In einem Druckreaktor wurden 100 g 4,4'-Bipyridin in 200 ml Acetonitril und 200 ml Toluol vorgelegt. Nach Zugabe von 32,4 g Chlormethan wurde die Lösung bei 70 °C gerührt 26 Stunden gerührt. Das Lösungsmittel wurde im Vakuum entfernt und das Produkt (Ausbeute 98%) als graues Pulver erhalten.

### 1',1'"-(Oxybis(ethan-2,1-diyl))bis(1-methy)-[4,4'-bipyridin]-1,1'-diium)chlorid (13)

Zu 0,2 g 1-Methyl-[4,4'-bipyridin]-1-ium-chlorid **(11)** wurden 61 µl 1-Brom-2-(2-bromethoxy)ethan **(12)**, 18 mg Tetrabutylammoniumiodid und 2 ml DMSO gegeben. Das Reaktionsgemisch wurde bei 110 °C für 3 Tage gerührt, abgekühlt und in kaltem Essigester gefällt. Der Niederschlag wurde in Wasser gelöst und ein lonenaustausch des Gegenions von lodid auf Chlorid an einem lonentauscherharz (Dowex Marathon A2, Chlorid-Form) vorgenommen. Die erhaltene Lösung wurde gefriergetrocknet und das Produkt als oranges Pulver (Ausbeute 73%) erhalten.

### Analytische Daten zu den Zielprodukten aus Beispielen 5 bis 8

¹H NMR-Spektren wurden auf einem Bruker Fourier 300 (300 MHz) aufgenommen. TEMPO-Radikale wurde mit Phenylhydrazin oder Hydrazinhydrat reduziert, sodass keine paramagnetischen Spezies, welche die Messungen beeinträchtigen können, vorlagen.

Die Cyclovoltammogramme wurden in einem 3-Elektroden-Setup vermessen, wobei eine Glaskohlenstoff-Scheibenelektrode als Arbeitselektrode, ein Platindraht als Gegenelektrode und eine Silber/Silberchlorid-Elektrode als Referenz dienten. Als Elektrolyt kamen wässrige Natriumchloridlösungen (0,1 mol/l) zum Einsatz.

### 1-Oxyl-N,N,N-2,2,6,6-heptamethylpiperidin-4-aminiumchlorid (4, kurz: TEMPO-Ammoniumchlorid)

¹H NMR (DMSO, 300 MHz) δ: 3,73 (1H, m); 3,02 (9H, s); 1,99 (2H, m); 1,55 (2H, m); 1,09 (12H, d).

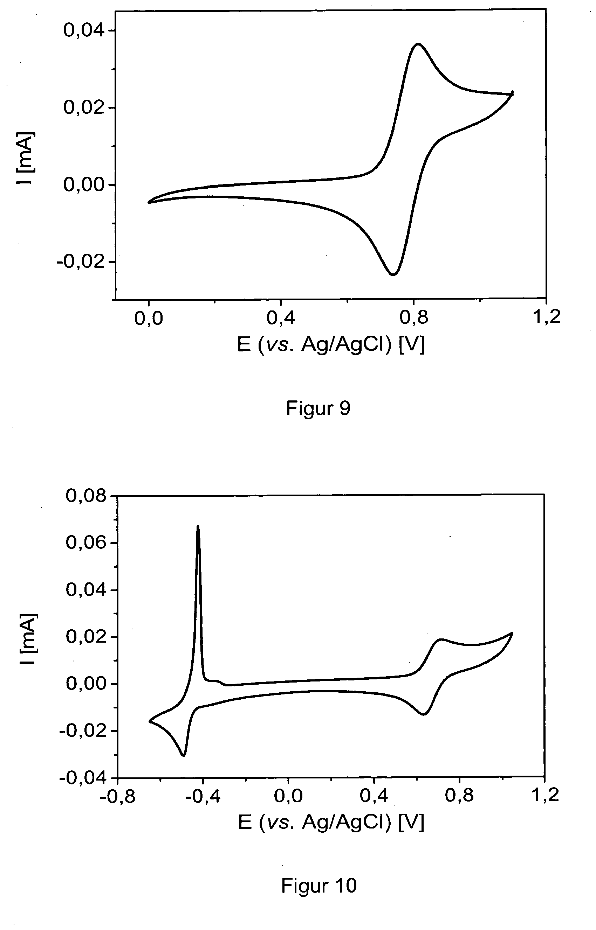

Figur 9 zeigt ein Cyclovoltammogramm des Stoffes in wässriger Natriumchloridlösung (0,1 mol/l), gemessen gegen eine Silber/Silberchlorid-Referenzelektrode.

### 1-(4-(((1-Oxyl-2,2,6,6-tetramethylpiperidin-4-yl)oxy)carbonyl)benzyl)-1'-methyl-[4,4'-bipyridine]-1,1'-diium-chlorid (9, kurz: Methylviologen-TEMPO)

¹H NMR (D₂O, 300 MHz) δ: 9,09 (2H, d); 8,94 (2H, d); 8,44 (4H, m); 8,01 (2H, d); 7,52 (2H, d); 5,93 (2H, s); 5,28 (1H, m); 4,40 (3H, s); 2,13 (2H, m); 1,82 (2H, m); 1,24 (12H, s).

Figur 10 zeigt ein Cyclovoltammogramm des Stoffes in wässriger Natriumchloridlösung (0,1 mol/l), gemessen gegen eine Silber/Silberchlorid-Referenzelektrode.

### 3-(1'-(4-(((1-Oxyl-2,2,6,6-tetramethylpiperidin-4-yl)oxy)carbonyl)benzyl)-[4,4'-bipyridin]-1,1'-diium-1-yl)propanoat-chlorid (10, kurz: Propanoatviologen-TEMPO)

¹H NMR (D₂O, 300 MHz) δ: 9,05 (4H, m); 8,43 (4H, m); 8,02 (2H, d); 7,51 (2H, d); 5,92 (2H, s); 5,31 (1H, m); 4,81 (2H, t); 2,87 (2H, t); 2,16 (2H, m); 1,84 (2H, m); 1,26 (12H, d).

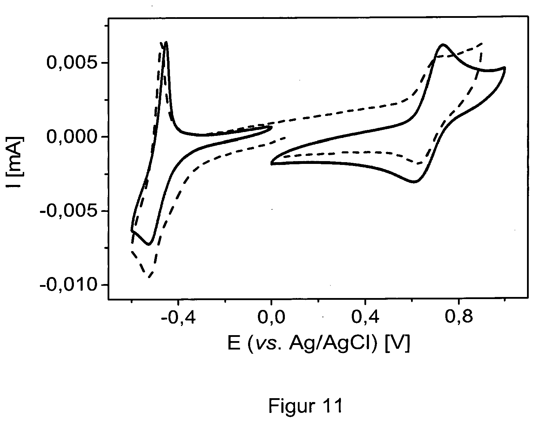

Figur 11 zeigt ein Cyclovoltammogramm des Stoffes in wässriger Natriumchloridlösung (0,1 mol/l), gemessen gegen eine Silber/Silberchlorid-Referenzelektrode. Die durchgezogenen Linien stellen hierbei die Einzelmessung des anodischen bzw. kathodischen Bereichs dar, während die gestrichelte Linie eine Messung über den Gesamtbereich darstellt.

### 1',1 "'-(Oxybis(ethan-2,1-diyl))bis(1-methyl-[4,4'-bipyridin]-1,1'-diium)chlorid (13)

¹H NMR (DMSO, 300 MHz) δ: 9,09 (4H, m); 8,99 (4H, m); 8,50 (8H, m); 4,88 (4H, m); 4,45 (6H, s); 4,06 (4H, m).

## Patentansprüche

1. Redox-Flow-Zelle zur Speicherung elektrischer Energie enthaltend eine Reaktionszelle mit zwei Elektrodenkammern für Katholyt und Anolyt, die jeweils mit mindestens einem Flüssigkeitsspeicher in Verbindung stehen, die durch eine ionenleitende Membran getrennt sind, und die mit Elektroden ausgerüstet sind, wobei die Elektrodenkammern jeweils mit Elektrolytlösungen gefüllt sind, die redoxaktive Komponenten gelöst oder dispergiert in einem Elektrolytlösungsmittel enthalten, sowie gegebenenfalls darin gelöste Leitsalze und eventuell weitere Additive, **dadurch gekennzeichnet, dass** der Anolyt eine redoxaktive Komponente enthält, die ein bis sechs Reste der Formel I im Molekül enthält oder die ein bis sechs Reste der Formel II im Molekül enthält und dass der Katholyt eine redoxaktive Komponente enthält, die ein bis sechs Reste der Formel III im Molekül enthält oder die Eisensalze enthält oder dass Anolyt und Katholyt eine redoxaktive Komponente enthalten, die ein bis sechs Reste der Formel I oder der Formel II in Kombination mit ein bis sechs Resten der Formel III im Molekül enthält 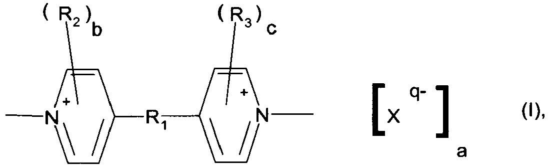 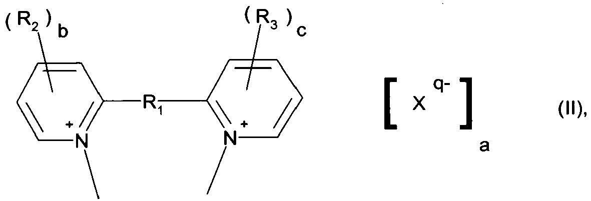 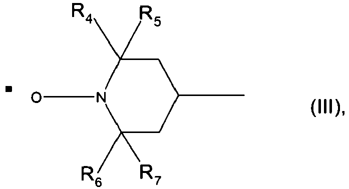 worin die von den Stickstoffatomen in den Strukturen der Formeln I und II abgehenden Linien und die von der 4-Position in der Struktur der Formel III abgehende Linie kovalente Bindungen darstellen, welche die Strukturen der Formeln I, II und III mit dem Rest des Moleküls verbinden,
R₁ eine kovalente C-C-Bindung ist oder eine zweiwertige Brückengruppe,
R₂ und R₃ unabhängig voneinander Alkyl, Alkoxy, Haloalkyl, Cycloalkyl, Aryl, Aralkyl, Heterocyclyl, Halogen, Hydroxy, Amino, Nitro oder Cyano bedeuten,
X ein q-wertiges anorganisches oder organisches Anion oder eine Mischung derartiger Anionen bedeutet,
b und c unabhängig voneinander ganze Zahlen von 0 bis 4 sind,
q eine ganze Zahl von 1 bis 3 ist,
a eine Zahl mit dem Wert 2/q ist, und
R₄, R₅, R₆ und R₇ unabhängig voneinander Alkyl, Cycloalkyl, Aryl oder Aralkyl bedeuten.

2. Redox-Flow-Zelle nach Anspruch 1, **dadurch gekennzeichnet, dass** im Anolyt eine Verbindung der Formeln Ib, IIb, IV, V, VII, VIIa, VIIb VIII, VIIIa, VIIIb, IX, IXa, IXb, X, Xa, Xb, XI, XIa, XIb, XII, XIIa und/oder XIIb als redoxaktive Komponente eingesetzt wird 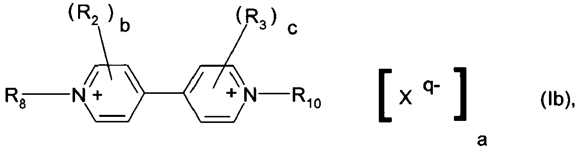 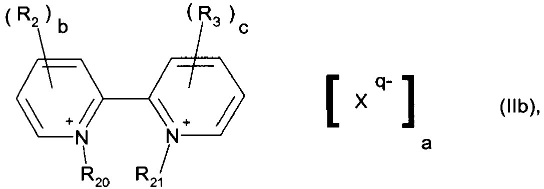 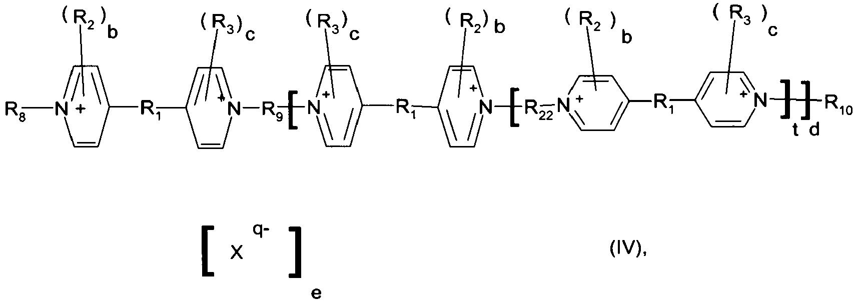 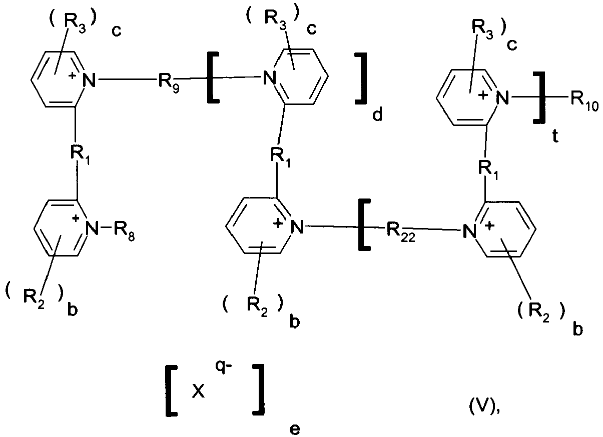 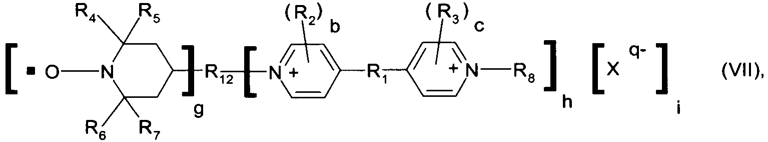 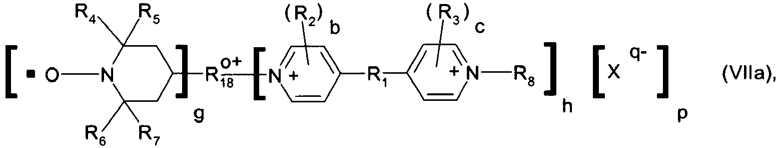 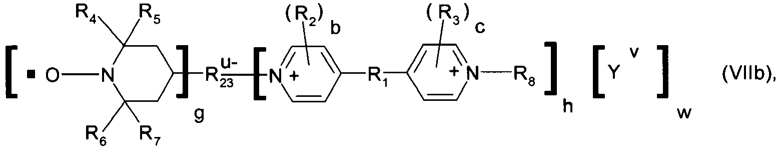 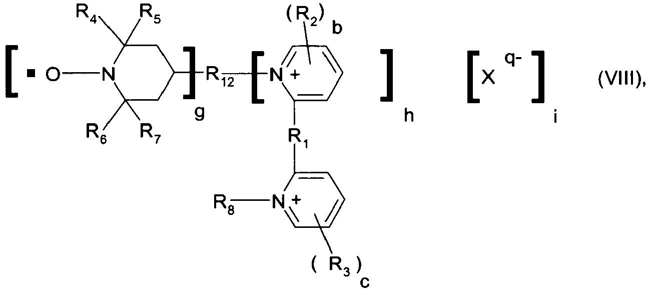 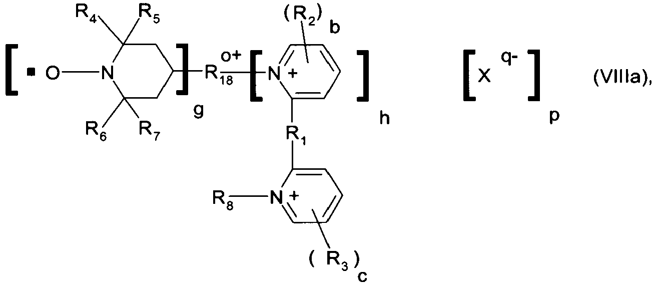 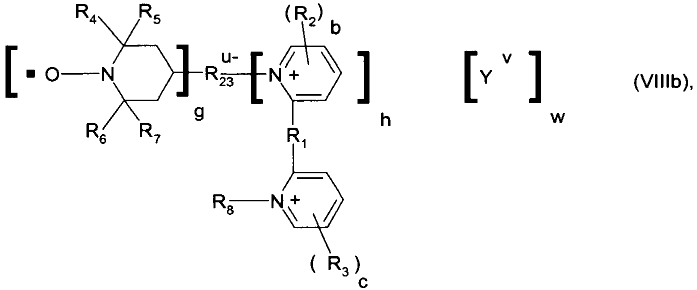 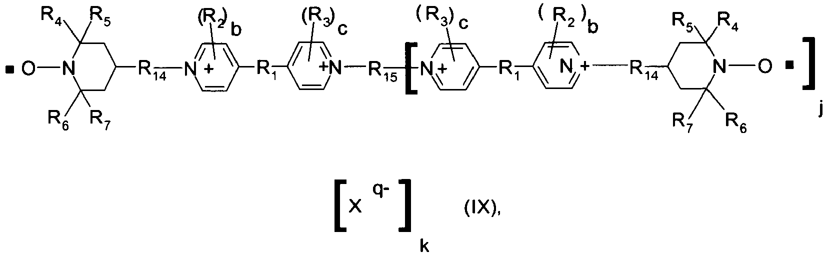 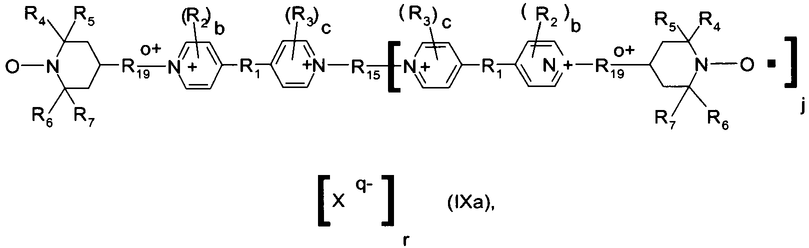 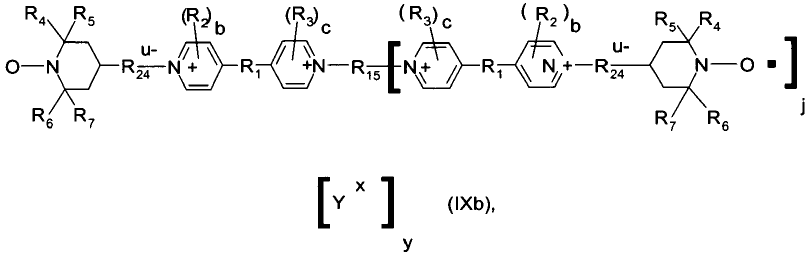 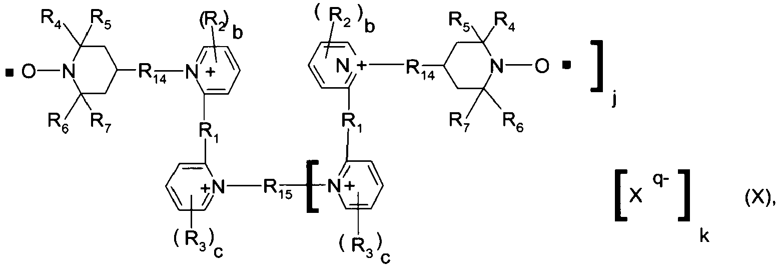 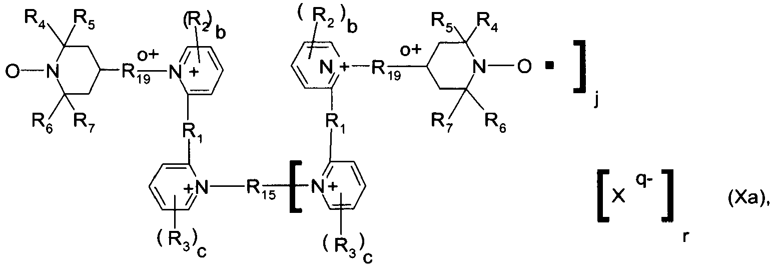 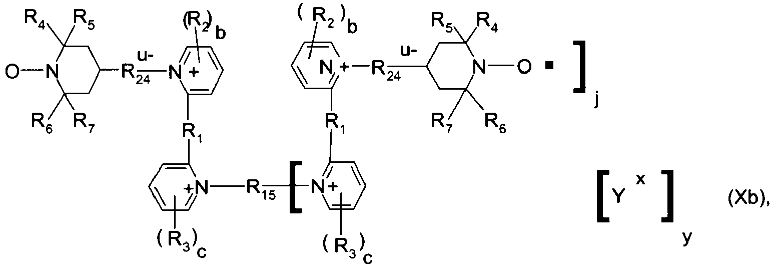 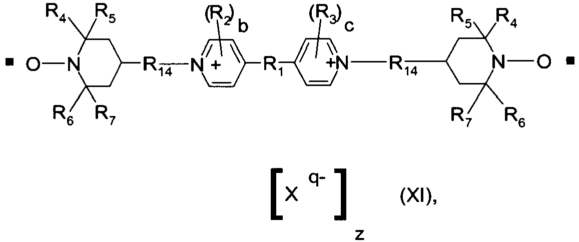 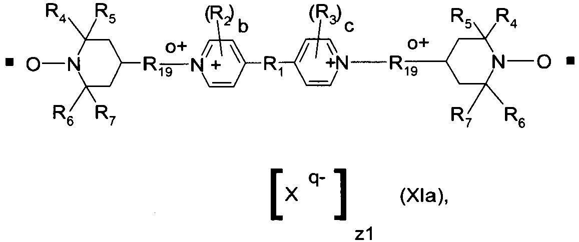 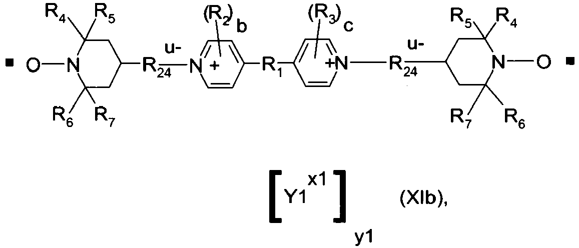 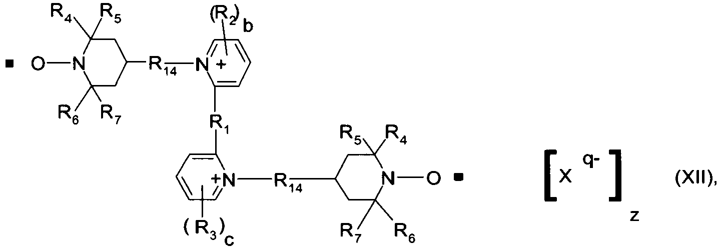 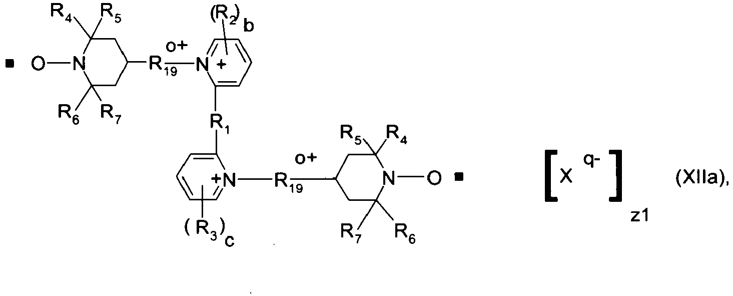 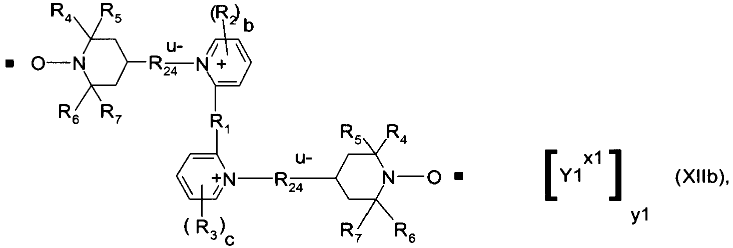 worin
R₁, R₂, R₃, R₄, R₅, R₆, R₇ und X die in Anspruch 1 definierte Bedeutung besitzen, R₈ und R₁₀ unabhängig voneinander Wasserstoff, gegebenenfalls mit einer Carbonsäureester-, Carbonsäureamid-, Carbonsäure-, Sulfonsäure- oder Aminogruppe substituiertes Alkyl, gegebenenfalls mit einer Carbonsäureester-, Carbonsäureamid-, Carbonsäure-, Sulfonsäure- oder Aminogruppe substituiertes Cycloalkyl, gegebenenfalls mit einer Carbonsäureester-, Carbonsäureamid-, Carbonsäure-, Sulfonsäure- oder Aminogruppe substituiertes Aryl oder gegebenenfalls mit einer Carbonsäureester-, Carbonsäureamid-, Carbonsäure-, Sulfonsäure- oder Aminogruppe substituiertes Aralkyl bedeuten, insbesondere C₁-C₆-Alkyl, mit einer Carbonsäureestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl, oder mit einer Aminogruppe substituiertes C₁-C₆-Alkyl, und ganz besonders bevorzugt Wasserstoff, Propionat, Isobutionat, Ethyl oder Methyl,
Rg eine zwei- bis sechswertige, insbesondere zwei- bis vierwertige organische Brückengruppe ist,
R₁₂ eine kovalente Bindung ist oder eine zwei- bis sechswertige, insbesondere zwei- bis vierwertige organische Brückengruppe ist,
R₁₄ eine kovalente Bindung ist oder eine zweiwertige organische Brückengruppe ist,
R₁₅ eine zwei- bis sechswertige, insbesondere zwei- bis vierwertige organische Brückengruppe ist,
R₁₈ ein o-fach positiv geladener zwei- bis sechswertiger, insbesondere zwei- bis vierwertiger organischer Rest ist, der mit dem Stickstoffatom des Bipyridylrests über ein Kohlenstoffatom kovalent verbunden ist, insbesondere ein zwei- bis vierwertiger quaternärer Ammoniumrest, ein zwei- bis vierwertiger quaternärer Phosphoniumrest, ein zwei- bis dreiwertiger ternärer Sulfoniumrest oder ein o-fach positiv geladener zwei- bis sechswertiger, insbesondere zwei- bis vierwertiger heterocyclischer Rest,
R₁₉ ein o-fach, vorzugsweise einfach positiv geladener zweiwertiger organischer Rest ist, der mit dem Stickstoffatom des Bipyridylrests über ein Kohlenstoffatom kovalent verbunden ist, insbesondere ein quaternärer Ammoniumrest, ein quaternärer Phosphoniumrest, ein ternärer Sulfoniumrest oder ein o-fach, vorzugsweise einfach positiv geladener zweiwertiger heterocyclischer Rest ist, R₂₀ und R₂₁ unabhängig voneinander Wasserstoff, gegebenenfalls mit einer Carbonsäureester-, Carbonsäureamid-, Carbonsäure-, Sulfonsäure- oder Aminogruppe substituiertes Alkyl, gegebenenfalls mit einer Carbonsäureester-, Carbonsäureamid-, Carbonsäure-, Sulfonsäure- oder Aminogruppe substituiertes Cycloalkyl, gegebenenfalls mit einer Carbonsäureester-, Carbonsäureamid-, Carbonsäure-, Sulfonsäure- oder Aminogruppe substituiertes Aryl oder gegebenenfalls mit einer Carbonsäureester-, Carbonsäureamid-, Carbonsäure-, Sulfonsäure- oder Aminogruppe substituiertes Aralkyl bedeuten oder zwei Reste R₂₀ und R₂₁ zusammen eine C₁-C₃-Alkylengruppe bilden, insbesondere C₁-C₆-Alkyl, mit einer Carbonsäureestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl, oder mit einer Aminogruppe substituiertes C₁-C₆-Alkyl sind oder zusammen Ethylen bedeuten, und ganz besonders bevorzugt Wasserstoff, Propionat, Isobutionat, Ethyl oder Methyl oder zusammen Ethylen bedeuten,
R₂₂ eine zweiwertige organische Brückengruppe ist,
R₂₃ ein u-fach negativ geladener zwei- bis sechswertiger, insbesondere zwei- bis vierwertiger organischer Rest ist, der mit dem Stickstoffatom des Bipyridylrests über ein Kohlenstoffatom kovalent verbunden ist, insbesondere ein mit ein oder zwei Carboxyl- oder Sulfonsäuregruppen substituierter Alkylenrest, ein mit ein oder zwei Carboxyl- oder Sulfonsäuregruppen substituierter Phenylenrest oder ein mit ein oder zwei Carboxyl- oder Sulfonsäuregruppen substituierter zweiwertiger heterocyclischer Rest ist,
R₂₄ ein u-fach, vorzugsweise einfach negativ geladener zweiwertiger organischer Rest ist, der mit dem Stickstoffatom des Bipyridylrests über ein Kohlenstoffatom kovalent verbunden ist, insbesondere ein mit einer Carboxyl- oder Sulfonsäuregruppe substituierter Alkylenrest, ein mit einer Carboxyl- oder Sulfonsäuregruppe substituierter Phenylenrest oder ein mit einer Carboxyl- oder Sulfonsäuregruppe substituierter zweiwertiger heterocyclischer Rest ist,
a, b, c und q die in Anspruch 1 definierte Bedeutung besitzen,
d eine ganze Zahl von 1 bis 5, vorzugsweise von 1 bis 3 ist,
e eine Zahl mit dem Wert (2 + 2d + 2t) / q ist,
g eine ganze Zahl von 1 bis 5, vorzugsweise von 1 bis 3 ist
h eine ganze Zahl von 1 bis 5, vorzugsweise von 1 bis 3 ist,
wobei die Summe von g und h eine ganze Zahl von 2 bis 6, vorzugsweise von 2 bis 4 ist,
i eine Zahl mit dem Wert 2h / q ist,
j eine ganze Zahl von 1 bis 5, vorzugsweise von 1 bis 3 ist,
k eine Zahl mit dem Wert von (2 + 2j) / q ist,
o eine ganze Zahl von 1 bis 4 ist,
p eine Zahl mit dem Wert (o + 2h) / q ist,
r eine Zahl mit dem Wert (3 + 3j) / q ist,
t 0 ist oder, falls Rg eine zweiwertige organische Brückengruppe ist, 0 oder 1 bedeutet,
u eine ganze Zahl von 1 bis 4 ist,
z eine Zahl mit dem Wert 2 / q ist,
z1 eine Zahl mit dem Wert (o+2) / q ist
Y für den Fall, dass 2h - u oder 2 (2 - u) - u größer als 0 ist, ein v- oder x-wertiges anorganisches oder organisches Anion oder eine Mischung derartiger Anionen bedeutet, oder für den Fall, dass 2h - u oder 2 (2 - u) - u kleiner als 0 ist, ein v- oder x-wertiges anorganisches oder organisches Kation oder eine Mischung derartiger Kationen bedeutet,
v eine ganze Zahl von -1 bis -3 oder von +1 bis +3 ist,
x eine ganze Zahl von -1 bis -3 oder von +1 bis +3 ist,
w 0 oder eine positive Zahl mit dem Wert (-u + 2h) / v ist,
y 0 oder eine positive Zahl mit dem Wert (2 - u) (j + 1) / x ist,
Y1 für den Fall, dass 2 - 2u kleiner als 0 ist, ein x1-wertiges anorganisches oder organisches Kation oder eine Mischung derartiger Kationen bedeutet,
x1 eine ganze Zahl von -1 bis -3 oder von +1 bis +3 ist, und
y1 0 oder eine positive Zahl mit dem Wert (2 - 2u) / x1 ist.

3. Redox-Flow-Zelle nach Anspruch 2, **dadurch gekennzeichnet, dass** im Anolyt eine Verbindung der Formeln IVa, Va, VIIc, VIIIc, IXc und/oder Xc als redoxaktive Komponente eingesetzt wird 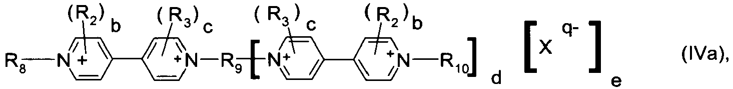 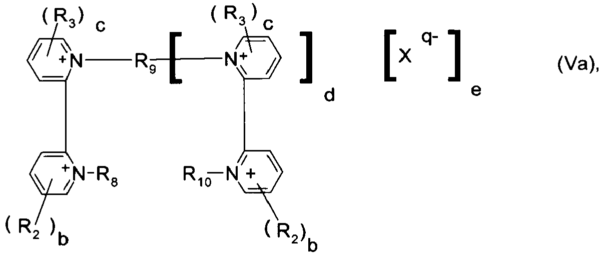 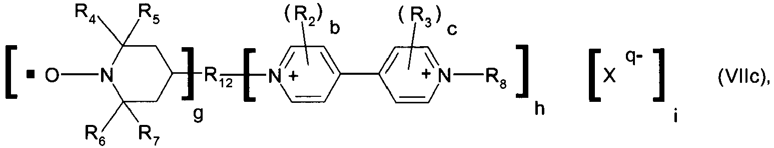 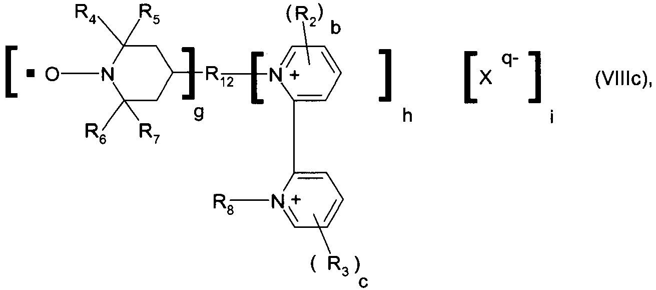 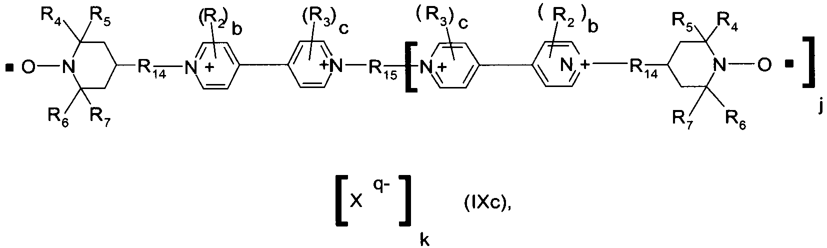 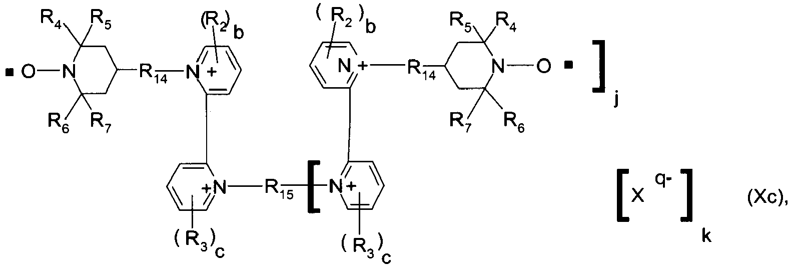 worin
R₂, R₃, R₄, R₅, R₆, R₇ und X die in Anspruch 1 definierte Bedeutung besitzen,
R₈, R₉, R₁₀, R₁₂, R₁₄ und R₁₅ die in Anspruch 2 definierte Bedeutung besitzen,
b, c und q die in Anspruch 1 definierte Bedeutung besitzen,
und
d, e, g, h, i, j und k die in Anspruch 2 definierte Bedeutung besitzen.

4. Redox-Flow-Zelle nach Anspruch 1, **dadurch gekennzeichnet, dass** im Katholyt eine Verbindung der Formeln IIIa, IIIb, IIIc, VI, VIa und/oder VIb oder der in Anspruch 2 definierten Formeln VII, VIIa, VIIb, VIII, VIIIa, VIIIb, IX, IXa, IXb, X, Xa und/oder Xb als redoxaktive Komponente eingesetzt wird 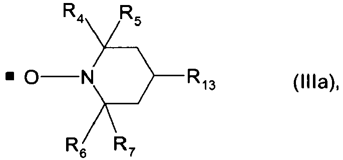 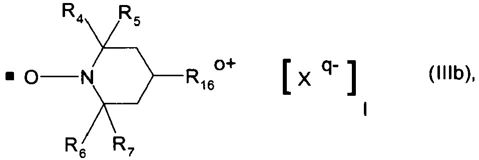 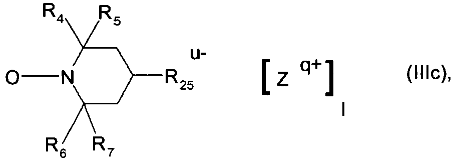 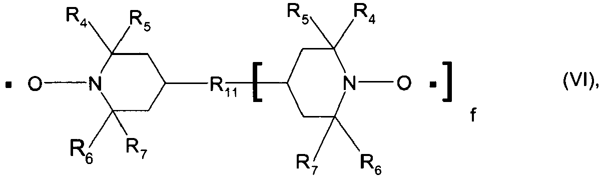 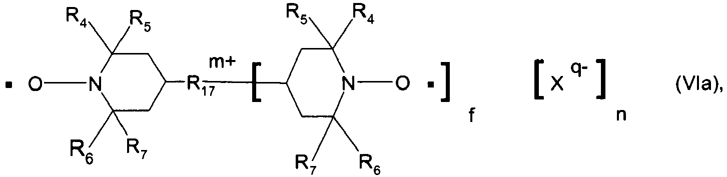 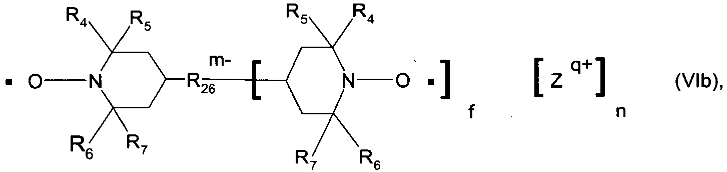 worin
R₄, R₅, R₆, R₇, X und q die in Anspruch 1 definierte Bedeutung besitzen,
o und u die in Anspruch 2 definierte Bedeutung besitzen,
R₁₁ eine zwei- bis vierwertige organische Brückengruppe ist,
R₁₃ Wasserstoff, Alkyl, Alkoxy, Haloalkyl, Cycloalkyl, Aryl, Aralkyl, Heterocyclyl, Halogen, Hydroxy, Amino, Nitro oder Cyano ist, und
R₁₆ ein o-fach, vorzugsweise ein einfach positiv geladener einwertiger organischer Rest, insbesondere ein quaternärer Ammoniumrest, ein quaternärer Phosphoniumrest, ein ternärer Sulfoniumrest oder ein o-fach, vorzugsweise ein einfach positiv geladener einwertiger heterocyclischer Rest ist,
R₁₇ ein m-fach positiv geladener zwei- bis vierwertiger organischer Rest, insbesondere zwei- bis vierwertiger quaternärer Ammoniumrest, ein zwei- bis vierwertiger quaternärer Phosphoniumrest, ein zwei- bis vierwertiger ternärer Sulfoniumrest oder ein m-fach positiv geladener zwei- bis vierwertiger heterocyclischer Rest ist,
R₂₅ ein u-fach, vorzugsweise ein einfach negativ geladener einwertiger Rest, insbesondere ein Carboxyl- oder Sulfonsäurerest oder ein u-fach, vorzugsweise ein einfach negativ geladener einwertiger heterocyclischer Rest ist,
R₂₆ ein m-fach negativ geladener zwei- bis vierwertiger organischer Rest, insbesondere ein mit ein oder zwei Carboxyl- oder Sulfonsäuregruppen substituierter Alkylenrest, oder ein mit ein oder zwei Carboxyl- oder Sulfonsäuregruppen substituierter Phenylenrest oder ein mit ein oder zwei Carboxyl- oder Sulfonsäuregruppen substituierter zweiwertiger heterocyclischer Rest ist,
Z ein q-wertiges anorganisches oder organisches Kation oder eine Mischung derartiger Kationen bedeutet,
f eine ganze Zahl von 1 bis 3 ist,
l eine Zahl mit dem Wert o / q oder u / q ist,
m eine ganze Zahl von 1 bis 4 ist, und
n eine Zahl mit dem Wert m/q bedeutet.

5. Redox-Flow-Zelle nach einem der Ansprüche 3 oder 4, **dadurch gekennzeichnet, dass** im Katholyt eine Verbindung der in Anspruch 3 oder 4 definierten Formeln VI, VIa, VIIc, VIIIc, IXc und/oder Xc als redoxaktive Verbindung eingesetzt wird.

6. Redox-Flow-Zelle nach Anspruch 1, **dadurch gekennzeichnet, dass** eine Verbindung der Formeln Ib, IIb, VIId, VIIe, VIIId und/oder VIIIe als redoxaktive Verbindung eingesetzt wird 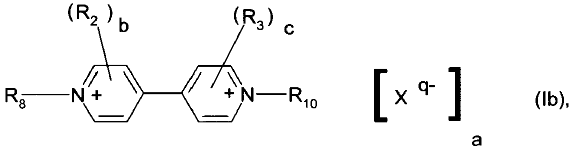 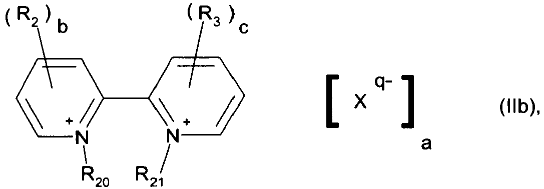 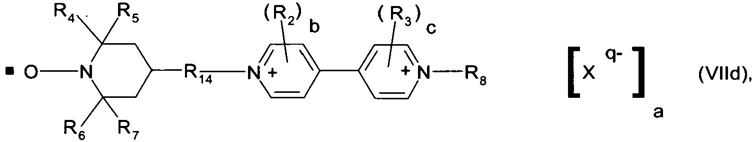 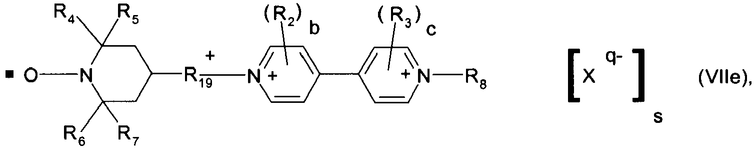 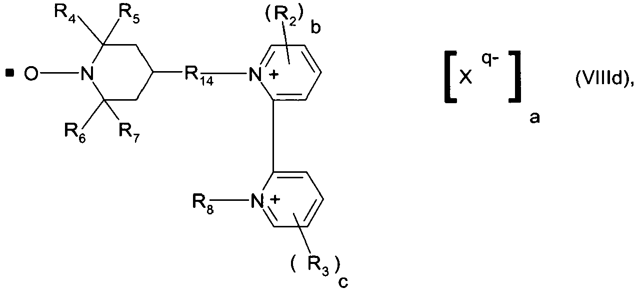 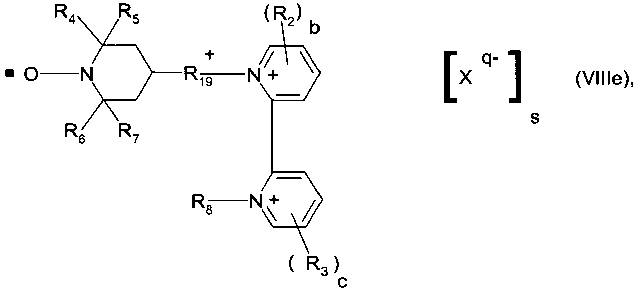 worin
R₂, R₃, R₄, R₅, R₆, R₇ und X die in Anspruch 1 definierte Bedeutung besitzen,
R₈, R₁₀, R₁₄ und R₁₉ die in Anspruch 2 definierte Bedeutung besitzen,
R₂₀ und R₂₁ unabhängig voneinander Wasserstoff, gegebenenfalls mit einer Carbonsäureester-, Carbonsäureamid-, Carbonsäure-, Sulfonsäure- oder Aminogruppe substituiertes Alkyl, gegebenenfalls mit einer Carbonsäureester-, Carbonsäureamid-, Carbonsäure-, Sulfonsäure- oder Aminogruppe substituiertes Cycloalkyl, gegebenenfalls mit einer Carbonsäureester-, Carbonsäureamid-, Carbonsäure-, Sulfonsäure- oder Aminogruppe substituiertes Aryl oder gegebenenfalls mit einer Carbonsäureester-, Carbonsäureamid-, Carbonsäure-, Sulfonsäure- oder Aminogruppe substituiertes Aralkyl bedeuten oder zwei Reste R₂₀ und R₂₁ zusammen eine C₁-C₃-Alkylengruppe bilden, insbesondere C₁-C₆-Alkyl, mit einer Carbonsäureestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl, oder mit einer Aminogruppe substituiertes C₁-C₆-Alkyl sind oder zusammen Ethylen bedeuten, und ganz besonders bevorzugt Wasserstoff, Propionat, Isobutionat, Ethyl oder Methyl oder zusammen Ethylen bedeuten,
a, b, c und q die in Anspruch 1 definierte Bedeutung besitzen,
s eine Zahl mit dem Wert 3 / q ist, und
wobei die Verbindungen der Formeln Ib, IIb, VIId, VIIe, VIIId und/oder VIIIe im Anolyten eingesetzt werden und die Verbindungen der Formeln VIIc, VIId, VIIIc und/oder Vllld im Katholyten eingesetzt werden.

7. Redox-Flow-Zelle nach Anspruch 1, **dadurch gekennzeichnet, dass** der Katholyt Verbindungen der Formeln IIIa, IIIb oder IIIc gemäß Anspruch 4 und der Anolyt Verbindungen der Formeln Ib oder IIb gemäß Anspruch 2 enthält.

8. Redox-Flow-Zelle nach Anspruch 7, **dadurch gekennzeichnet, dass** der Katholyt eine Verbindung der Formel IIIb und der Anolyt eine Verbindung der Formel Ib enthält.

9. Redox-Flow-Zelle nach Anspruch 8, **dadurch gekennzeichnet dass** die Verbindung der Formel IIIb ein Salz des 2,2,6,6-Tetramethylpiperidin-4-(N,N,N-trialkylammoniums) ist und dass die Verbindung der Formel Ib ein Salz des N, N'-Dialkylviologens ist.

10. Redox-Flow-Zelle nach Anspruch 1, **dadurch gekennzeichnet, dass** im Katholyt und/oder im Anolyt Verbindungen der in Ansprüchen 2, 3 oder 6 definierten Formeln VII, VIIa, VIIb, VIIc, VIId, VIIe, VIII, VIIIa, VIIIb, VIIIc, VIIId, VIIIe, IX, IXa, IXb, IXc, X, Xa, Xb oder Xc eingesetzt werden.

11. Redox-Flow-Zelle nach einem der Ansprüche 1 bis 10, **dadurch gekennzeichnet, dass** Verbindungen eingesetzt werden, die Halogenidionen, Hydroxidionen, Phosphationen, Sulfationen, Perchlorationen, Hexafluorophosphationen oder Tetrafluoroborationen enthalten sowie vorzugsweise Kationen ausgewählt aus der Gruppe der Wasserstoffionen, Alkali- oder Erdalkalimetallkationen, sowie der substituierten oder unsubstituierten Ammoniumkationen.

12. Redox-Flow-Zelle nach einem der Ansprüche 1 bis 11, **dadurch gekennzeichnet, dass** redoxaktive Verbindungen enthaltend ein bis vier Struktureinheiten der Formel III, VII, VIIa, VIIb VIII, VIIIa, VIIIb, IX, IXa, IXb, X, Xa oder Xb, insbesondere solche der Formeln IIIa, IIIb, V, VIa, VIIc, VIId, VIIe, VIIIc, VIIId, VIIIe, IXc oder Xc eingesetzt werden, in denen R₄, R₅, R₆ und R₇ jeweils C₁-C₆-Alkyl und ganz besonders bevorzugt Ethyl oder Methyl bedeuten.

13. Redox-Flow-Zelle nach einem der Ansprüche 2, 3 oder 6, **dadurch gekennzeichnet, dass** redoxaktive Verbindungen der Formeln IV, V, VII, VIIa, VIIb, VIII, VIIIa oder VIIIb, insbesondere solche der Formeln IVa, Va, VIIc oder VIIIc und ganz besonders bevorzugt solche der Formeln Ib, VIId, VIIe, VIIId oder VIIIe eingesetzt werden, in denen R₈ oder R₈ und R₁₀ Wasserstoff, C₁-C₆-Alkyl, mit einer Carbonsäurealkylestergruppe substituiertes C₁-C₆-Alkyl, mit einer Carbonsäureamidgruppe substituiertes C₁-C₆-Alkyl, mit einer Carbonsäuregruppe substituiertes C₁-C₆-Alkyl, mit einer Sulfonsäuregruppe substituiertes C₁-C₆-Alkyl oder mit einer Aminogruppe substituiertes C₁-C₆-Alkyl bedeuten, und ganz besonders bevorzugt Wasserstoff, Propionat, Isobutionat, Ethyl oder Methyl bedeuten.

14. Redox-Flow-Zelle nach Anspruch 4, **dadurch gekennzeichnet, dass** redoxaktive Verbindungen der Formel IIIa eingesetzt werden, in denen R₁₃ Wasserstoff, C₁-C₆-Alkyl, C₁-C₆-Alkoxy, C₁-C₆-Teil- oder Perfluoralkyl, C₁-C₆-Teil- oder Perchloralkyl, C₁-C₆-Fluorchloralkyl, Phenyl, Benzyl, Fluor, Chlor, Hydroxy, Amino, oder Nitro ist.

15. Verwendung der Redox-Flow-Zelle nach einem der Ansprüche 1 bis 14 zur Speicherung von elektrischer Energie für stationäre und mobile Anwendungen, insbesondere als stationäre Speicher für die Notstromversorgung, den Spitzenlastausgleich, für die Zwischenspeicherung elektrischer Energie aus erneuerbaren Energiequellen, insbesondere auf dem Sektor der Photovoltaik und der Windkraft, oder aus Gas-, Kohle-, Biomasse-, Gezeiten- und Meereskraftwerken und für Einsätze auf dem Gebiet der Elektromobilität, als Speicher in Land-, Luft- und Wasserfahrzeugen.

## Claims

1. Redox flow cell for storage of electrical energy comprising a reaction cell having two electrode chambers for catholyte and anolyte, which are each connected to at least one store for liquid and are separated by an ion-conducting membrane, and which are equipped with electrodes, wherein the electrode chambers are each filled with electrolyte solutions comprising redox-active components disolved or dispersed in an electrolyte solvent, as well as optionally conducting salts dissolved therein and optionally further additives, wherein the anolyte contains a redox-active component comprising one to six residues of formula I in the molecule or comprising one to six residues of formula II in the molecule, wherein the catholyte contains a redox-active component comprising one to six residues of formula III in the molecule or comprising iron salts or wherein anolyte and catholyte contain a redox-active component comprising one to six residues of formula I or of formula II in combination with one to six residues of formula III in the molecule 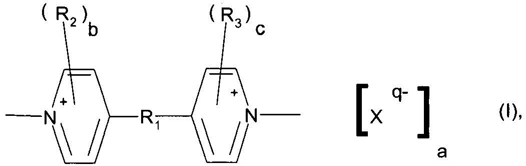 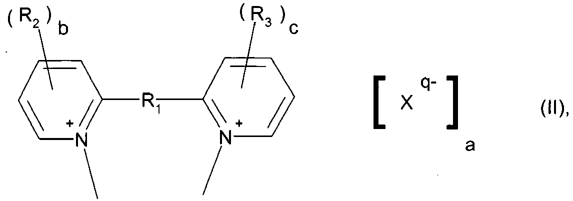 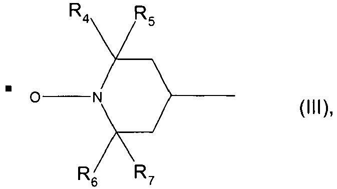 wherein the lines going off the nitrogen atoms in the structures of formulae I and II and the line going off the 4-position in the structure of formula III represent covalent bonds connecting the structures of formulae I, II and III with the remainder of the molecule,
R₁ is a covalent C-C-bond or a divalent bridge group,
R₂ and R₃ independently of one another represent alkyl, alkoxy, haloalkyl, cycloalkyl, aryl, aralkyl, heterocyclyl, halogen, hydroxy, amino, nitro or cyano,
X is a q-valent inorganic or organic anion or a mixture of such anions,
b and c independently of one another are integers from 0 to 4,
q is an integer from 1 to 3,
a is a number of value 2/q, and
R₄, R₅, R₆ and R₇ independently of one another represent alkyl, cycloalkyl, aryl or aralkyl.

2. Redox flow cell according to claim 1, wherein in the anolyte a compound of formulae Ib, IIb, IV, V, VII, VIIa, VIIb VIII, VIIIa, VIIIb, IX, IXa, IXb, X, Xa, Xb, XI, XIa, XIb, XII, XIIa and/or XIIb is used as redox-active component 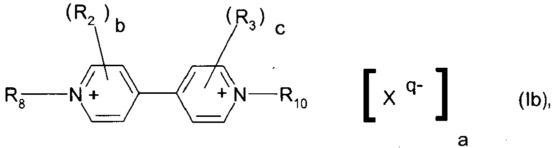 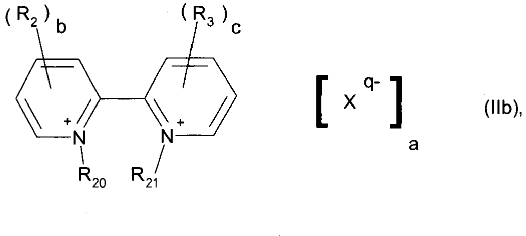 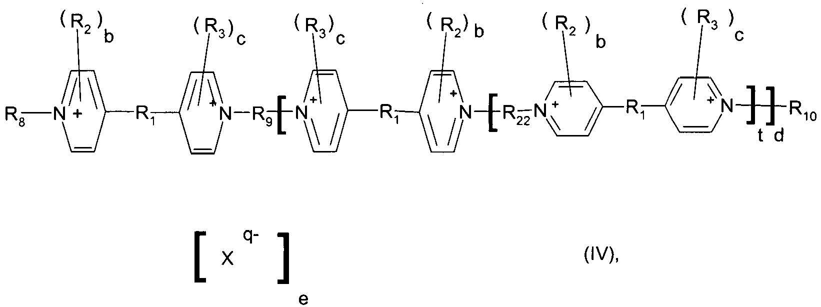 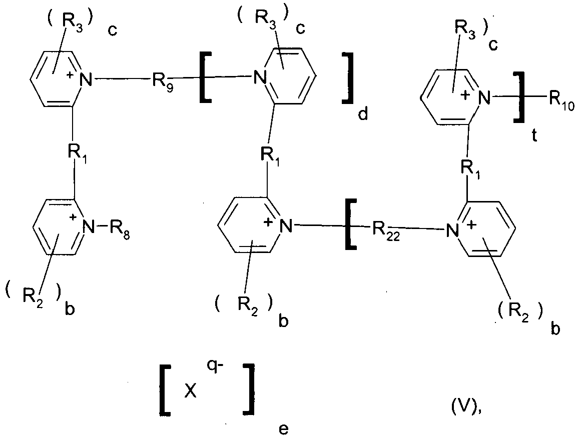 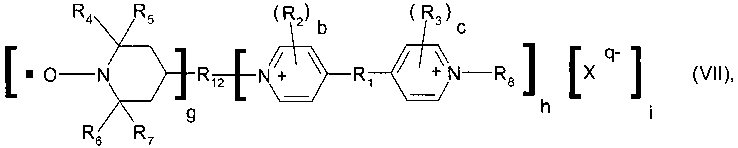 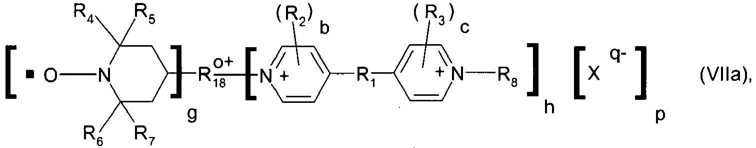 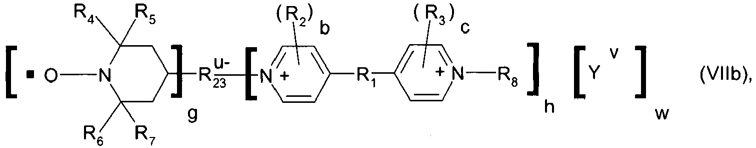 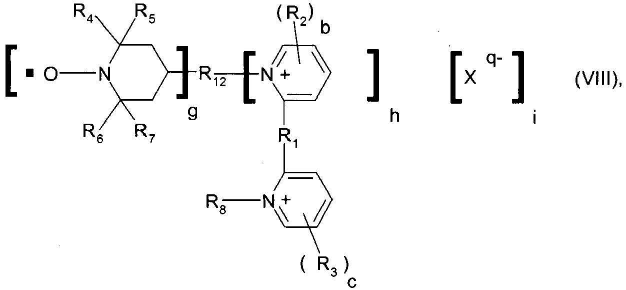 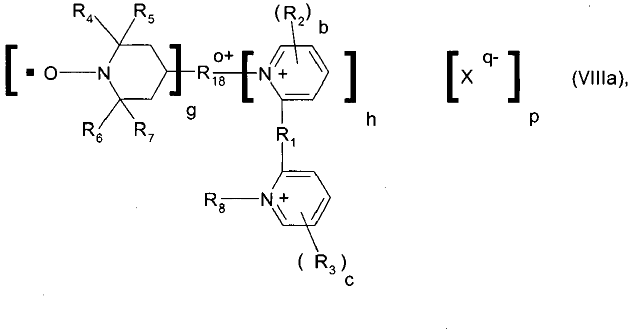 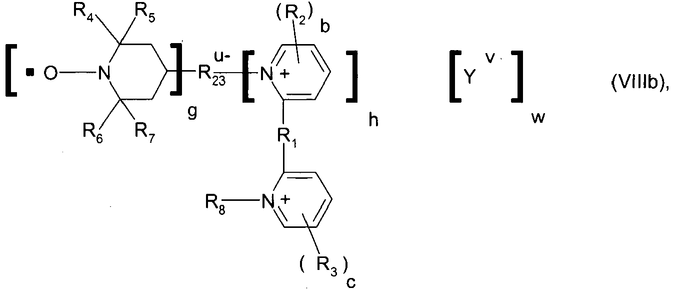 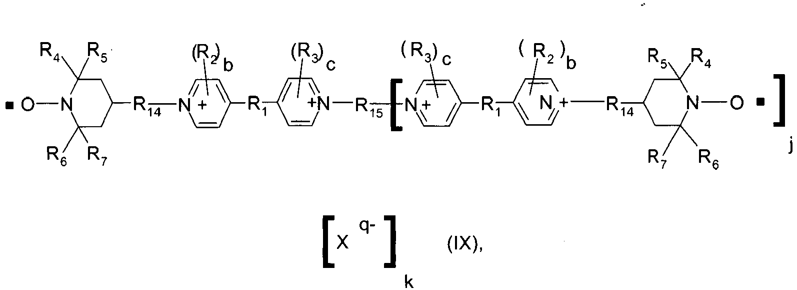 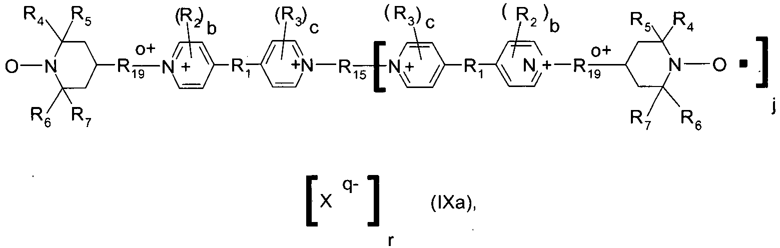 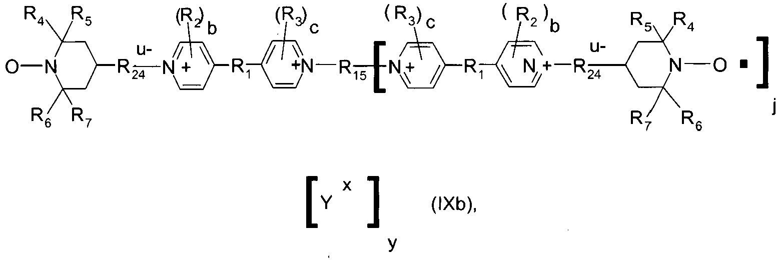 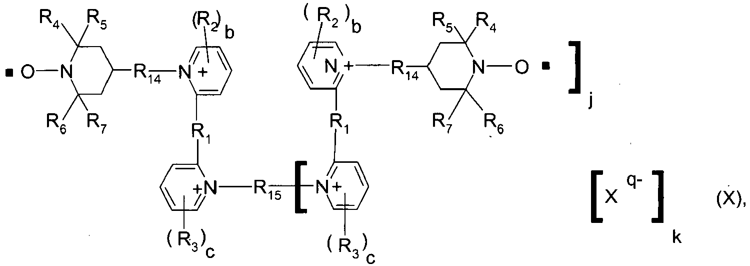 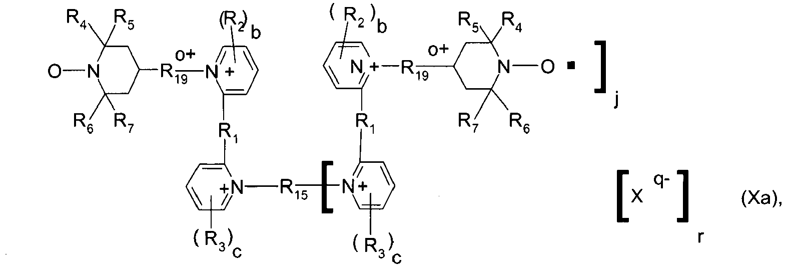 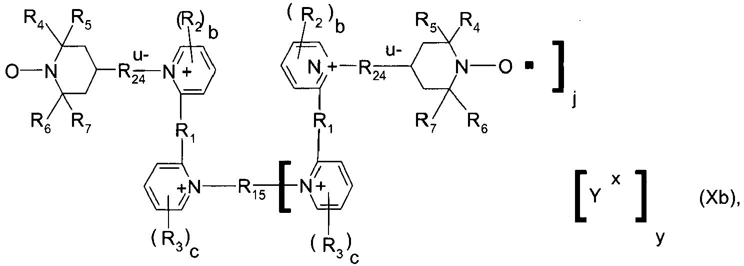 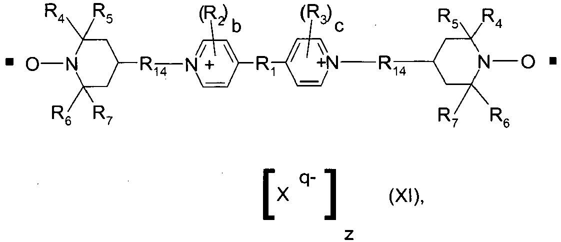 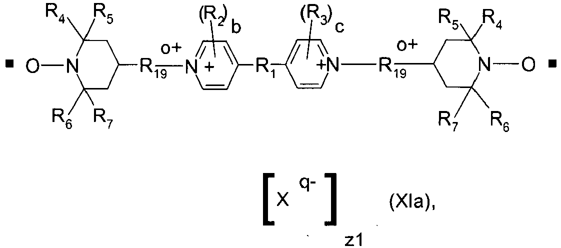 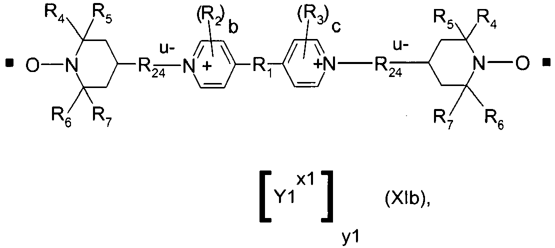 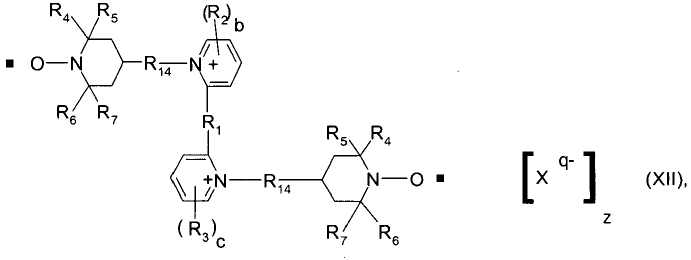 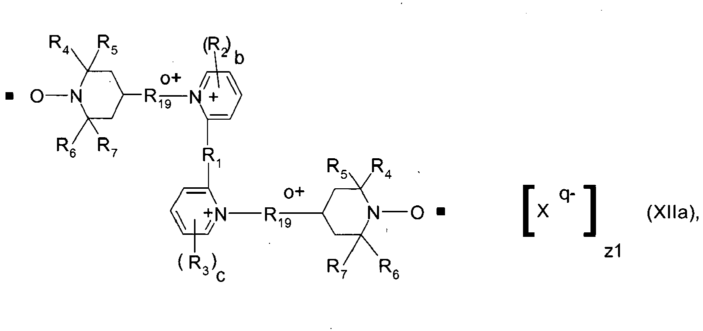 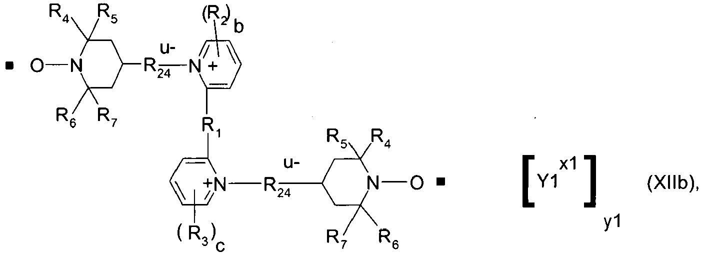 wherein
R₁, R₂, R₃, R₄, R₅, R₆, R₇ and X have the meaning defined in claim 1,
R₈ and R₁₀ independently of one another represent hydrogen, alkyl that is optionally substituted with a carboxylic ester group, carboxylic amide group, carboxylic acid group, sulfonic acid group or amino group, cycloalkyl that is optionally substituted with a carboxylic ester group, carboxylic amide group, carboxylic acid group, sulfonic acid group or amino group, aryl that is optionally substituted with a carboxylic ester group, carboxylic amide group, carboxylic acid group, sulfonic acid group or amino group, aralkyl that is optionally substituted with a carboxylic ester group, carboxylic amide group, carboxylic acid group, sulfonic acid group or amino group, preferably C₁-C₆-alkyl or C₁-C₆-alkyl that is substituted with a carboxylic ester group, or C₁-C₆-alkyl that is substituted with a carboxylic amide group, or C₁-C₆-alkyl that is substituted with a carboxylic acid group, or C₁-C₆-alkyl that is substituted with a sulfonic acid group, or C₁-C₆-alkyl that is substituted with an amino group, and especially preferred hydrogen, propionate, isobutionate, ethyl or methyl,
R₉ is a divalent to hexavalent, preferably a divalent to tetravalent organic bridge group,
R₁₂ is a covalent bond or a divalent to hexavalent, preferably a divalent to tetravalent organic bridge group,
R₁₄ is a covalent bond or a divalent organic bridge group,
R₁₅ is a divalent to hexavalent, preferably a divalent to tetravalent organic bridge group,
R₁₈ is an o-times positively charged divalent to hexavalent, preferably divalent to tetravalent organic residue, which is covalently connected via a carbon atom with the nitrogen atom of the bipyridyl residue, preferably a divalent to tetravalent quaternary ammonium residue, a divalent to tetravalent quaternary phosphonium residue, a divalent to trivalent ternary sulfonium residue or an o-times positively charged divalent to hexavalent, preferably a divalent to tetravalent heterocyclic residue,
R₁₉ is an o-times, preferably single positively charged divalent organic residue, which is via a carbon atom covalently connected with the nitrogen atom of the bipyridyl residue, preferably a quaternary ammonium residue, a quaternary phosphonium residue, a ternary sulfonium residue or an o-times, preferably single positively charged divalent heterocyclic residue,
R₂₀ and R₂₁ independently of one another represent hydrogen, alkyl which is optionally substituted with a carboxylic ester group, a carboxylic amide group, a carboxylic acid group, a sulfonic acid group or an amino group, cycloalkyl which is optionally substituted with a carboxylic ester group, a carboxylic amide group, a carboxylic acid group, a sulfonic acid group or an amino group, aryl which is optionally substituted with a carboxylic ester group, a carboxylic amide group, a carboxylic acid group, a sulfonic acid group or an amino group, or aralkyl which is optionally substituted with a carboxylic ester group, a carboxylic amide group, a carboxylic acid group, a sulfonic acid group or an amino group, or two of the residues R₂₀ and R₂₁ together form a C₁-C₃-alkylene group, preferably C₁-C₆-alkyl, C₁-C₆-alkyl substituted with a carboxylic ester group, C₁-C₆-alkyl substituted with a carboxylic amide group, C₁-C₆-alkyl substituted with a carboxylic acid group, C₁-C₆-alkyl substituted with a sulfonic acid group, or C₁-C₆-alkyl substituted with an amino group or together represent ethylene, and especially preferred hydrogen, propionate, isobutionate, ethyl or methyl or together are ethylene,
R₂₂ is a divalent organic bridge group,
R₂₃ represents an u-times negatively charged divalent to hexavalent, preferably divalent to tetravalent organic residue, which is via a carbon atom covalently connected with the nitrogen atom of the bipyridyl residue, preferably an alkylene residue substituted with one or two carboxyl- or sulfonic acid groups, a phenylene residue substituted with one or two carboxyl- or sulfonic acid groups or a divalent hetercyclic residue substituted with one or two carboxyl- or sulfonic acid groups,
R₂₄ is an u-times, preferably a single negatively charged divalent organic residue, which is via a carbon atom covalently connected with the nitrogen atom of the bipyridyl residue, preferably an alkylene residue substituted with one carboxyl- or sulfonic acid group, a phenylene residue substituted with one carboxyl- or sulfonic acid group, or a divalent heterocyclic residue substituted with one carboxyl- or sulfonic acid group,
a, b, c and q have the meaning defined in claim 1,
d is an integer from 1 to 5, preferably from 1 to 3,
e is a number having the value (2 + 2d + 2t) / q,
g is an integer from 1 to 5, preferably from 1 to 3
h is an integer from 1 to 5, preferably from 1 to 3,
wherein the sum of g and h is an integer from 2 to 6, preferably from 2 to 4,
i is a number with the value 2h / q,
j is an integer from 1 to 5, preferably from 1 to 3,
k is a number with the value (2 + 2j) / q,
o is an integer from 1 to 4,
p is a number with the value (o + 2h) / q,
r is a number with the value (3 + 3j) / q,
t is 0 or, if R₉ is a divalent organic bridge group, represents 0 or 1,
u is an integer from 1 to 4,
z is a number with the value 2 / q,
z1 is a number with the value (o+2) / q
Y in case that 2h - u or 2 (2 - u) - u are greater than 0, is a v- or x-valent inorganic or organic anion or represents a mixture of such anions, or in case that 2h - u or 2 (2 - u) - u are smaller than 0, is a v- or x-valent inorganic or organic cation or represents a mixture of such cations,
v is an integer from -1 to -3 or from +1 to +3,
x is an integer from -1 to -3 or from +1 to +3 ist,
w is 0 or a positive number with value (-u + 2h) / v,
y is 0 or a positive number with value (2 - u) (j + 1) / x,
Y1 in case 2 - 2u is smaller than 0, is a x1-valent inorganic or organic cation or a mixture of such cations,
x1 is an integer from -1 to -3 or from +1 to +3 ist, and
y1 is 0 or a positive number with value (2 - 2u) / x1.

3. Redox flow cell according to claim 2, wherein in the anolyte a compound of formulae IVa, Va, VIIc, VIIIc, IXc and/or Xc is used as redox-active component 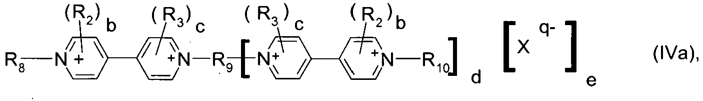 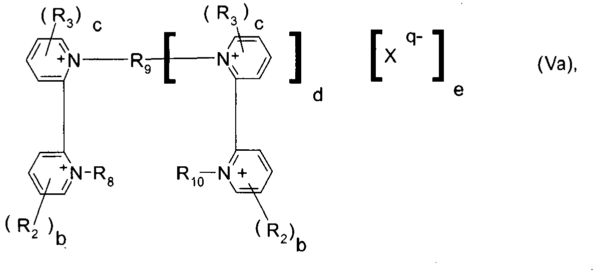 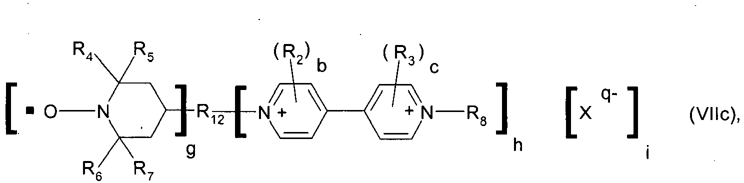 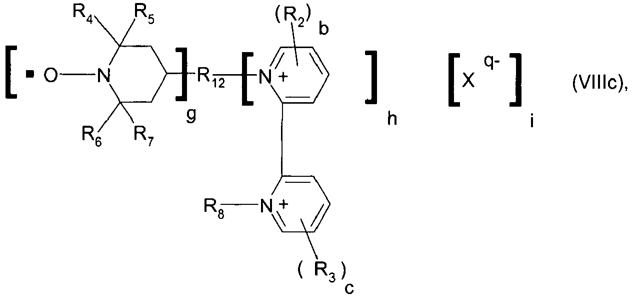 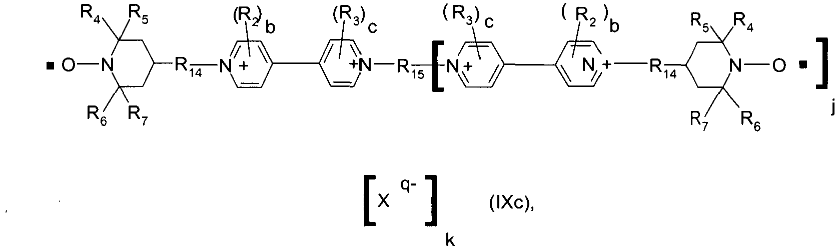 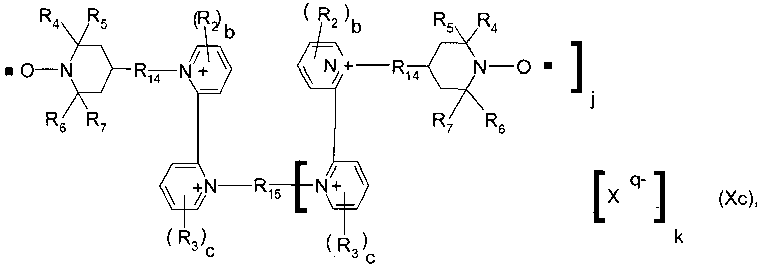 wherein
R₂, R₃, R₄, R₅, R₆, R₇ and X have the meaning defined in claim 1,
R₈, R₉, R₁₀, R₁₂, R₁₄ and R₁₅ have the meaning defined in claim 2,
b, c and q have the meaning defined in caim 1, and
d, e, g, h, i, j and k have the meaning defined in claim 2.

4. Redox flow cell according to claim 1, wherein in the catholyte a compound of formulae IIIa, IIIb, IIIc, VI, VIa and/or VIb or of formulae VII, VIIa, VIIb, VIII, VIIIa, VIIIb, IX, IXa, IXb, X, Xa and/or Xb defined in claim 2 are used as redox-active component 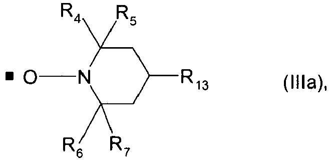 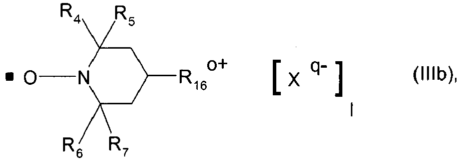 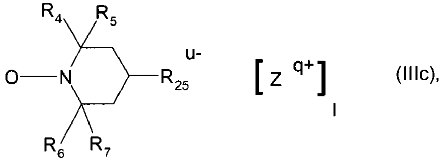 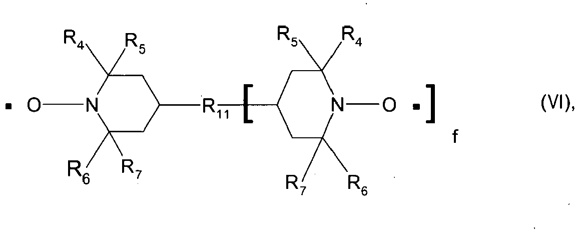 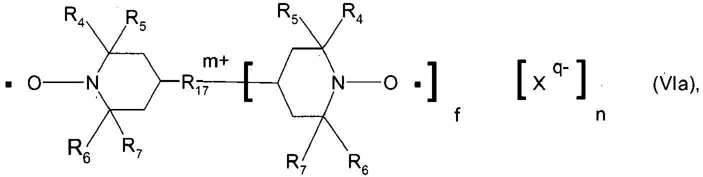 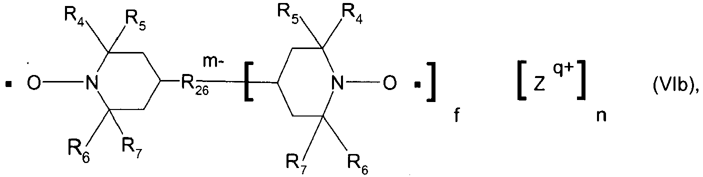 wherein
R₄, R₅, R₆, R₇, X and q have the meaning defined in claim 1,
o and u have the meaning defined in claim 2,
R₁₁ is a divalent to tetravalent organic bridge group,
R₁₃ is hydrogen, alkyl, alkoxy, haloalkyl, cycloalkyl, aryl, aralkyl, heterocyclyl, halogen, hydroxy, amino, nitro or cyano, and
R₁₆ is an o-times, preferably a single positively charged monovalent organic residue, preferably a quaternary ammonium residue, a quaternary phosphonium residue, a ternary sulfonium residue or an o-times, preferably a single positively charged monovalent heterocyclic residue,
R₁₇ is a m-times positively charged divalent to tetravalent organic residue, preferably a divalent to tetreavalent quaternary ammonium residue, a divalent to tetravalent quaternary phosphonium residue, a divalent to tetravalent ternary sulfonium residue or a m-times positively charged divalent to tetravalent heterocyclic residue,
R₂₅ is an u-times, preferably a single negatively charged monovalent residue, preferably a carboxyl residue or a sulfonic acid residue or an u-times, preferably a single negatively charged monovalent heterocyclic residue,
R₂₆ is a m-times negatively charged divalent to tetravalent organic residue, preferably an alkylene residue substituted with one or two carboxyl groups or sulfonic acid groups, or a phenylene residue substituted with one or two carboxyl groups or sulfonic acid groups, or a divalent heterocyclic residue substituted with one or two carboxyl groups or sulfonic acid groups,
Z is a q-valent inorganic or organic cation or a mixture of such cations,
f is an integer from 1 to 3,
l is a number with the value o / q or u / q,
m is an integer from 1 to 4, and
n represents a number with the value m/q.

5. Redox flow cell according to one of the claims 3 or 4, wherein in the catholyte a compound of formulae VI, VIa, VIIc, VIIIc, IXc and/or Xc defined in claim 3 or 4 is used as redox-active compound.

6. Redox flow cell according to claim 1, wherein a compund of formulae Ib, IIb, VIId, VIIe, VIIId and/or VIIIe is used as redox-active compound 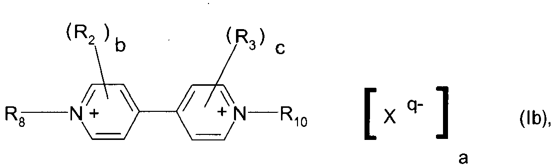 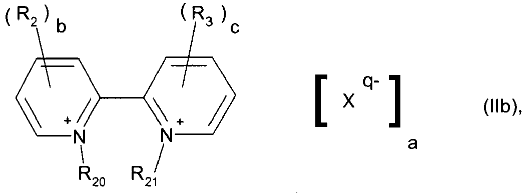 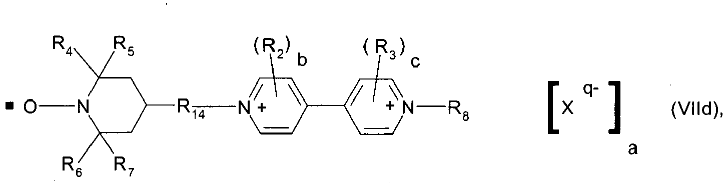 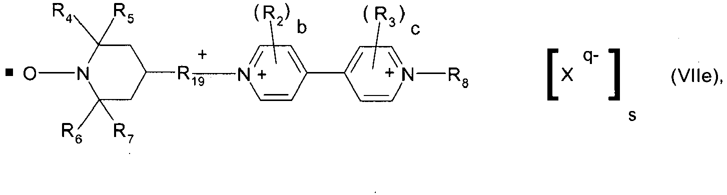 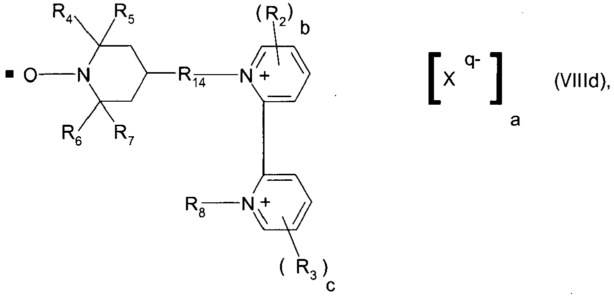 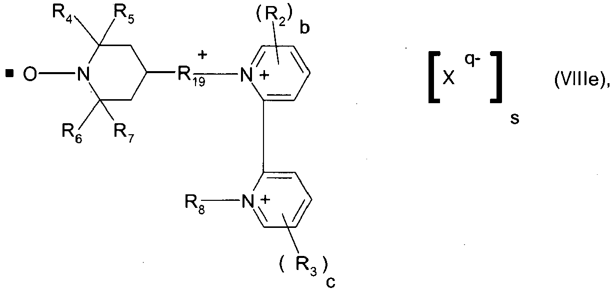 wherein
R₂, R₃, R₄, R₅, R₆, R₇ and X have the meaning defined in claim 1,
R₈, R₁₀, R₁₄ and R₁₉ have the meaning defined in claim 2,
R₂₀ and R₂₁ independently of one another are hydrogen, alkyl which is optionally substituted with a carboxylic ester group, a carboxylic amide group, a carboxylic acid group, a sulfonic acid group or an amino group, cycloalkyl which is optionally substituted with a carboxylic ester group, a carboxylic amide group, a carboxylic acid group, a sulfonic acid group or an amino group, aryl which is optionally substituted with a carboxylic ester group, a carboxylic amide group, a carboxylic acid group, a sulfonic acid group or an amino group, or aralkyl which is optionally substituted with a carboxylic ester group, a carboxylic amide group, a carboxylic acid group, a sulfonic acid group or an amino group, or two of the residues R₂₀ and R₂₁ together form a C₁-C₃-alkylene group, preferably C₁-C₆-alkyl, C₁-C₆-alkyl which is substituted with a carboxylic ester group, C₁-C₆-alkyl which is substituted with a carboxylic amide group, C₁-C₆-alkyl which is substituted with a carboxylic acid group, C₁-C₆-alkyl which is substituted with a sufonic acid group, or C₁-C₆-alkyl which is substituted with an amino group, or together form ethylene, and especially preferred hydrogen, propionate, isobutionate, ethyl or methyl or together represent ethylene,
a, b, c and q have the meaning defined in claim 1,
s is a number with value 3 / q, and
wherein the compounds of formulae Ib, IIb, VIId, VIIe, VIIId and/or VIIIe are used in the anolyte and the compounds of formulae VIIc, VIId, VIIIc and/or VIIId are used in the catholyte.

7. Redox flow cell according to claim 1, wherein the catholyte contains compounds of formulae IIIa, IIIb or IIIc according to claim 4 and the anolyte contains compounds of formulae Ib or IIb according to claim 2.

8. Redox flow cell according to claim 7, wherein the catholyte contains a compound of formula IIIb and the anolyte contains a compound of formula lb.

9. Redox flow cell according to claim 8, wherein the compound of formula IIIb is a salt of 2,2,6,6-tetramethylpiperidine-4-(N,N,N-trialkylammonium) and wherein the compound of formula Ib is a salt of N, N'-dialkylviologen.

10. Redox flow cell according to claim 1, wherein in the catholyte and/or in the anolyte compounds of formulae VII, VIIa, VIIb, VIIc, VIId, VIIe, VIII, VIIIa, VIIIb, VIIIc, VIIId, VIIIe, IX, IXa, IXb, IXc, X, Xa, Xb or Xc defined in claims 2, 3 or 6 are used.

11. Redox flow cell according to one of claims 1 to 10, wherein compounds are used comprising halogenide ions, hydroxide ions, phosphate ions, sulfate ions, perchlorate ions, hexafluorophosphate ions or tetrafluoroborate ions as well as preferably cations selected from the group of hydrogen ions, alkali or earth alkaline metal cations, as well as of the substituted or unsubstituted ammonium cations.

12. Redox flow cell according to one of claims 1 to 11, wherein redox-active compounds comprising one to four structural units of formula III, VII, VIIa, VIIb VIII, VIIIa, VIIIb, IX, IXa, IXb, X, Xa or Xb, preferably those of formulae IIIa, IIIb, V, VIa, VIIc, VIId, VIIe, VIIIc, VIIId, VIIIe, IXc or Xc are used, in which R₄, R₅, R₆ and R₇ each are C₁-C₆-alkyl and especially preferred represent ethyl or methyl.

13. Redox flow cell according to one of claims 2, 3 or 6, wherein redox-active compounds of formulae IV, V, VII, VIIa, VIIb, VIII, VIIIa or VIIIb, preferably those of formulae IVa, Va, VIIc or VIIIc and most preferably those of formulae Ib, VIId, VIIe, VIIId or VIIIe are used, in which R₈ or R₈ and R₁₀ are hydrogen, C₁-C₆-alkyl, C₁-C₆-alkyl which is substituted with a carboxylic alkylester group, C₁-C₆-alkyl which is substituted with a carboxylic amide group, C₁-C₆-alkyl which is substituted with a carboxylic acid group, C₁-C₆-alkyl which is substituted with a sulfonic acid group or C₁-C₆-alkyl which is substituted with an amino group, and very preferably preferred represent hydrogen, propionate, isobutionate, ethyl or methyl.

14. Redox flow cell according to claim 4, wherein redox-active compounds of formula IIIa are used, in which R₁₃ is hydrogen, C₁-C₆-alkyl, C₁-C₆-alkoxy, C₁-C₆-partial- or perfluoroalkyl, C₁-C₆-partial- or perchloroalkyl, C₁-C₆-fluorochloroalkyl, phenyl, benzyl, fluorine, chlorine, hydroxy, amino or nitro.

15. Use of the redox flow cell according to one of the claims 1 to 14 for storage of electrical energy for stationary and mobile applications, preferably as stationary repository for emergency power supply, for peak load adjustment, and for the intermediate storage of electrical energy from replenishable energy sources, especially in the sector of photovoltaics and wind power or from gas-, coal-, biomass-, tidal- or marine-power plants, and for applications in the field of electromobility, as repository in land, air and water vehicles.

## Revendications

1. Cellule d'oxydo-réduction pour le stockage d'énergie électrique, contenant une cellule de réaction comprenant deux chambres d'électrodes pour le catholyte et l'anolyte, qui sont chacune raccordées à au moins un réservoir de liquide, qui sont séparées par une membrane conductrice d'ions et qui sont équipées d'électrodes, les chambres d'électrodes étant chacune remplies de solutions électrolytiques qui contiennent des composants à activité d'oxydoréduction dissous ou dispersés dans un milieu de solution électrolytique, ainsi qu'éventuellement des sels conducteurs dissous et éventuellement d'autres additifs, **caractérisée en ce que** l'anolyte contient un composant à activité d'oxydoréduction qui contient un à six radicaux de formule I par molécule ou qui contient un à six radicaux de formule II par molécule, et **en ce que** le catholyte contient un composant à activité d'oxydoréduction qui contient un à six radicaux de formule III par molécule ou qui contient des sels de fer, ou **en ce que** l'anolyte et le catholyte contiennent un composant à activité d'oxydoréduction qui contient un à six radicaux de formule I ou de formule II en combinaison avec un à six radicaux de formule III par molécule, 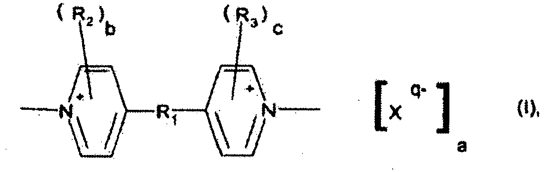 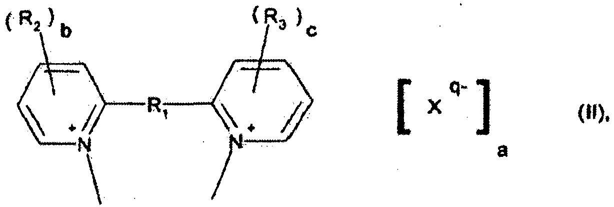 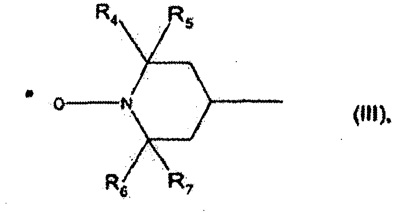 dans lesquelles les lignes partant des atomes d'azote dans les structures des formules I et II et la ligne partant de la position 4 dans la structure de formule III sont des liaisons covalentes qui relient les structures des formules I, II et III avec le reste de la molécule,
R₁ représente une liaison covalente C-C ou un groupe de pontage bivalent,
R₂ et R₃ représentent indépendamment l'un de l'autre alkyle, alcoxy, haloalkyle, cycloalkyle, aryle, aralkyle, hétérocyclyle, halogène, hydroxy, amino, nitro ou cyano,
X représente un anion inorganique ou organique q-valent ou un mélange de tels anions,
b et c représentent indépendamment l'un de l'autre des nombres entiers de 0 à 4,
q représente un nombre entier de 1 à 3,
a représente un nombre ayant la valeur 2/q, et
R₄, R₅, R₆ et R₇ représentent indépendamment les uns des autres alkyle, cycloalkyle, aryle ou aralkyle.

2. Cellule d'oxydoréduction selon la revendication 1, **caractérisée en ce qu'**un composé de formule Ib, IIb, IV, V, VII, VIIa, VIIb, VIII, VIIIa, VIIIb, IX, IXa, IXb, X, Xa, Xb, XI, XIa, XIb, XII, XIIa et/ou XIIb est utilisé en tant que composant à activité d'oxydoréduction dans l'anolyte 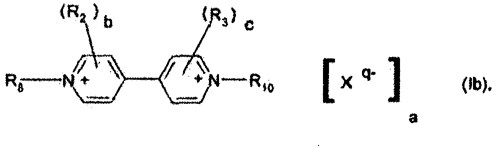 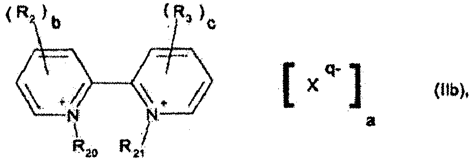 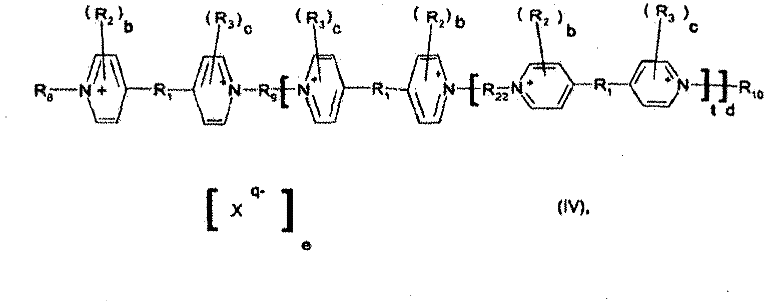 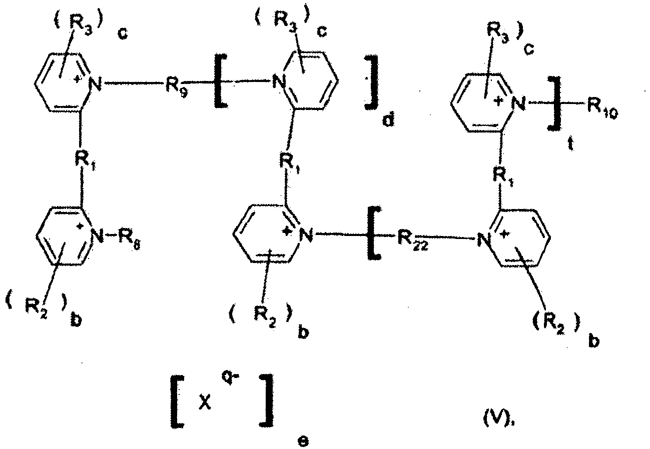 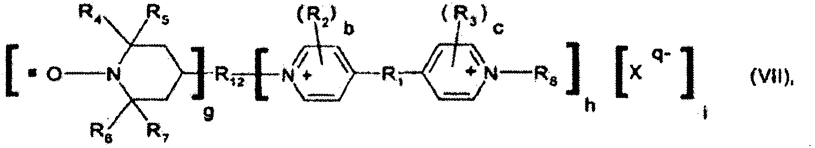 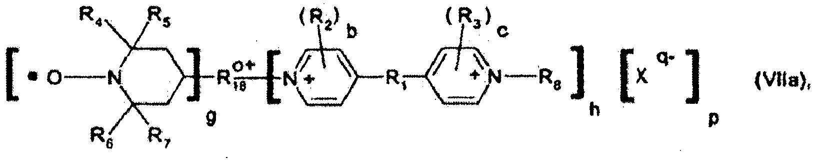 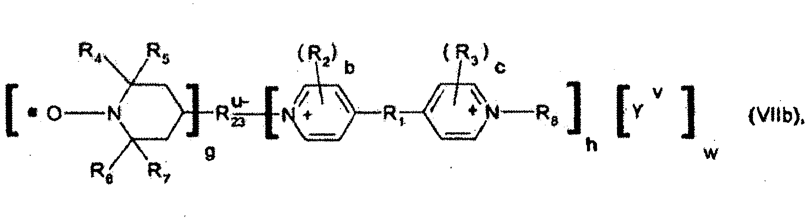 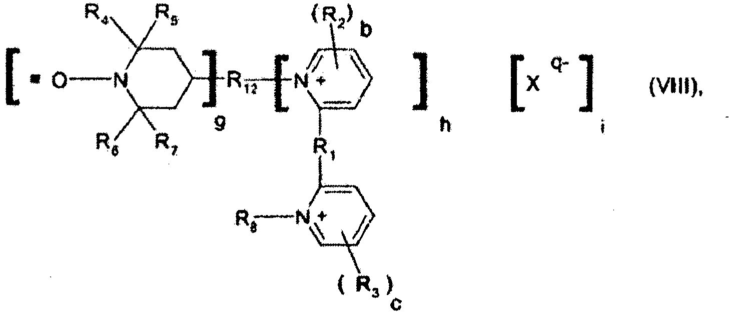 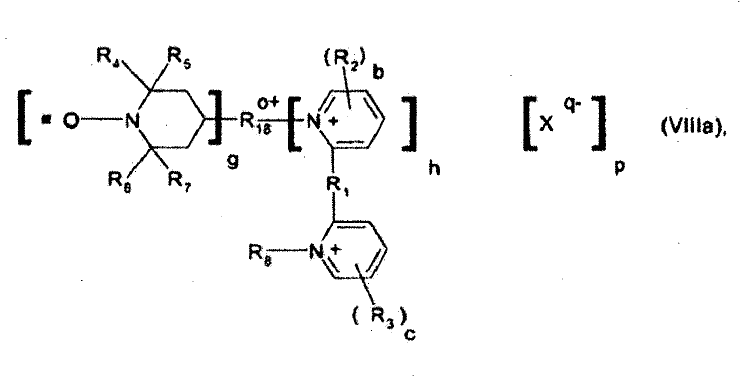 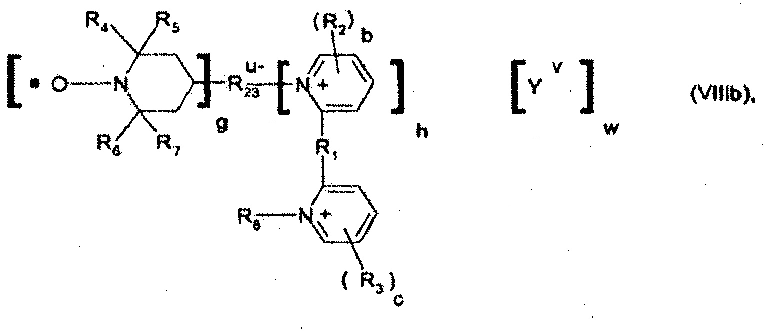 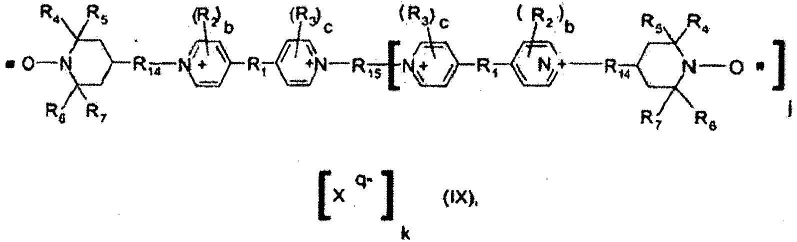 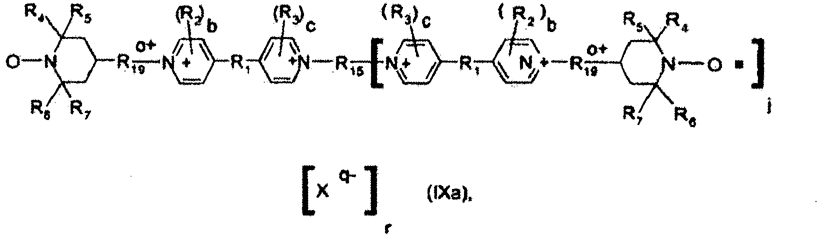 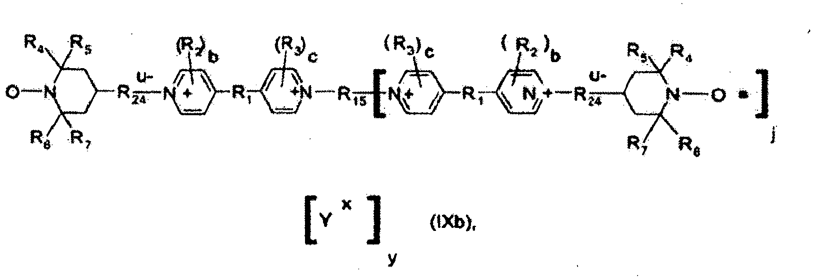 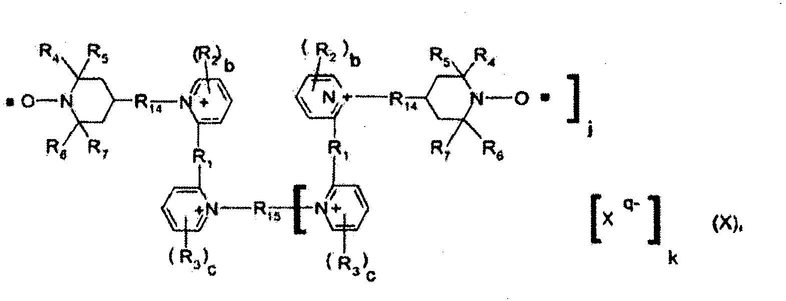 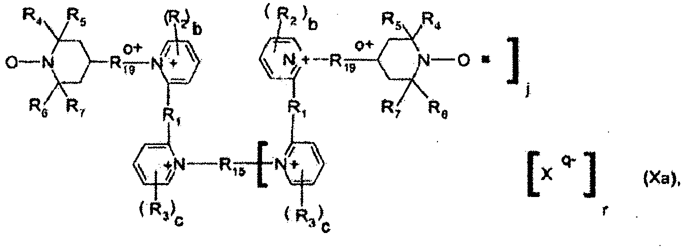 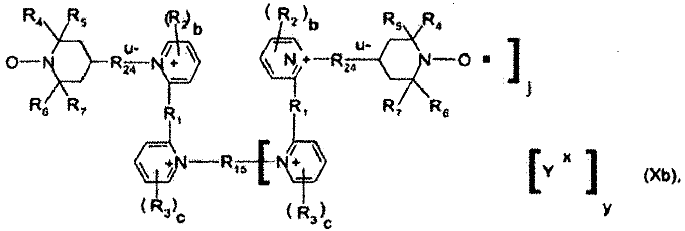 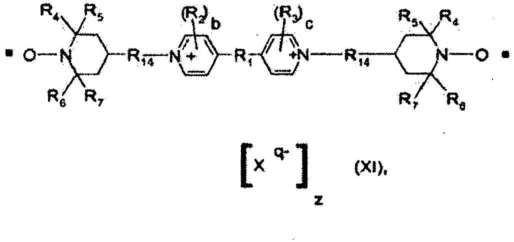 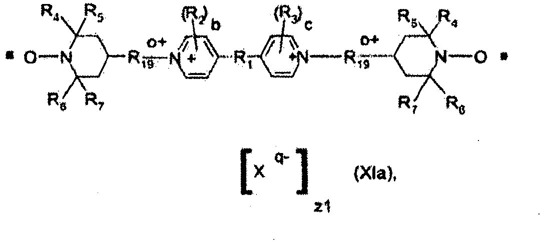 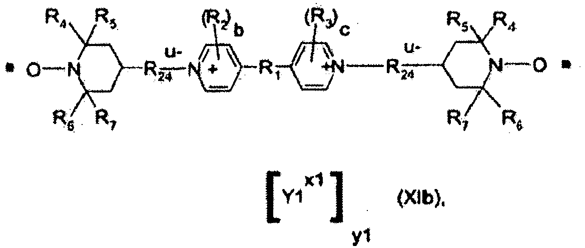 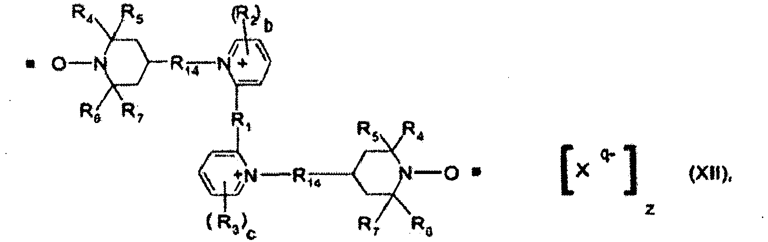 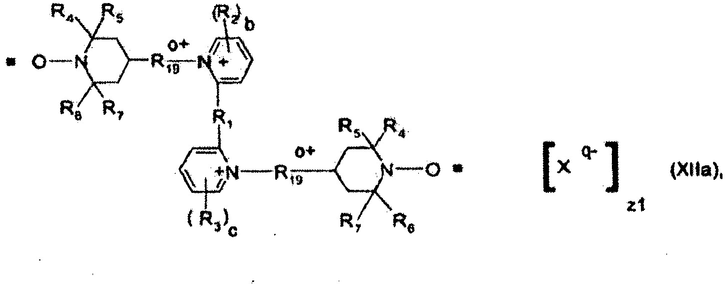 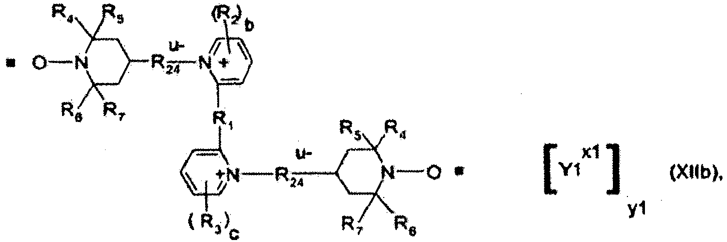 dans lesquelles
R₁, R₂, R₃, R₄, R₅, R₆, R₇ et X ont la signification définie dans la revendication 1,
R₈ et R₁₀ signifient indépendamment l'un de l'autre hydrogène, alkyle éventuellement substitué avec un groupe ester d'acide carboxylique, amide d'acide carboxylique, acide carboxylique, acide sulfonique ou amino, cycloalkyle éventuellement substitué avec un groupe ester d'acide carboxylique, amide d'acide carboxylique, acide carboxylique, acide sulfonique ou amino, aryle éventuellement substitué avec un groupe ester d'acide carboxylique, amide d'acide carboxylique, acide carboxylique, acide sulfonique ou amino, ou aralkyle éventuellement substitué avec un groupe ester d'acide carboxylique, amide d'acide carboxylique, acide carboxylique, acide sulfonique ou amino, notamment alkyle en C₁-C₆, alkyle en C₁-C₆ substitué avec un groupe ester d'acide carboxylique, alkyle en C₁-C₆ substitué avec un groupe amide d'acide carboxylique, alkyle en C₁-C₆ substitué avec un groupe acide carboxylique, alkyle en C₁-C₆ substitué avec un groupe acide sulfonique, ou alkyle en C₁-C₆ substitué avec un groupe amino, et de manière tout particulièrement préférée hydrogène, propionate, isobutionate, éthyle ou méthyle,
R₉ représente un groupe de pontage organique bi- à hexavalent, notamment bi- à tétravalent,
R₁₂ représente une liaison covalente ou un groupe de pontage organique bi- à hexavalent, notamment bi- à tétravalent,
R₁₄ représente une liaison covalente ou un groupe de pontage organique bivalent,
R₁₅ représente un groupe de pontage organique bi- à hexavalent, notamment bi- à tétravalent,
R₁₈ représente un radical organique chargé positivement o fois, bi- à hexavalent, notamment bi- à tétravalent, qui est relié par une liaison covalente avec l'atome d'azote du radical bipyridyle par le biais d'un atome de carbone, notamment un radical ammonium quaternaire bi- à tétravalent, un radical phosphonium quaternaire bi- à tétravalent, un radical sulfonium ternaire bi- à trivalent, ou un radical hétérocyclique chargé positivement o fois, bi- à hexavalent, notamment bi- à tétravalent,
R₁₉ représente un radical organique bivalent chargé positivement o fois, de préférence une fois, qui est relié par une liaison covalente avec l'atome d'azote du radical bipyridyle par le biais d'un atome de carbone, notamment un radical ammonium quaternaire, un radical phosphonium quaternaire, un radical sulfonium ternaire ou un radical hétérocyclique bivalent chargé positivement o fois, de préférence une fois,
R₂₀ et R₂₁ signifient indépendamment l'un de l'autre hydrogène, alkyle éventuellement substitué avec un groupe ester d'acide carboxylique, amide d'acide carboxylique, acide carboxylique, acide sulfonique ou amino, cycloalkyle éventuellement substitué avec un groupe ester d'acide carboxylique, amide d'acide carboxylique, acide carboxylique, acide sulfonique ou amino, aryle éventuellement substitué avec un groupe ester d'acide carboxylique, amide d'acide carboxylique, acide carboxylique, acide sulfonique ou amino, ou aralkyle éventuellement substitué avec un groupe ester d'acide carboxylique, amide d'acide carboxylique, acide carboxylique, acide sulfonique ou amino, ou deux radicaux R₂₀ et R₂₁ forment ensemble un groupe alkylène en C₁-C₃, notamment représentent alkyle en C₁-C₆, alkyle en C₁-C₆ substitué avec un groupe ester d'acide carboxylique, alkyle en C₁-C₆ substitué avec un groupe amide d'acide carboxylique, alkyle en C₁-C₆ substitué avec un groupe acide carboxylique, alkyle en C₁-C₆ substitué avec un groupe acide sulfonique, ou alkyle en C₁-C₆ substitué avec un groupe amino, ou signifient ensemble éthylène, et de manière tout particulièrement préférée signifient hydrogène, propionate, isobutionate, éthyle ou méthyle, ou ensemble éthylène, R₂₂ représente un groupe de pontage organique bivalent, R₂₃ représente un radical organique chargé négativement u fois, bi- à hexavalent, notamment bi- à tétravalent, qui est relié par une liaison covalente avec l'atome d'azote du radical bipyridyle par le biais d'un atome de carbone, notamment un radical alkylène substitué avec un ou deux groupes carboxyle ou acide sulfonique, un radical phénylène substitué avec un ou deux groupes carboxyle ou acide sulfonique, ou un radical hétérocyclique bivalent substitué avec un ou deux groupes carboxyle ou acide sulfonique,
R₂₄ représente un radical organique bivalent chargé négativement u fois, de préférence une fois, qui est relié par une liaison covalente avec l'atome d'azote du radical bipyridyle par le biais d'un atome de carbone, notamment un radical alkylène substitué avec un groupe carboxyle ou acide sulfonique, un radical phénylène substitué avec un groupe carboxyle ou acide sulfonique, ou un radical hétérocyclique bivalent substitué avec un groupe carboxyle ou acide sulfonique,
a, b, c et q ont la signification définie dans la revendication 1,
d représente un nombre entier de 1 à 5, de préférence de 1 à 3,
e représente un nombre ayant la valeur (2 + 2d + 2t)/q, g représente un nombre entier de 1 à 5, de préférence de 1 à 3,
h représente un nombre entier de 1 à 5, de préférence de 1 à 3,
la somme de g et h étant un nombre entier de 2 à 6, de préférence de 2 à 4,
i représente un nombre ayant la valeur 2h/q,
j représente un nombre entier de 1 à 5, de préférence de 1 à 3,
k représente un nombre ayant la valeur (2 + 2j)/q,
o représente un nombre entier de 1 à 4,
p représente un nombre ayant la valeur (o + 2h)/q,
r représente un nombre ayant la valeur (3 + 3j)/q,
t signifie 0 ou, lorsque R₉ représente un groupe de pontage organique bivalent, 0 ou 1
u représente un nombre entier de 1 à 4,
z représente un nombre ayant la valeur 2/q,
z1 représente un nombre ayant la valeur (o+2)/q,
Y signifie, lorsque 2h-u ou 2(2-u)-u est supérieur à 0, un anion inorganique ou organique v- ou x-valent, ou un mélange de tels anions, ou, lorsque 2h-u ou 2(2-u)-u est inférieur à 0, un cation inorganique ou organique v- ou x-valent ou un mélange de tels cations,
v représente un nombre entier de -1 à -3 ou de +1 à +3,
x représente un nombre entier de -1 à -3 ou de +1 à +3,
w représente 0 ou un nombre positif ayant la valeur (-u+2h)/v,
y représente 0 ou un nombre positif ayant la valeur (2-u) (j+1)/x,
Y1 signifie, lorsque 2-2u est inférieur à 0, un cation inorganique ou organique x1-valent ou un mélange de tels cations,
x1 représente un nombre entier de -1 à -3 ou de +1 à +3, et
y1 représente 0 ou un nombre positif ayant la valeur (2-2u)/x1.

3. Cellule d'oxydoréduction selon la revendication 2, **caractérisée en ce qu'**un composé de formule IVa, Va, VIIc, VIIIc, IXc et/ou Xc est utilisé en tant que composant à activité d'oxydoréduction dans l'anolyte 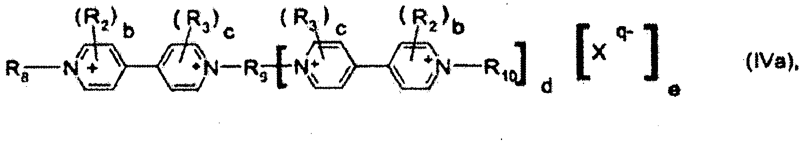 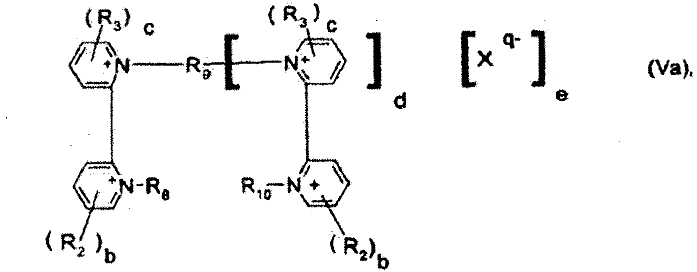 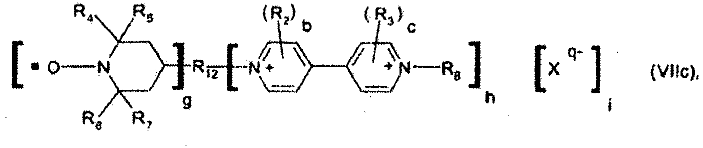 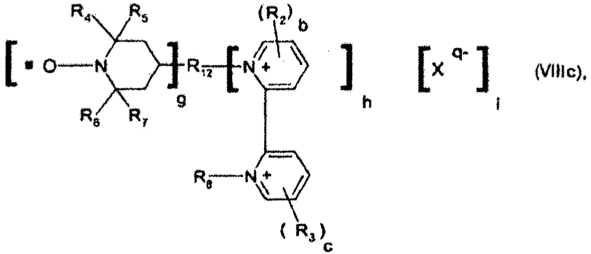 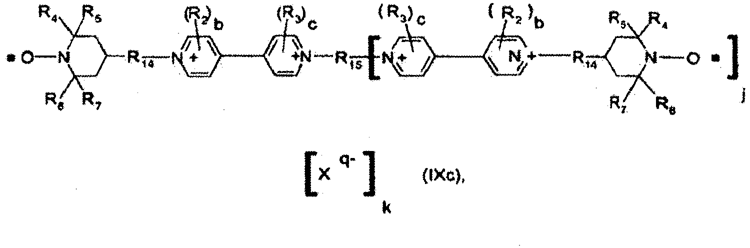 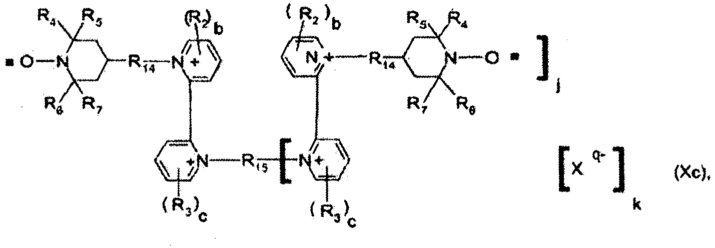 dans lesquelles
R₂, R₃, R₄, R₅, R₆, R₇ et X ont la signification définie dans la revendication 1,
R₈, R₉, R₁₀, R₁₂, R₁₄ et R₁₅ ont la signification définie dans la revendication 2,
b, c et q ont la signification définie dans la revendication 1,
et
d, e, g, h, i, j et k ont la signification définie dans la revendication 2.

4. Cellule d'oxydoréduction selon la revendication 1, **caractérisée en ce qu'**un composé de formule IIIa, IIIb, IIIc, VI, VIa et/ou VIb ou des formules VII, VIIa, VIIb, VIII, VIIIa, VIIIb, IX, IXa, IXb, X, Xa et/ou Xb définies dans la revendication 2 est utilisé en tant que composant à activité d'oxydoréduction dans le catholyte 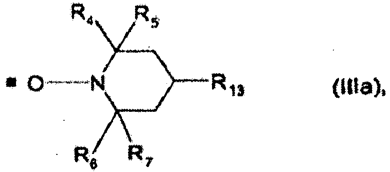 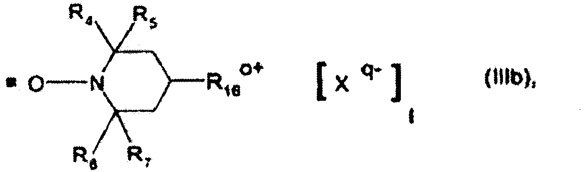 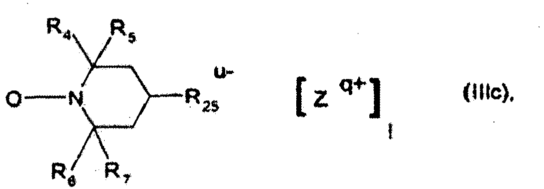 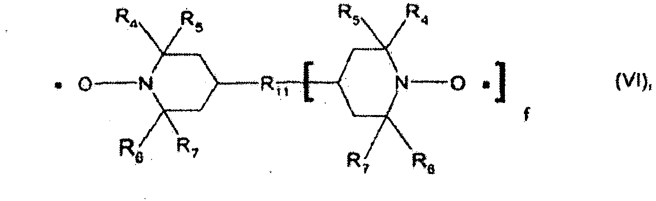 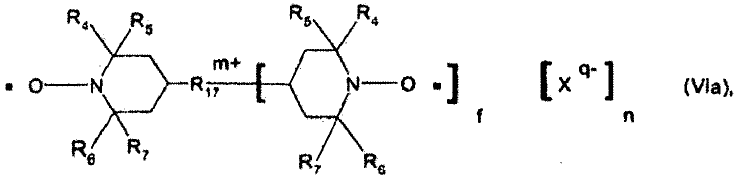 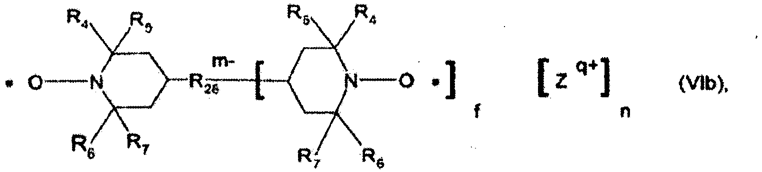 dans lesquelles
R₄, R₅, R₆, R₇, X et q ont la signification définie dans la revendication 1,
o et u ont la signification définie dans la revendication 2,
R₁₁ représente un groupe de pontage organique bi- à tétravalent,
R₁₃ représente hydrogène, alkyle, alcoxy, haloalkyle, cycloalkyle, aryle, aralkyle, hétérocyclyle, halogène, hydroxy, amino, nitro ou cyano, et
R₁₆ représente un radical organique monovalent chargé positivement o fois, de préférence une fois, notamment un radical ammonium quaternaire, un radical phosphonium quaternaire, un radical sulfonium ternaire ou un radical hétérocyclique monovalent chargé positivement o fois, de préférence une fois,
R₁₇ représente un radical organique chargé positivement m fois, bi- à tétravalent, notamment un radical ammonium quaternaire bi- à tétravalent, un radical phosphonium quaternaire bi- à tétravalent, un radical sulfonium ternaire bi- à tétravalent ou un radical hétérocyclique bi- à tétravalent, chargé positivement m fois,
R₂₅ représente un radical monovalent chargé négativement u fois, de préférence une fois, notamment un radical carboxyle ou acide sulfonique, ou un radical hétérocyclique monovalent chargé négativement u fois, de préférence une fois,
R₂₆ représente un radical organique chargé négativement m fois, bi- à tétravalent, notamment un radical alkylène substitué avec un ou deux groupes carboxyle ou acide sulfonique, ou un radical phénylène substitué avec un ou deux groupes carboxyle ou acide sulfonique, ou un radical hétérocyclique bivalent substitué avec un ou deux groupes carboxyle ou acide sulfonique,
Z signifie un cation inorganique ou organique q-valent ou un mélange de tels cations,
f représente un nombre entier de 1 à 3,
l représente un nombre ayant la valeur o/q ou u/q,
m représente un nombre entier de 1 à 4, et
n représente un nombre ayant la valeur m/q.

5. Cellule d'oxydoréduction selon l'une quelconque des revendications 3 ou 4, **caractérisée en ce qu'**un composé des formules VI, VIa, VIIc, VIIIc, IXc et/ou Xc définies dans la revendication 3 ou 4 est utilisé en tant que composé à activité d'oxydoréduction dans le catholyte.

6. Cellule d'oxydoréduction selon la revendication 1, **caractérisée en ce qu'**un composé de formule Ib, IIb, VIId, VIIe, VIIId et/ou VIIIe est utilisé en tant que composé à activité d'oxydoréduction 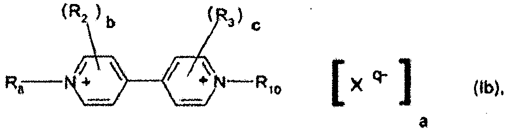 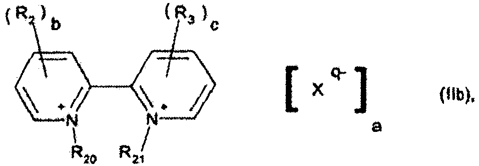 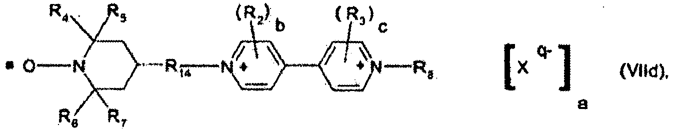 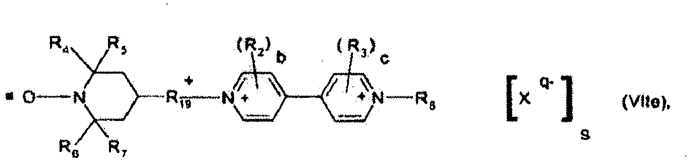 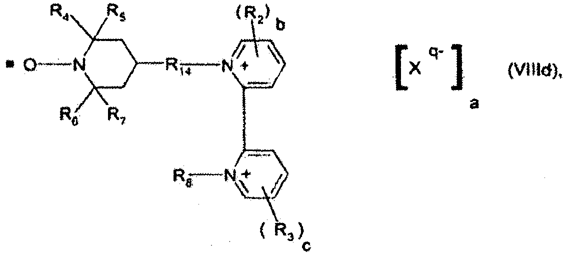 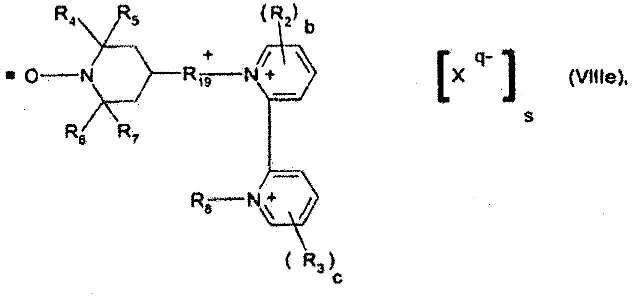 dans lesquelles
R₂, R₃, R₄, R₅, R₆, R₇ et X ont la signification définie dans la revendication 1,
R₈, R₁₀, R₁₄ et R₁₉ ont la signification définie dans la revendication 2,
R₂₀ et R₂₁ signifient indépendamment l'un de l'autre hydrogène, alkyle éventuellement substitué avec un groupe ester d'acide carboxylique, amide d'acide carboxylique, acide carboxylique, acide sulfonique ou amino, cycloalkyle éventuellement substitué avec un groupe ester d'acide carboxylique, amide d'acide carboxylique, acide carboxylique, acide sulfonique ou amino, aryle éventuellement substitué avec un groupe ester d'acide carboxylique, amide d'acide carboxylique, acide carboxylique, acide sulfonique ou amino, ou aralkyle éventuellement substitué avec un groupe ester d'acide carboxylique, amide d'acide carboxylique, acide carboxylique, acide sulfonique ou amino, ou deux radicaux R₂₀ et R₂₁ forment ensemble un groupe alkylène en C₁-C₃, notamment représentent alkyle en C₁-C₆, alkyle en C₁-C₆ substitué avec un groupe ester d'acide carboxylique, alkyle en C₁-C₆ substitué avec un groupe amide d'acide carboxylique, alkyle en C₁-C₆ substitué avec un groupe acide carboxylique, alkyle en C₁-C₆ substitué avec un groupe acide sulfonique, ou alkyle en C₁-C₆ substitué avec un groupe amino, ou signifient ensemble éthylène, et de manière tout particulièrement préférée signifient hydrogène, propionate, isobutionate, éthyle ou méthyle, ou ensemble éthylène,
a, b, c, et q ont la signification définie dans la revendication 1,
s représente un nombre ayant la valeur 3/q,
les composés de formule Ib, IIb, VIId, VIIe, VIIId et/ou VIIIe étant utilisés dans l'anolyte et les composés de formule VIIc, VIId, VIIIe et/ou VIIId étant utilisés dans le catholyte.

7. Cellule d'oxydoréduction selon la revendication 1, **caractérisée en ce que** le catholyte contient des composés de formule IIIa, IIIb ou IIIc selon la revendication 4 et l'anolyte contient des composés de formule Ib ou IIb selon la revendication 2.

8. Cellule d'oxydoréduction selon la revendication 7, **caractérisée en ce que** le catholyte contient un composé de formule IIIb et l'anolyte contient un composé de formule Ib.

9. Cellule d'oxydoréduction selon la revendication 8, **caractérisée en ce que** le composé de formule IIIb est un sel de 2,2,6,6-tétraméthylpipéridine-4-(N,N,N-trialkylammonium) et le composé de formule Ib est un sel de N,N'-dialkylviologène.

10. Cellule d'oxydoréduction selon la revendication 1, **caractérisée en ce que** des composés des formules VII, VIIa, VIIb, VIIc, VIId, VIIe, VIII, VIIIa, VIIIb, VIIIc, VIIId, VIIIe, IX, IXa, IXb, IXc, X, Xa, Xb ou Xc définies dans les revendications 2, 3 ou 6 sont utilisés dans le catholyte et/ou dans l'anolyte.

11. Cellule d'oxydoréduction selon l'une quelconque des revendications 1 à 10, **caractérisée en ce que** des composés qui contiennent des ions halogénure, des ions hydroxyde, des ions phosphate, des ions sulfate, des ions perchlorate, des ions hexafluorophosphate ou des ions tétrafluoroborate, ainsi que de préférence des cations choisis dans le groupe constitué par les ions hydrogène, les cations de métaux alcalins ou alcalino-terreux, ainsi que les cations ammonium substitués ou non substitués, sont utilisés.

12. Cellule d'oxydoréduction selon l'une quelconque des revendications 1 à 11, **caractérisée en ce que** des composés à activité d'oxydoréduction contenant une à quatre unités structurales de formule III, VII, VIIa, VIIb, VIII, VIIIa, VIIIb, IX, IXa, IXb, X, Xa ou Xb, notamment de formule IIIa, IIIb, V, VIa, VIIc, VIId, VIIe, VIIIc, VIIId, VIIIe, IXc ou Xc sont utilisés, dans lesquelles R₄, R₅, R₆ et R₇ signifient chacun alkyle en C₁-C₆ et de manière tout particulièrement préférée éthyle ou méthyle.

13. Cellule d'oxydoréduction selon l'une quelconque des revendications 2, 3 ou 6, **caractérisée en ce que** des composés à activité d'oxydoréduction de formule IV, V, VII, VIIa, VIIb, VIII, VIIIa ou VIIIb, notamment de formule IVa, Va, VIIc ou VIIIc, et de manière tout particulièrement préférée de formule Ib, VIId, VIIe, VIIId ou VIIIe sont utilisés, dans lesquelles R₈ ou R₈ et R₁₀ signifient hydrogène, alkyle en C₁-C₆, alkyle en C₁-C₆ substitué avec un groupe ester alkylique d'acide carboxylique, alkyle en C₁-C₆ substitué avec un groupe amide d'acide carboxylique, alkyle en C₁-C₆ substitué avec un groupe acide carboxylique, alkyle en C₁-C₆ substitué avec un groupe acide sulfonique, ou alkyle en C₁-C₆ substitué avec un groupe amino, et de manière tout particulièrement préférée hydrogène, propionate, isobutionate, éthyle ou méthyle.

14. Cellule d'oxydoréduction selon la revendication 4, **caractérisée en ce que** des composés à activité d'oxydoréduction de formule IIIa sont utilisés, dans laquelle R₁₃ représente hydrogène, alkyle en C₁-C₆, alcoxy en C₁-C₆, fluoroalkyle partiel ou perfluoroalkyle en C₁-C₆, chloroalkyle partiel ou perchloroalkyle en C₁-C₆, fluorochloroalkyle en C₁-C₆, phényle, benzyle, fluor, chlore, hydroxy, amino ou nitro.

15. Utilisation de la cellule d'oxydoréduction selon l'une quelconque des revendications 1 à 14 pour le stockage d'énergie électrique pour des applications stationnaires et mobiles, notamment en tant que réservoir stationnaire pour l'alimentation électrique de secours, le nivellement de pointes de charge, pour le stockage intermédiaire d'énergie électrique issue de sources d'énergie renouvelables, notamment dans le secteur de la photovoltaïque et de l'énergie éolienne, ou issue de centrales électriques au gaz, au charbon, à biomasse, marémotrices et marines, et pour des applications dans le domaine de l'électromobilité, en tant que réservoir dans des véhicules terrestres, aériens et nautiques.
